(19) Europäisches Patentamt
European Patent Office
Office européen des brevets

(11) **EP 2 851 402 B1**

(12) **EUROPEAN PATENT SPECIFICATION**

(45) Date of publication and mention of the grant of the patent: **06.05.2020 Bulletin 2020/19**

(21) Application number: **13746861.7**

(22) Date of filing: **06.02.2013**

(51) Int Cl.:
*C09D 11/00* (2014.01)
*B41J 2/01* (2006.01)
*B41M 5/00* (2006.01)
*C08F 2/40* (2006.01)
*C08F 2/48* (2006.01)
*C08F 20/20* (2006.01)
*C08F 36/02* (2006.01)
*C08F 283/12* (2006.01)
*C09D 11/101* (2014.01)
*C08F 2/38* (2006.01)
*C09D 11/40* (2014.01)

(86) International application number: **PCT/JP2013/052712**

(87) International publication number: **WO 2013/118766 (15.08.2013 Gazette 2013/33)**

(54) **INK COMPOSITION FOR INKJET RECORDING, INKJET RECORDING METHOD, AND PRINTED MATTER**

STRAHLUNGSHÄRTBARE TINTENZUSAMMENSETZUNG FÜR TINTENSTRAHLAUFZEICHNUNG, TINTENSTRAHLAUFZEICHNUNGSVERFAHREN UND DRUCKMATERIAL

COMPOSITION D'ENCRE POUR ENREGISTREMENT PAR JET D'ENCRE, PROCÉDÉ D'ENREGISTREMENT PAR JET D'ENCRE, ET MATIÈRE IMPRIMÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.02.2012 JP 2012026653**

(43) Date of publication of application: **25.03.2015 Bulletin 2015/13**

(73) Proprietor: **FUJIFILM Corporation**
**Minato-ku**
**Tokyo 106-8620 (JP)**

(72) Inventors:
- **FUJII, Yuusuke**
  **Ashigarakami-gun**
  **Kanagawa 258-8577 (JP)**
- **MOCHIZUKI, Kyohei**
  **Ashigarakami-gun**
  **Kanagawa 258-8577 (JP)**

(74) Representative: **Klunker IP Patentanwälte PartG mbB**
**Destouchesstraße 68**
**80796 München (DE)**

(56) References cited:
**EP-A1- 1 903 080**
**EP-A2- 2 670 800**
**WO-A1-01/40404**
**WO-A1-2012/133694**
**JP-A- 2000 319 308**
**JP-A- 2001 139 851**
**JP-A- 2008 511 714**
**JP-A- 2010 254 750**
**JP-A- 2012 012 539**
**JP-A- 2012 167 246**
**US-A- 5 322 960**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Technical Field

The present invention relates to an inkjet ink composition, an inkjet recording method, and a printed material.

### Background Art

As image recording methods for forming an image on a recording medium such as paper based on an image data signal, there are an electrophotographic system, sublimation type and melt type thermal transfer systems, an inkjet system, etc.

With regard to the inkjet system, the printing equipment is inexpensive, it is not necessary to use a plate when printing, and since an image is formed directly on a recording medium by discharging an ink composition only on a required image area, the ink composition can be used efficiently and the running cost is low, particularly in the case of small lot production. Furthermore, there is little noise and it is excellent as an image recording system, and has been attracting attention in recent years.

Among them, an inkjet recording ink composition (radiation-curing inkjet recording ink composition), which is curable upon exposure to radiation such as UV rays, is an excellent system from the viewpoint of it being possible to print on various types of recording media because, compared with a solvent-based ink composition, the drying properties are excellent and an image is resistant to spreading since the majority of the components in the ink composition cure upon exposure to radiation such as UV rays.

Various radiation curing ink compositions have already been proposed; Patent Document 1 describes an inkjet ink comprising a polymerizable compound and a photo-acid generator, wherein the ink comprises a vinyl ether and a (meth)acryloyl group-containing compound as the polymerizable compound and comprises a hydroxy group-containing compound in a range of 30 to 1,100 mmol/L.

Furthermore, Patent Document 2 discloses, for the purpose of providing a clear layer-forming ink composition that is stable for a long period of time and does not cause cloudiness or yellowing of a clear layer and a printed material employing same, a clear layer-forming ink composition comprising a polymerizable compound, a polymerization inhibitor, a photopolymerization initiator, and a surface tension adjusting agent, wherein the polymerization inhibitor comprises at least one type of compound selected from the group consisting of a hindered amine compound, a nitrosamine compound, and a quinone compound, and the photopolymerization initiator comprises at least one type of compound selected from the group consisting of an acylphosphine oxide compound, an α-aminoalkylphenone compound, and a thioxanthone compound.

### Prior Art Documents

### Patent Documents

Patent Document 1: JP-A-2011-126932 (JP-A denotes a Japanese unexamined patent application publication)
Patent Document 2: JP-A-2011-57744

### Summary of Invention

It is an object of the present invention to provide an ink composition for inkjet recording that is excellent in terms of surface gloss and storage stability, an inkjet recording method employing the ink composition for inkjet recording, and a printed material recorded by the inkjet recording method.

The object has been attained by means described in <1>, <12>, <13>, or <14> below. They are described together with <2> to <11>, which are preferred embodiments.

<1> An ink composition for inkjet recording comprising

(Component A) a polymerizable compound,

(Component B-1) an oxyl free radical-based polymerization inhibitor,

(Component B-2) a phenol-based polymerization inhibitor, and

(Component B-3) an amine-based polymerization inhibitor,

wherein Component B-3 is represented by Formula (B-3-1) below,

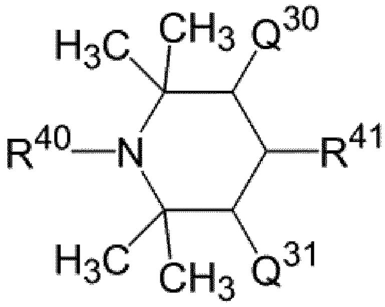

(B-3-1)

wherein in Formula (B-3-1), $R^{40}$ denotes a hydrogen atom, an alkyl group having 1 to 6 carbons, or a cycloalkyl group having 3 to 8 carbons, $R^{41}$ denotes a hydrogen atom, an alkyl group having 1 to 10 carbons, a cycloalkyl group having 3 to 8 carbons, an aralkyl group having 7 to 12 carbons, a 3- to 8-membered heterocyclic group, a hydroxy group, an -O-CO-$R^{42}$ group, an -N($R^{43}$)($R^{44}$) group, or =N($R^{43}$), $R^{42}$ denotes an alkyl group having 1 to 10 carbons, a cycloalkyl group having 3 to 8 carbons, an aralkyl group having 6 to 18 carbons, or an aryl group having 6 to 12 carbons, $R^{43}$ and $R^{44}$ independently denote a hydrogen atom, an alkyl group having 1 to 10 carbons, a cycloalkyl group having 3 to 8 carbons, a 3- to 8-membered heterocyclic group, an acyl group having 2 to 8 carbons, an acyloxy group, or an amide group, $Q^{30}$ and $Q^{31}$ independently denote a hydrogen atom or an oxo group, or there may be bonding, through $R^{41}$, to at least another compound represented by Formula (B-3-1) directly or via a linking group,

<2> the ink composition for inkjet recording according to <1>, wherein the polymerizable compound (Component A) comprises (Component A-1) a divinyl ether compound,

<3> the ink composition for inkjet recording according to <1> or <2>, wherein it further comprises (Component C) a polymerization initiator, the polymerization initiator (Component C) comprising (Component C-1) an acylphosphine-based polymerization initiator,

<4> the ink composition for inkjet recording according to any one of <1> to <3>, wherein when the total amount of polymerization inhibitor contained in the ink composition for inkjet recording is defined as 100 mass %, the contents (mass %) (B1), (B2), and (B3) of Component B-1, Component B-2, and Component B-3 relative to the total amount of polymerization inhibitor satisfy Expression (1) to Expression (3) below,

$$2 \leq (B1) \leq 95 \qquad \text{Expression (1)}$$

$$3 \leq (B2) \leq 97 \qquad \text{Expression (2)}$$

$$0.1 \leq (B3) \leq 75 \qquad \text{Expression (3)}$$

<5> the ink composition for inkjet recording according to any one of <1> to <4>, wherein when the total amount of polymerization inhibitor contained in the ink composition for inkjet recording is defined as 100 mass %, the contents (mass %) (B1), (B2), and (B3) of Component B-1, Component B-2, and Component B-3 relative to the total amount of polymerization inhibitor satisfy Expression (1') to Expression (3') below,

$$4 \leq (B1) \leq 90 \qquad \text{Expression (1')}$$

$$7 \leq (B2) \leq 93 \qquad \text{Expression (2')}$$

$$0.4 \leq (B3) \leq 60 \qquad \text{Expression (3')}$$

<6> the ink composition for inkjet recording according to any one of <1> to <5>, wherein it has a surface tension of no greater than 30 mN/m,

<7> the ink composition for inkjet recording according to any one of <1> to <6>, wherein Component B-1 is represented by Formula (B-1-2) below,

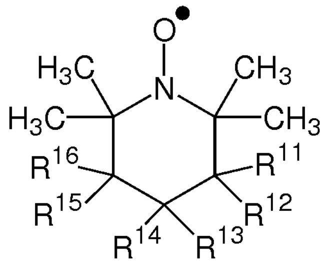

(B-1-2)

wherein in Formula (B-1-2), $R^{11}$ to $R^{16}$ independently denote a hydrogen atom, a halogen atom, or a monovalent organic group, or $R^{11}$ and $R^{12}$, $R^{13}$ and $R^{14}$, or $R^{15}$ and $R^{16}$ may form, together with the carbon to which they are bonded, one carbonyl group,

<8> the ink composition for inkjet recording according to any one of <1> to <7>, wherein Component B-2 is represented by Formula (B-2-1) below,

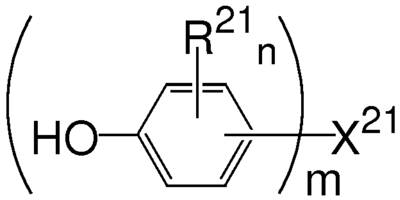

( B-2-1 )

wherein in Formula (B-2-1), m denotes an integer of 1 to 5, n denotes an integer of 1 to 4, the n $R^{21}$s independently denote a hydrogen atom, a halogen atom, a cyano group, a hydroxy group, an alkyl group having 1 to 20 carbons, a cycloalkyl group having 3 to 8 carbons, an aryl group having 6 to 12 carbons, an alkenyl group having 1 to 5 carbons, an alkynyl group having 1 to 5 carbons, an alkoxy group having 1 to 20 carbons, or an aryloxy group having 6 to 12 carbons, these groups may be bonded to a benzene ring represented by Formula (B-2-1) via a linking group, two or more groups denoted by $R^{21}$ may be bonded to each other to form a ring structure, and when m is two or greater $X^{21}$ denotes an m-valent linking group,

<9> the ink composition for inkjet recording according to any one of <1> to <8>, wherein Component B-3 is represented by Formula (B-3-2) below,

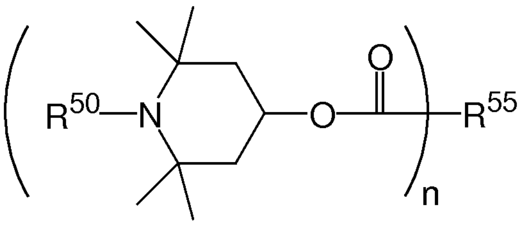

(B-3-2)

wherein in Formula (B-3-2) $R^{50}$ denotes a hydrogen atom, an alkyl group having 1 to 6 carbons, or a cycloalkyl group having 3 to 8 carbons, $R^{55}$ denotes a group formed by removing (n-1) hydrogen atoms from an alkyl group, wherein the total number of carbons of $R^{55}$ is 1 to 10, and n denotes an integer of 2 to 5,

<10> the ink composition for inkjet recording according to any one of <1> to <9>, wherein the content of Component B-1 relative to the entire amount of the ink is no greater than 0.3 mass %,

<11> the ink composition for inkjet recording according to any one of <1> to <10>, wherein the sum total of the contents of Component B-1, Component B-2, and Component B-3 is at least 1 mass % but no greater than 3 mass % relative to the entire amount of the ink,

<12> use of the ink composition for inkjet recording according to any one of Claims 1 to 11 for forming a clear layer that is applied to an upper layer of a colored image layer, and the colored image layer is a cured film of a colored

ink composition comprising a monomer having a solubility parameter of at least 19 in an amount of at least 50 mass % of the entire composition, wherein the solubility parameter is a value expressed as the square root of the molecular aggregation energy and which is described in the Polymer Handbook, Second Edition, Chapter IV, Solubility Parameter Values, wherein the unit is $(MPa)^{1/2}$, representing the value at 25°C, and wherein when no data is given, a value calculated by the method described in R. F. Fedors, Polymer Engineering Science, 14, p 147 to 154, 1974, is used as the solubility parameter value,

<13> an inkjet recording method comprising (a) a step of discharging the ink composition according to any one of <1> to <11> above a recording medium and (b) a step of irradiating the discharged ink composition with actinic radiation to thus cure the ink composition, and

<14> a printed material that is recorded by the inkjet recording method according to <13>.

In accordance with the present invention, there can be provided an ink composition for inkjet recording that is excellent in terms of surface gloss and storage stability, an inkjet recording method employing the ink composition for inkjet recording, and a printed material recorded by the inkjet recording method.

## Description of Embodiments

The ink composition for inkjet recording (hereinafter, also simply called an 'ink composition') of the present invention comprises (Component A) a polymerizable compound, (Component B-1) an oxyl free radical-based polymerization inhibitor, (Component B-2) a phenol-based polymerization inhibitor, and (Component B-3) an amine-based polymerization inhibitor.

In the specification, the notation 'X to Y' expressing a numerical range has the same meaning as 'at least X but no greater than Y' when X < Y and has the same meaning as 'no greater than X but at least Y' when X > Y. Furthermore, the 'polymerizable compound (Component A)', etc. is also simply called 'Component A', etc. Moreover, when both or either of 'acrylate' and 'methacrylate' are referred to, the notation '(meth)acrylate' may also be used.

In the present invention, when a specific moiety is called a 'group', unless otherwise specified it may be substituted with at least one type (up to the possible largest number) of substituent or may not be substituted. For example, an 'alkyl group' means a substituted or unsubstituted alkyl group.

Furthermore, in the present invention, when a specific moiety is called a 'ring' or a 'group' contains a 'ring', unless otherwise specified it may be monocyclic or polycyclic and may be substituted or unsubstituted. For example, an 'aryl group' may be a phenyl group, a naphthyl group, or a substituted phenyl group.

Moreover, in part of a chemical formula, a hydrocarbon chain may be represented by a simplified structural formula in which symbols for carbon (C) and hydrogen (H) are omitted.

Furthermore, 'mass %' and 'wt%' have the same meaning, and 'parts by mass' and 'parts by weight' have the same meaning.

In the present invention, a combination of preferred embodiments explained below is a more preferred embodiment.

The present invention is explained in detail below.

### (Ink composition)

First, the ink composition of the present invention comprising Component A and Component B-1 to Component B-3 is explained in detail. The ink composition of the present invention is an ink composition that can cure upon exposure to an actinic radiation and is also an oil-based ink composition. The 'actinic radiation' is a radiation that can provide energy that enables an initiating species to be generated in the ink composition when irradiated, and broadly includes $\alpha$ rays, $\gamma$ rays, X rays, ultraviolet rays, visible light, and an electron beam. Among these, ultraviolet rays and an electron beam are preferable from the viewpoint of curing sensitivity and the availability of equipment, and ultraviolet rays are particularly preferable.

Furthermore, since the ink composition of the present invention is a radiation-curable ink composition and is cured after being applied onto a recording medium, it is preferable that it does not contain volatile solvent and is solvent-free. This is because, if volatile solvent remains in a cured ink image, the solvent resistance is degraded, and the VOC (Volatile Organic Compound) problem based on volatile solvent occurs. In the present invention, the content of a solvent, including water, in the ink composition is preferably no greater than 5 mass %, more preferably no greater than 3 mass %, yet more preferably no greater than 1 mass %, and most preferably the ink composition does not comprise a solvent.

The components of the ink composition of the present invention are now explained.

(Component A) Polymerizable compound

The ink composition of the present invention comprises (Component A) a polymerizable compound.

The polymerizable compound that can be used in the present invention is preferably an addition-polymerizable compound, and more preferably a radically polymerizable compound or a cationically polymerizable compound.

Furthermore, with regard to the polymerizable compound that can be used in the present invention, one type may be used on its own or two or more types may be used in combination, and for example a radically polymerizable compound and a cationically polymerizable compound may be used in combination. Among them, it is preferable to use a radically polymerizable compound.

<Radically polymerizable compound>

The radically polymerizable compound that can be used in the present invention is not particularly limited as long as the spirit and scope of the present invention are maintained, and a known radically polymerizable compound may be used.

Examples of the radically polymerizable compound include photocurable materials comprising photopolymerizable compositions described in JP-A-7-159983, JP-B-7-31399, JP-A-8-224982, JP-A-10-863, JP-A-9-80675, etc.

The radically polymerizable compound is a compound having a radically polymerizable ethylenically unsaturated bond, and may be any compound as long as it has at least one radically polymerizable ethylenically unsaturated bond in the molecule (ethylenically unsaturated compound); examples thereof include those having a chemical configuration such as a monomer, an oligomer, or a polymer. One type of radically polymerizable compound may be used, or two or more types thereof may be used in combination at any ratio in order to improve an intended property.

Preferred examples of the radically polymerizable compound that can be used in the present invention include a radically polymerizable monomer comprising an ethylenically unsaturated double bond group selected from the group consisting of a vinyl group, an acrylate group, a methacrylate group, an acrylamide group, a methacrylamide group, and an *N*-vinyl group.

In the present invention, preferred examples of Component A include (Component A-1) a divinyl ether compound and (Component A-2) a (meth)acrylate monomer. They are explained in detail below.

(Component A-1) Divinyl ether compound

The ink composition for inkjet recording of the present invention preferably comprises a divinyl ether compound (Component A-1) as the polymerizable compound (Component A).

Due to it comprising a divinyl ether compound, an image having surface gloss can be obtained.

The divinyl ether compound is not particularly limited as long as it is a compound comprising two vinyl ether groups ($CH_2$=CH-O-) in the molecule, but is preferably a divinyl ether compound with a (poly)oxyalkylene skeleton, a divinyl ether compound with an alkylene skeleton, or a divinyl ether compound with a cycloalkane skeleton.

Examples of the divinyl ether compound with a (poly)oxyalkylene skeleton include ethylene glycol divinyl ether, polyethylene glycol divinyl ether, propylene glycol divinyl ether, polypropylene glycol divinyl ether, butylene glycol divinyl ether, and polybutylene glycol divinyl ether.

Examples of the divinyl ether compound with an alkylene skeleton include 1,6-hexanediol divinyl ether, 1,9-nonanediol divinyl ether, 1,10-decanediol divinyl ether, neopentyl glycol divinyl ether, and neopentyl glycol hydroxypivalate divinyl ether.

The divinyl ether with a cycloalkane skeleton is not particularly limited, and examples thereof include 1,4-cyclohexanediol divinyl ether, 1,4-cyclohexanedimethanol divinyl ether, tricyclodecanediol divinyl ether, tricyclodecanedimethanol divinyl ether, pentacyclopentadecanedimethanol divinyl ether, and pentacyclopentadecanediol divinyl ether.

Among them, a divinyl ether with an alkylene skeleton and a divinyl ether compound with a (poly)oxyalkylene skeleton are preferable, a divinyl ether compound with a (poly)oxyalkylene skeleton is more preferable, and a divinyl ether compound with a polyoxyalkylene skeleton is yet more preferable.

An oxyalkylene group is preferably an oxyalkylene group having 2 to 6 carbons, more preferably an oxyalkylene group having 2 to 4 carbons, and preferably an oxyethylene group or an oxypropylene group.

With regard to the divinyl ether compound with a polyoxyalkylene skeleton, the number of oxyalkylene group repeats is preferably 1 to 10, more preferably 2 to 8, and yet more preferably 2 to 6. The molecular weight is preferably 100 to 1,000, more preferably 150 to 800, and yet more preferably 180 to 600.

With regard to Component A-1, one type may be used on its own or two or more types may be used in combination.

The content of Component A-1 is preferably 3 to 50 mass % of the entire ink composition, more preferably 5 to 40 mass %, and yet more preferably 10 to 30 mass %.

With the entire Component A as 100 mass %, the content of Component A-1 relative to the polymerizable compound (Component A) is preferably 5 to 50 mass %, more preferably 10 to 40 mass %, and yet more preferably 15 to 35 mass %.

(Component A-2) (Meth)acrylate monomer

From the viewpoint of curability, the ink composition of the present invention preferably comprises (Component A-2) a (meth)acrylate monomer.

The molecular weight of the (meth)acrylate monomer is preferably a low molecular weight of no greater than 1,000, and is more preferably a molecular weight of 200 to 750.

The (meth)acrylate monomer means a methacrylate monomer and/or an acrylate monomer, and it is more preferably an acrylate monomer.

Component A-2 may be either (Component A-2-1) a polyfunctional (meth)acrylate monomer or (Component A-2-2) a monofunctional (meth)acrylate monomer and is not particularly limited, but it preferably comprises at least a polyfunctional (meth)acrylate monomer (Component A-2-1).

(Component A-2-1) Polyfunctional (meth)acrylate monomer

The ink composition of the present invention preferably comprises (Component A-2-1) a polyfunctional (meth)acrylate monomer as the polymerizable compound (Component A).

The polyfunctional (meth)acrylate monomer that can be used in the present invention is a polyfunctional monomer comprising two or more groups selected from the group consisting of an acryloxy group and a methacryloxy group. Due to it comprising the polyfunctional (meth)acrylate monomer, an ink composition having excellent curability and high cured film strength can be obtained.

In the present invention, the ink composition particularly preferably comprises a polyfunctional acrylate monomer as Component A-2-1.

Specific examples of Component A-2-1 include bis(4-acryloxypolyethoxyphenyl)propane, neopentyl glycol di(meth)acrylate, ethoxylated (2) neopentyl glycol di(meth)acrylate (compound formed by diacrylating neopentyl glycol ethylene oxide 2 mol adduct), propoxylated (2) neopentyl glycol di(meth)acrylate (compound formed by di(meth)acrylating neopentyl glycol propylene oxide 2 mol adduct), 1,6-hexanediol di(meth)acrylate, 1,9-nonanediol di(meth)acrylate, ethylene glycol di(meth)acrylate, diethylene glycol di(meth)acrylate, triethylene glycol di(meth)acrylate, tetraethylene glycol di(meth)acrylate, polyethylene glycol di(meth)acrylate, dipropylene glycol di(meth)acrylate, tripropylene glycol di(meth)acrylate, tetrapropylene glycol di(meth)acrylate, polypropylene glycol di(meth)acrylate, pentaerythritol tri(meth)acrylate, pentaerythritol tetra(meth)acrylate, dipentaerythritol tetra(meth)acrylate, trimethylolpropane tri(meth)acrylate, tetramethylolmethane tetra(meth)acrylate, tetramethylolmethane tri(meth)acrylate, dimethyloltricyclodecane di(meth)acrylate, modified glycerol tri(meth)acrylate, modified bisphenol A di(meth)acrylate, bisphenol A propylene oxide (PO) adduct di(meth)acrylate, bisphenol A ethylene oxide (EO) adduct di(meth)acrylate, dipentaerythritol hexa(meth)acrylate, and caprolactone-modified dipentaerythritol hexa(meth)acrylate.

It is also preferable for it to comprise an alkylene oxide group-containing poly(meth)acrylate as Component A-2-1. Here, 'poly(meth)acrylate' means that it comprises two or more (meth)acrylic acid ester residues in the molecule; it preferably comprises 2 to 4 residues, and more preferably comprises two (meth)acrylic acid ester residues. The alkylene oxide is preferably ethylene oxide and/or propylene oxide. The number of moles of alkylene oxide group added is preferably 1 to 10, and more preferably 1 to 6. This polyfunctional monomer is obtained by adding an alkylene oxide to a glycol and forming a polyester of (meth)acrylic acid.

Specific examples of the alkylene oxide group-containing (meth)acrylate include the di(meth)acrylate of a bisphenol A PO adduct, the di(meth)acrylate of a bisphenol A EO adduct, and propoxylated neopentyl glycol di(meth)acrylate.

With regard to Component A-2-1, one type may be used on its own or two or more types may be used in combination as appropriate.

When the ink composition is a clear ink composition, the content of Component A-2-1 is preferably 10 to 90 mass % of the entire ink composition, more preferably 20 to 80 mass %, and yet more preferably 30 to 70 mass %. When the ink composition is a colored ink composition, it is preferably 1 to 40 mass % of the entire ink composition, more preferably 3 to 30 mass %, and yet more preferably 5 to 25 mass %.

When the ink composition is a clear ink composition, with the total amount of Component A as 100 mass %, the content of Component A-2-1 relative to the polymerizable compound (Component A) is preferably 10 to 90 mass %, more preferably 25 to 80 mass %, and yet more preferably 40 to 75 mass %. When the ink composition is a colored ink composition, with the total amount of Component A as 100 mass %, it is preferably 0.5 to 40 mass %, more preferably 1 to 30 mass %, and yet more preferably 3 to 20 mass %.

(Component A-2-2) Monofunctional (meth)acrylate monomer

The ink composition of the present invention preferably comprises (Component A-2-2) a monofunctional (meth)acrylate monomer. Examples of Component A-2-2 include a radically polymerizable monomer described in JP-A-2009-221414, a polymerizable compound described in JP-A-2009-209289, and an ethylenically unsaturated compound described in JP-A-2009-191183.

Examples of the monofunctional (meth)acrylate compound include tetrahydrofurfuryl (meth)acrylate, norbornyl (meth)acrylate, isobornyl (meth)acrylate, cyclohexyl (meth)acrylate, cyclopentyl (meth)acrylate, cycloheptyl (meth)acrylate, cyclooctyl (meth)acrylate, cyclodecyl (meth)acrylate, dicyclodecyl (meth)acrylate, 3,3,5-trimethylcyclohexyl (meth)acrylate, 4-*t*-butylcyclohexyl (meth)acrylate, acryloylmorpholine, N-phthalimidoethyl (meth)acrylate, pentamethylpiperidyl (meth)acrylate, tetramethylpiperidyl (meth)acrylate, 5-(meth)acryloyloxymethyl-5-ethyl-1,3-dioxacyclohexane, 2-ethylhexyl (meth)acrylate, 2-hydroxyethyl (meth)acrylate, 2-butoxyethyl (meth)acrylate, carbitol (meth)acrylate, methyl (meth)acrylate, *n*-butyl (meth)acrylate, 2-(2-ethoxyethoxy)ethyl (meth)acrylate, 2-(2-butoxyethoxy)ethyl (meth)acrylate, and dimethylaminomethyl (meth)acrylate.

Among them, isobornyl (meth)acrylate is preferable, and isobornyl acrylate is particularly preferable.

As the monofunctional (meth)acrylate monomer, a phenyl group-containing compound represented by Formula (2) may also be used.

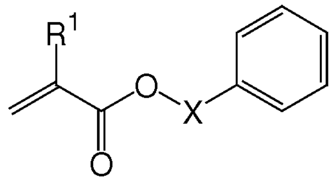

(2)

(In Formula (2), $R^1$ denotes a hydrogen atom or a methyl group, and X denotes a single bond or a divalent linking group.)

$R^1$ in Formula (2) denotes a hydrogen atom or a methyl group, and is preferably a hydrogen atom in terms of curing rate.

Preferred examples of X in Formula (2) include an alkylene group and a group formed by combining one or more alkylene group and one or more bond selected from the group consisting of an ether bond, an ester bond, a urethane bond, and a urea bond; more preferred examples include an alkylene group, an alkyleneoxy group, and a polyalkyleneoxy group.

The alkylene group, alkyleneoxy group, or polyalkyleneoxy group preferably has 2 to 10 carbons, more preferably 2 to 4 carbons, and particularly preferably 2 carbons. The alkylene group, alkyleneoxy group, or polyalkyleneoxy group may have a substituent, and examples of the substituent include an alkyl group, an aryl group, a halogen atom, and a hydroxy group.

Among them, the compound represented by Formula (2) is preferably phenoxyethyl (meth)acrylate, and particularly preferably phenoxyethyl acrylate.

The monofunctional monomer may comprise an aromatic group-containing monofunctional (meth)acrylate compound other than a compound represented by (2). The cyclic structure of the aromatic group of the aromatic group-containing monofunctional (meth)acrylate compound may comprise a heteroatom such as O, N, or S.

Examples of aromatic group-containing monofunctional (meth)acrylate compounds other than the compound represented by Formula (2) include 1-naphthyl (meth)acrylate, 2-naphthyl (meth)acrylate, 2-$\alpha$-naphthyloxyethyl (meth)acrylate, 2-$\beta$-naphthyloxyethyl (meth)acrylate, 2-anthryl (meth)acrylate, 9-anthryl (meth)acrylate, 1-phenanthryl (meth)acrylate, 2-phenanthryl (meth)acrylate, ethylene oxide-modified cresol (meth)acrylate (hereinafter, 'ethylene oxide' is also called 'EO'), p-nonylphenoxyethyl (meth)acrylate, p-nonylphenoxypolyethylene glycol (meth)acrylate, p-cumylphenoxyethylene glycol (meth)acrylate, 2-furyl (meth)acrylate, 2-furfuryl (meth)acrylate, 2-thienyl (meth)acrylate, 2-thenyl (meth)acrylate, 1-pyrrolyl (meth)acrylate, 2-pyridyl (meth)acrylate, and 2-quinolyl (meth)acrylate.

Furthermore, as the monofunctional (meth)acrylate monomer, a compound represented by Formula (1) below is also preferably used.

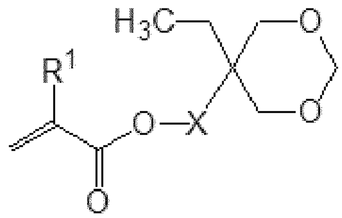

(1)

(In Formula (1), $R^1$ denotes a hydrogen atom or a methyl group, and X denotes a single bond or a divalent linking group.)

The compound represented by Formula (1) may be an acrylate compound or a methacrylate compound, but it is preferable that it is an acrylate compound, that is, $R^1$ is a hydrogen atom.

The divalent linking group as X in Formula (1) is not particularly limited as long as the effects of the present invention are not greatly impaired, but is preferably a divalent hydrocarbon group or a divalent linking group formed by combining a hydrocarbon group and at least one bond selected from the group consisting of an ester bond, a urethane bond, a urea bond, an ether bond, and an amide bond.

X is preferably a divalent hydrocarbon group. The divalent hydrocarbon group is preferably a divalent hydrocarbon group having 1 to 20 carbons, and more preferably a divalent hydrocarbon group having 1 to 5 carbons; among the hydrocarbon groups an alkylene group is preferable, and a methylene group, which has 1 carbon, is particularly preferable.

When X is a divalent linking group formed by combining a hydrocarbon group and at least one bond selected from the group consisting of an ester bond, a urethane bond, a urea bond, an ether bond, and an amide bond, the hydrocarbon group is preferably an alkylene group having 1 to 5 carbons. It is preferably a divalent linking group formed by combining at least one alkylene group and at least one bond selected from the group consisting of an ester bond (-COO- or -OCO-), a urethane bond (-NRCOO- or -OCONR- (R denotes a hydrogen atom or an alkyl group)), a urea bond (-NRCONR'- (R and R' denote a hydrogen atom or an alkyl group)), an ether bond (-O-), and an amide bond (-NRCO- or -CONR- (R denotes a hydrogen atom or an alkyl group)). Among these, a divalent linking group formed by combining at least one alkylene group and at least one ether bond is more preferable.

The divalent linking group formed by combining an alkylene group and an ether bond is preferably *-(alkylene group)-O-** or *-(alkylene group)-O-(alkylene group)-** (* denotes the site at which X and the O of the (meth)acryloxy group are bonded, and ** denotes the site at which X and the quaternary carbon atom are bonded).

The divalent linking group formed by combining an alkylene group and an ether bond is preferably a poly(alkyleneoxy) group or poly(alkyleneoxy)alkyl group, which have a plurality of -(alkylene group)-O-moieties, and in this case the total number of carbons in the linking group is preferably 2 to 60, and more preferably 2 to 20.

Preferred examples of the compound represented by Formula (1) include compounds (A-1-1) to (A-1-4) below, however the present invention is not limited thereto.

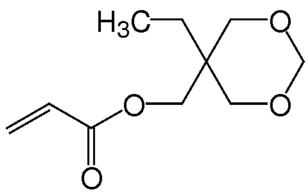

(A-1-1)

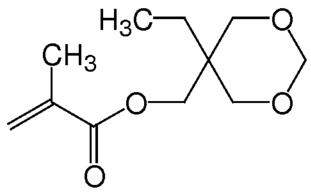

(A-1-2)

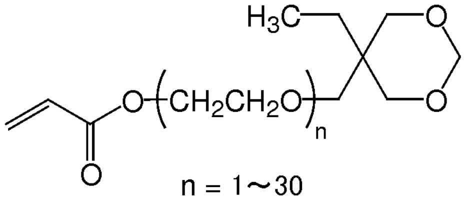

n = 1~30

(A-1-3)

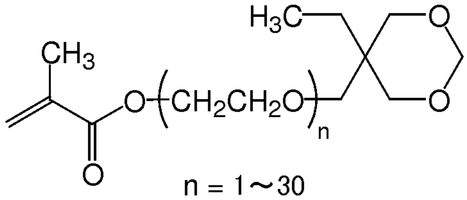

n = 1~30

(A-1-4)

Among them, cyclic trimethylolpropane formal acrylate (A-1-1) and cyclic trimethylolpropane formal methacrylate (A-1-2) are more preferable, and cyclic trimethylolpropane formal acrylate (A-1-1) is particularly preferable.

With regard to Component A-2-2, one type may be used on its own or two or more types may be used in

combination as appropriate.

When the ink composition is a clear ink composition, the content of Component A-2-2 is preferably 0.5 to 60 mass % of the entire ink composition, more preferably 1 to 40 mass %, and yet more preferably 3 to 20 mass %. Furthermore, when the ink composition is a colored ink composition, it is preferably 5 to 80 mass % of the entire ink composition, more preferably 10 to 70 mass %, and yet more preferably 20 to 60 mass %.

When the ink composition is a clear ink composition, with the total amount of Component A as 100 mass %, the content of Component A-2-2 relative to the polymerizable compound (Component A) is preferably 10 to 90 mass %, more preferably 25 to 80 mass %, and yet more preferably 40 to 75 mass %. Furthermore, when the ink composition is a colored ink composition, with the total amount of Component A as 100 mass %, it is preferably 20 to 80 mass %, more preferably 30 to 70 mass %, and yet more preferably 40 to 60 mass %.

(Component A-3) Other polymerizable compound

The ink composition of the present invention may comprise, in addition to Component A-1 and Component A-2, (Component A-3) another polymerizable compound, and examples of Component A-3 include (Component A-3-1) an *N*-vinyllactam and (Component A-3-2) a radically polymerizable oligomer.

(Component A-3-1) *N*-Vinyllactam

The ink composition of the present invention may comprise (Component A-3-1) an *N*-vinyllactam as the polymerizable compound (Component A). The *N*-vinyllactam is preferably a compound represented by Formula (a).

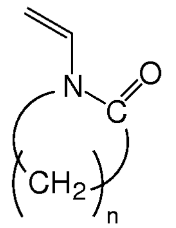

(a)

In Formula (a), n denotes an integer of 2 to 6; n is preferably an integer of 3 to 5 from the viewpoint of flexibility after the ink composition is cured, adhesion to a recording medium, and ready availability of starting materials, n is more preferably 3 or 5, and n is particularly preferably 5, which is *N*-vinylcaprolactam. *N*-vinylcaprolactam is preferable since it has excellent safety, is commonly used and is readily available at a relatively low price, and gives particularly good ink curability and adhesion of a cured film to a recording medium.

The *N*-vinyllactam may have a substituent such as an alkyl group or an aryl group on the lactam ring, and may have a saturated or unsaturated ring structure bonded to the lactam ring.

The compound represented by Formula (a) may be used singly or in a combination of two or more compounds.

The content of the *N*-vinyllactam is preferably 5 to 40 mass % of the entire ink composition, and more preferably 10 to 35 mass %.

The *N*-vinyllactam is preferably used when the ink composition of the present invention is a colored ink composition.

(Component A-3-2) Radically polymerizable oligomer

The ink composition of the present invention may comprise (Component A-3-2) a radically polymerizable oligomer as the polymerizable compound (Component A), and preferably comprises (Component A-3-2) a radically polymerizable oligomer. The oligomer referred to here means a radically polymerizable compound having a molecular weight of greater than 1,000, and is preferably a polyfunctional oligomer comprising a plurality, and preferably 2 to 4, of ethylenically unsaturated groups. The radically polymerizable oligomer preferably comprises an ethylenically unsaturated group at a molecular terminal or in a molecular side chain of an addition polymer having a finite number (usually 5 to 100) of constituent units, and its weight-average molecular weight is preferably greater than 1,000 but no greater than 10,000, and more preferably greater than 1,000 but no greater than 5,000.

The radically polymerizable oligomer preferably comprises a plurality of (meth)acryloxy groups.

The oligomer in the present invention may be any oligomer having a structural unit derived from any monomer, and examples thereof include an olefin-based oligomer (an ethylene oligomer, a propylene oligomer, a butene oligomer, etc.), a vinyl-based oligomer (a styrene oligomer, a vinyl alcohol oligomer, a vinylpyrrolidone oligomer, an acrylate

oligomer, a methacrylate oligomer, etc.), a diene-based oligomer (a butadiene oligomer, a chloroprene rubber, a pentadiene oligomer, etc.), a ring-opening polymerization type oligomer (di-, tri-, tetra-ethylene glycol, polyethylene glycol, polyethylimine, etc.), an addition-polymerization type oligomer (an oligoester acrylate, a polyamide oligomer, a polyisocyanate oligomer), and an addition-condensation oligomer (a phenolic resin, an amino resin, a xylene resin, a ketone resin, etc.). Among them an oligoester (meth)acrylate is preferable, and among them a urethane (meth)acrylate, a polyester (meth)acrylate, and an epoxy (meth)acrylate are preferable, and a urethane (meth)acrylate is more preferable.

As the urethane (meth)acrylate, an aliphatic urethane (meth)acrylate and an aromatic urethane (meth)acrylate may preferably be cited, and an aliphatic urethane (meth)acrylate may more preferably be cited.

Furthermore, the urethane (meth)acrylate is preferably a di- to tetrafunctional urethane (meth)acrylate, and more preferably a di-functional urethane (meth)acrylate.

In accordance with a urethane (meth)acrylate being contained, an ink having excellent adhesion to a substrate and excellent curability is obtained.

The content of the radically polymerizable oligomer in the ink composition is preferably less than 10 mass %, more preferably no greater than 5 mass %, and particularly preferably 0 to 5 mass %.

With respect to the radically polymerizable oligomer, 'Origomar Handobukku (Oligomer Handbook)' (edited by Junji Furukawa, The Chemical Daily Co., Ltd.) may also be referred to.

As oligomer commercial products, examples of urethane (meth)acrylates include R1204, R1211, R1213, R1217, R1218, R1301, R1302, R1303, R1304, R1306, R1308, R1901, and R1150 manufactured by Dai-Ichi Kogyo Seiyaku Co., Ltd., the EBECRYL series (e.g. EBECRYL 230, 270, 4858, 8402, 8804, 8807, 8803, 9260, 1290, 1290K, 5129, 4842, 8210, 210, 4827, 6700, 4450, and 220) manufactured by Daicel-Cytec Company Ltd., NK Oligo U-4HA, U-6HA, U-15HA, U-108A, and U200AX manufactured by Shin-Nakamura Chemical Co., Ltd., Aronix M-1100, M-1200, M-1210, M-1310, M-1600, and M-1960 manufactured by Toagosei Co., Ltd., and CN 964 and CN964A85 manufactured by Sartomer Company, Inc.

Examples of polyester (meth)acrylates include the EBECRYL series (e.g. EBECRY L770, IRR467, 81, 84, 83, 80, 675, 800, 810, 812, 1657, 1810, IRR302, 450, 670, 830, 870, 1830, 1870, 2870, IRR267, 813, IRR483, 811, etc.) manufactured by Daicel-Cytec Company Ltd., and Aronix M-6100, M-6200, M-6250, M-6500, M-7100, M-8030, M-8060, M-8100, M-8530, M-8560, and M-9050 manufactured by Toagosei Co.

Examples of epoxy (meth)acrylates include the EBECRYL series (e.g. EBECRYL 600, 860, 2958, 3411, 3600, 3605, 3700, 3701, 3703, 3702, 3708, RDX63182, 6040, etc.) manufactured by Daicel-Cytec Company Ltd.

(Component B) Polymerization inhibitor

The ink composition of the present invention comprises (Component B-1) an oxyl free radical-based polymerization inhibitor, (Component B-2) a phenol-based polymerization inhibitor, and (Component B-3) an amine-based polymerization inhibitor as the polymerization inhibitor (Component B). Due to it comprising these three types of polymerization inhibitors, an ink composition for inkjet recording that is excellent in terms of surface gloss and storage stability is provided.

Furthermore, the ink composition of the present invention may comprise (Component B-4) another polymerization inhibitor other than Component B-1 to Component B-3.

Component B-1 to Component B-4 are explained below.

(Component B-1) Oxyl free radical-based polymerization inhibitor

The ink composition of the present invention comprises (Component B-1) an oxyl free radical-based polymerization inhibitor. The oxyl free radical-based polymerization inhibitor is not particularly limited as long as it comprises an oxyl free radical (-O•) in the molecule and has a polymerization inhibition function, but the oxyl free radical is preferably an azo oxyl free radical (> *N*-O•). In the present invention, Component B-1 is preferably a compound represented by Formula (B-1-1) below.

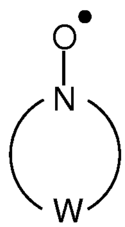

(B-1-1)

In Formula (B-1-1), W denotes a cyclic alkylene chain having 4 or 5 carbons, and the cyclic alkylene chain may have a substituent.

The compound represented by Formula (B-1-1) is preferably a compound represented by Formula (B-1-2).

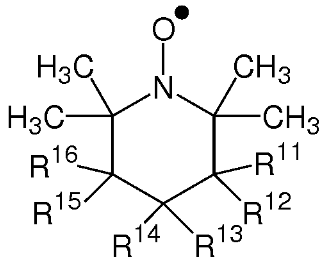

(B-1-2)

In Formula (B-1-2), $R^{11}$ to $R^{16}$ independently denote a hydrogen atom, a halogen atom, or a monovalent organic group, or $R^{11}$ and $R^{12}$, $R^{13}$ and $R^{14}$, or $R^{15}$ and $R^{16}$ may form, together with the carbon to which they are bonded, one carbonyl group.

In Formula (B-1-2), when $R^{11}$ to $R^{16}$ are monovalent organic groups, the monovalent organic group is preferably a hydroxy group, $-NR^1R^2$ ($R^1$ and $R^2$ independently denote a hydrogen atom or an alkyl group having 1 to 12 carbons), an alkyl group, an aryl group, an alkoxy group, an aryloxy group, - $O(C=O)R^3$, $-NH(C=O)R^4$ ($R^3$ and $R^4$ independently denote a hydrogen atom, an alkyl group having 1 to 12 carbons, or an aryl group having 6 to 20 carbons), a carbamoyl group, a carboxy group, a cyano group, a maleimide group, or a phosphoryl group.

The alkyl group is preferably an alkyl group having 1 to 16 carbons, and yet more preferably an alkyl group having 1 to 10 carbons. The alkyl group may be straight-chain or branched, or may have a cyclic structure.

The aryl group is preferably an aryl group having 6 to 20 carbons, and more preferably an aryl group having 6 to 10 carbons.

The alkoxy group is preferably an alkoxy group having 1 to 16 carbons, and more preferably an alkoxy group having 1 to 10 carbons.

The aryloxy group is preferably an aryloxy group having 6 to 20 carbons, and more preferably an aryloxy group having 6 to 10 carbons.

When $R^{11}$ to $R^{16}$ are monovalent organic groups, they may have one or more substituent. This substituent may be further substituted with another substituent.

Examples of the substituent include a halogen atom such as a fluorine atom, a chlorine atom, a bromine atom, or an iodine atom, an alkoxy group such as a methoxy group, an ethoxy group, or a tert-butoxy group, an aryloxy group such as a phenoxy group or a p-tolyloxy group, an alkoxycarbonyl group or an aryloxycarbonyl group such as a methoxycarbonyl group, a butoxycarbonyl group, or a phenoxycarbonyl group, an acyloxy group such as an acetoxy group, a propionyloxy group, or a benzoyloxy group, an acyl group such as an acetyl group, a benzoyl group, an isobutyryl group, an acryloyl group, a methacryloyl group, or a methoxalyl group, an alkylsulfanyl group such as a methylsulfanyl group or a tert-butylsulfanyl group, an arylsulfanyl group such as a phenylsulfanyl group or a *p*-tolylsulfanyl group, an alkylamino group such as a methylamino group or a cyclohexylamino group, a dialkylamino group such as a dimethylamino group, a diethylamino group, a morpholino group, or a piperidino group, an arylamino group such as a phenylamino group or a *p*-tolylamino group, an alkyl group such as a methyl group, an ethyl group, a *tert*-butyl group, or a dodecyl group, an aryl group such as a phenyl group, a *p*-tolyl group, a xylyl group, a cumenyl group, a naphthyl group, an anthryl group, or a phenanthryl group and, furthermore, a hydroxy group, a carboxy group, a formyl group, a mercapto group, a sulfo group, a mesyl group, a *p*-toluenesulfonyl group, an amino group, a nitro group, a cyano group, a trifluoromethyl group, a trichloromethyl group, a trimethylsilyl group, a phosphono group, a trimethylammonium group, a dimethylsulfonium group, and a triphenylphenacylphosphonium group.

In Formula (B-1-2), $R^{11}$, $R^{12}$, $R^{15}$ and $R^{16}$ are preferably hydrogen atoms.

In Formula (B-1-2), $R^{13}$ and $R^{14}$ preferably denote a hydrogen atom, a hydroxy group, $-NR^1R^2$ ($R^1$ and $R^2$ independently denote a hydrogen atom or an alkyl group having 1 to 12 carbons), an alkyl group (1 to 10 carbons), an aryl group (6 to 10 carbons), an alkoxy group (1 to 10 carbons), an aryloxy group, $-O(C=O)R^3$, $-NH(C=O)R^4$ ($R^3$ and $R^4$ independently denote a hydrogen atom, an alkyl group having 1 to 12 carbons, or an aryl group having 6 to 20 carbons), or $R^{13}$ and $R^{14}$ form, together with the carbon to which they are bonded, one carbonyl group.

Preferred compound examples of Component B-1 are illustrated below, but the present invention should not be construed as being limited thereto.

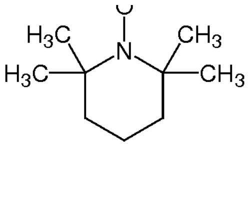 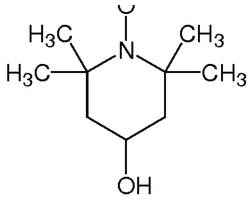 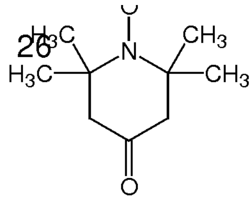 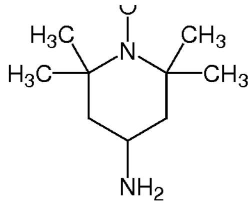

(b-1-1) (b-1-2) (b-1-3) (b-1-4)

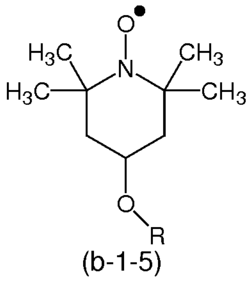 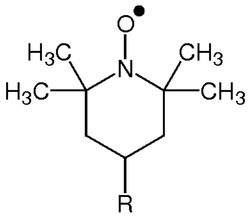 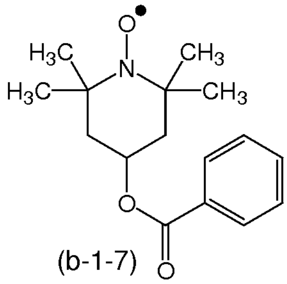 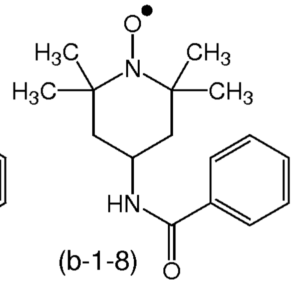

(b-1-5) (b-1-6) (b-1-7) (b-1-8)

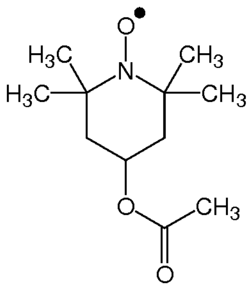 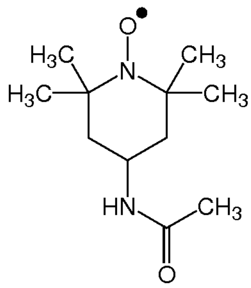

(b-1-9) (b-1-10)

R denotes a chain-form alkyl group having 1 to 10 carbons, and the alkyl group may be straight-chain or branched.

Among compounds represented by Formula (b-1-1) to Formula (b-1-10), compounds represented by (b-1-1), (b-1-2), (b-1-4), and (b-1-5) are preferable, (b-1-1), (b-1-2), and (b-1-4) are more preferable, and (b-1-1) is particularly preferable.

(Component B-2) Phenol-based polymerization inhibitor

In the present invention, the phenol-based polymerization inhibitor means a phenol group-containing compound, but is not otherwise limited. As the phenol-based polymerization inhibitor, known compounds may be used and are not limited, but a compound represented by Formula (B-2-1) is preferable.

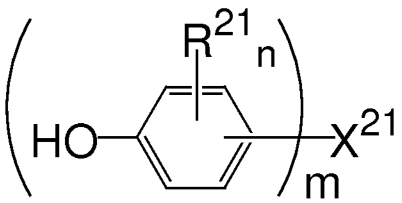 ( B-2-1 )

In Formula (B-2-1), m denotes an integer of 1 to 5, n denotes an integer of 1 to 4, the n $R^{21}$s independently denote a hydrogen atom, a halogen atom (a fluorine atom, a chlorine atom, a bromine atom, or an iodine atom), a cyano group, a hydroxy group, an optionally branched alkyl group having 1 to 20 carbons, a cycloalkyl group having 3 to 8 carbons, an aryl group having 6 to 12 carbons, an alkenyl group having 1 to 5 carbons, or an alkynyl group having 1 to 5 carbons; these groups may be bonded to a benzene ring shown in Formula (B-2-1) via a linking group, and examples of the linking group include a carbonyl group, a carbonyloxy group (-COO-), an oxycarbonyl group (-OCO-), a thio group, a sulfonyl group, a sulfinyl group, an oxy group, an amino group (-NH-), an amide group, an alkylene group having 1 to

6 carbons, an arylene group having 6 to 12 carbons, a phosphonic acid ester group, a phosphoric acid ester group, a 3- to 8-membered polyvalent heterocyclic group formed by removing two or more hydrogen atoms from a hetero ring such as triazine or dioxane, an alkylamino group, and a polyvalent linking group selected from combinations of these linking groups. Furthermore, two or more groups denoted by $R^{21}$ may be bonded to each other to form a ring structure.

The group denoted by $R^{21}$ may have a substituent at a carbon atom for which introduction is possible. Examples of the substituent that can be introduced include an alkyl group having 1 to 6 carbons, a hydroxy group, a cyano group, a halogen atom (a fluorine atom, a chlorine atom, a bromine atom, or an iodine atom), an amino group, an alkylamino group, an alkoxy group, and a (meth)acryloyl group.

$X^{21}$ denotes an m-valent linking group when m is two or greater, and specific examples include a single bond, a carbonyl group, a carbonyloxy group, a thio group, a sulfonyl group, a sulfinyl group, an oxy group, a phosphonic acid ester group, an alkylene group having 1 to 6 carbons, an arylene group having 6 to 12 carbons, an amino group, an aliphatic hydrocarbon group having 1 to 6 carbons from which m hydrogen atoms have been removed, an m-valent aromatic hydrocarbon group having 6 to 12 carbons from which m hydrogen atoms have been removed, a 6 to 12-membered heterocyclic group in which m hydrogen atoms have been removed from a hetero ring such as triazine or dioxane, and a combination of these linking groups, and as for $R^{21}$ it may have a substituent at a carbon for which introduction is possible.

Needless to say, when m in Formula (B-2-1) is 1, that is, when it is a compound having only one structure represented by Formula (B-2-1), it does not have a linking group $X^{21}$. In this case, it may have a monovalent substituent instead of $X^{21}$; examples of the monovalent substituent include the same groups as for $R^{21}$, and it may be bonded to $R^{21}$ on the benzene ring to form a ring structure, or may be bonded to the benzene ring via a linking group. In Formula (B-2-1), when m is 1, it is preferably a compound represented by Formula (B-2-2) or (B-2-3).

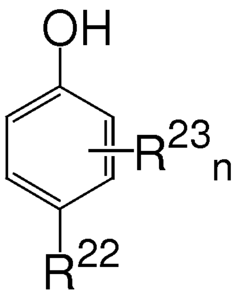
(B-2-2)

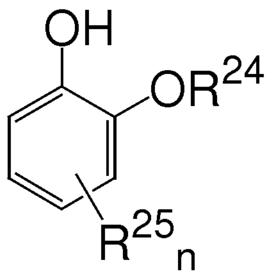
(B-2-3)

In Formula (B-2-2) and Formula (B-2-3), n denotes 4, and the n $R^{23}$s and the n $R^{25}$s independently denote a group denoted by $R^{21}$ in Formula (B-2-1). $R^{23}$ and $R^{25}$ preferably denote a hydrogen atom, an alkyl group having 1 to 10 carbons, or a cycloalkyl group having 3 to 8 carbons, or two $R^{23}$s or $R^{25}$s are bonded to form a fused ring.

The alkyl group having 1 to 10 carbons is preferably a methyl group, an ethyl group, a propyl group, a *tert*-butyl group, or a *tert*-pentyl group, and the cycloalkyl group having 3 to 8 carbons is preferably a cyclohexyl group. Among them, the groups denoted by $R^{23}$ and $R^{25}$ are preferably hydrogen atoms, *tert-butyl* groups, *tert*-pentyl groups, or cyclohexyl groups, and more preferably hydrogen atoms, *tert*-butyl groups, or *tert*-pentyl groups. It is preferable for the groups denoted by $R^{23}$ and $R^{25}$ to have such a bulky structure since an ink composition having excellent long-term storage stability is obtained.

In Formula (B-2-2), when $R^{23}$ denotes something other than a hydrogen atom, it is preferable for the 2- and/or 5-position to be substituted, and it is more preferable for the 2- and 5-positions to be substituted.

In Formula (B-2-3), when $R^{25}$ denotes something other than a hydrogen atom, it is preferable for the 4- and/or 5-position to be substituted, and it is more preferable for the 4-position to be substituted.

The groups denoted by $R^{23}$ and $R^{25}$ may have the same substituent at a carbon atom where substitution is possible as for $R^{21}$ in Formula (B-2-1).

$R^{22}$ denotes a hydrogen atom, an alkyl group, an aryl group, a hydroxy group, an alkoxy group, or an aryloxy group, and is preferably a hydroxy group, an alkyl group, or an alkoxy group.

The alkyl group is preferably a chain-form or cyclic alkyl group having 1 to 16 carbons, more preferably 1 to 10 carbons, and yet more preferably 1 to 6 carbons. The alkyl group may further have a substituent, and examples of the substituent include an aryl group.

The aryl group preferably has 6 to 20 carbons, more preferably 6 to 15 carbons, and yet more preferably 6 to 10 carbons.

The alkyl moiety of the alkoxy group is preferably a chain-form or cyclic alkyl group having 1 to 16 carbons, more preferably 1 to 10 carbons, and yet more preferably 1 to 6 carbons. The alkyl group may further have a substituent, and examples of the substituent include an aryl group.

The aryl moiety of the aryloxy group preferably has 6 to 20 carbons, more preferably 6 to 15 carbons, and yet more preferably 6 to 10 carbons.

$R^{24}$ denotes a hydrogen atom, an alkyl group, or an aryl group, and preferred ranges for the alkyl group and the aryl group are the same as for $R^{22}$. Among them, $R^{24}$ is preferably a hydrogen atom.

In Formula (B-2-1), when m is 2, the phenol-based polymerization inhibitor is preferably a compound represented by Formula (B-2-4) or (B-2-5).

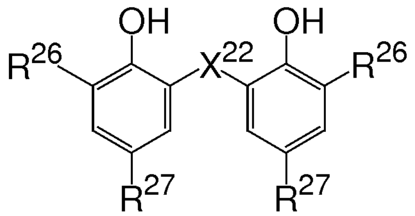

(B-2-4)

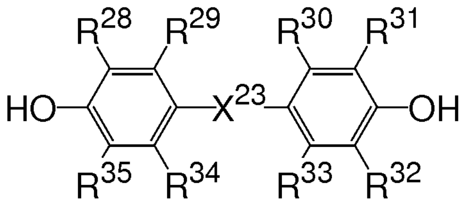

(B-2-5)

In Formula (B-2-4), the groups denoted by $R^{26}$ and $R^{27}$ have the same meaning as the group denoted by $R^{21}$ in Formula (B-2-1), and the $R^{26}$s are preferably independently a methyl group, a *tert*-butyl group, a cyclohexyl group, or a 1-methylcyclohexyl group, and more preferably a *tert*-butyl group. The $R^{27}$s are more preferably independently a methyl group or an ethyl group.

$X^{22}$ has the same meaning as $X^{21}$ in Formula (B-2-1), but is preferably an alkylene group having 1 to 3 carbons, and more preferably a methylene group. $X^2$ may have the above substituent at a carbon atom where introduction is possible, and preferably has an alkyl group having 1 to 3 carbons as a substituent on a carbon atom of the alkylene group.

In Formula (B-2-5), the groups denoted by $R^{28}$ to $R^{35}$ have the same meaning as the group denoted by $R^1$ in Formula (B-2-1), and it is preferable that $R^{28}$ to $R^{35}$ are independently a hydrogen atom, a methyl group, or a *tert*-butyl group, and it is more preferable that $R^{28}$, $R^{34}$, $R^{31}$ and $R^{33}$ are a hydrogen atom, and $R^{29}$, $R^{35}$, $R^{30}$ and $R^{32}$ are a methyl group, or a *tert*-butyl group. From the viewpoint of synthesis, it is yet more preferable that $R^{29}$ and $R^{30}$ are preferably the same group, and $R^{35}$ and $R^{32}$ are the same group.

$X^{23}$ denotes a divalent linking group, and has the same meaning as $X^{21}$ in Formula (B-2-1), but is preferably an alkylene group having 1 to 6 carbons, an arylene group having 6 to 12 carbons, a carbonyloxy group, an oxycarbonyl group, an amide group, an oxy group, a thio group, a phosphonic acid ester group, a phosphoric acid ester group, or a group formed by removing two hydrogen atoms from a hetero ring such as dioxane, and a combination of these linking groups. $X^{23}$ may have the same substituent as $R^{21}$ in Formula (B-2-1) at a carbon atom where introduction is possible, and the two substituents may be bonded to form a ring structure, Among these, an alkylene group having 1 to 3 carbons is preferably, and among them a methylene group is more preferable. $X^{23}$ may have the above substituent at a carbon atom where introduction is possible, and preferably has an alkyl group having 1 to 3 carbons as a substituent on a carbon atom of the alkylene group.

In Formula (B-2-1), when m is 3 or 4, it is preferably a compound represented by Formula (B-2-6).

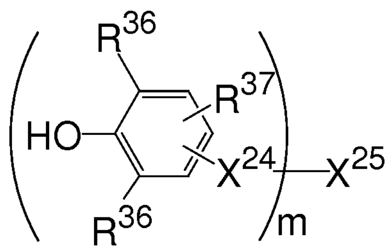

( B-2-6 )

In Formula (B-2-6), the $R^{36}$s independently have the same meaning as $R^{21}$ in Formula (B-2-1), and are preferably a hydrogen atom, a methyl group, or a *tert*-butyl group, and more preferably a *tert*-butyl group.

$R^{37}$ denotes a hydrogen atom or a methyl group.

$X^{24}$ denotes a divalent linking group and denotes a single bond, an alkylene group having 1 to 3 carbons, a carbonyloxy group, an oxycarbonyl group, or a divalent linking group formed by combining same.

$X^{25}$ has the same meaning as $X^{21}$ in Formula (B-2-1), but when m is 3 or 4 examples thereof include an aliphatic hydrocarbon group having 1 to 6 carbons from which m hydrogen atoms have been removed, an m-valent aromatic hydrocarbon group having 6 to 12 carbons from which m hydrogen atoms have been removed, and a 6 to 12-membered heterocyclic group from which m hydrogen atoms have been removed, and specifically the linking groups below are preferable. In the linking groups below, 'R' denotes a group inside the parentheses of Formula (B-2-6), which is bonded to $X^{25}$ via $X^{24}$. These Rs in one compound may be identical to or different from each other.

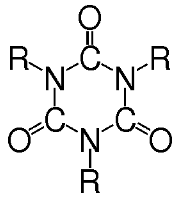
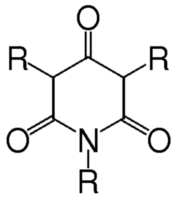
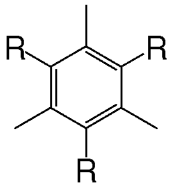
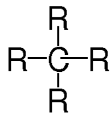
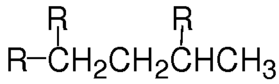

Specific examples of the phenol-based polymerization inhibitor that can preferably be used in the present invention are listed below, but the present invention is not limited thereby. In the present invention, a hydrocarbon chain in a chemical formula may be represented by a simplified structural formula in which symbols for carbon (C) and hydrogen (H) are omitted.

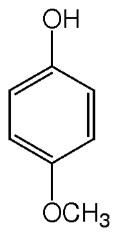
(b-2-1)

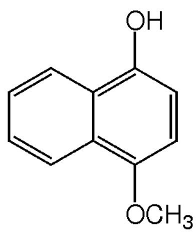
(b-2-2)

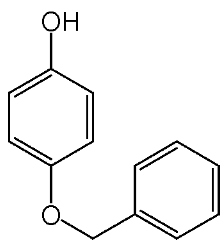
(b-2-3)

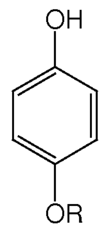
(b-2-4)

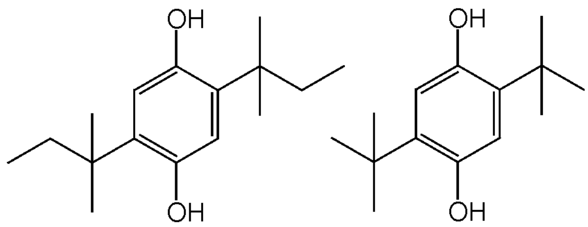
(b-2-5) (b-2-6)

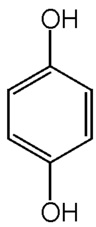
(b-2-7)

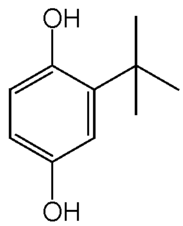
(b-2-8)

In (b-2-4), R denotes an alkyl group having 2 to 6 carbons.

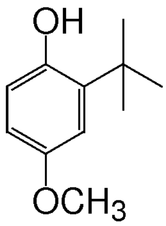
(b-2-9)

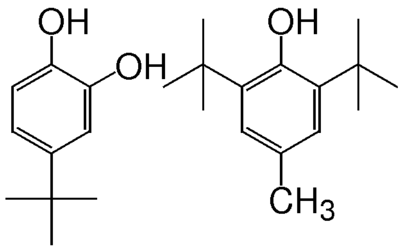
(b-2-10) (b-2-11)

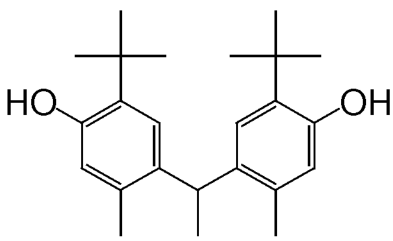
(b-2-12)

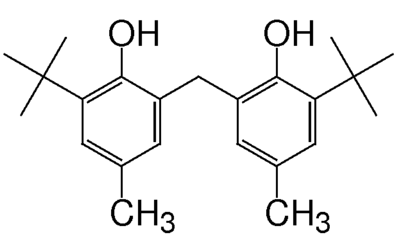

(b-2-13)

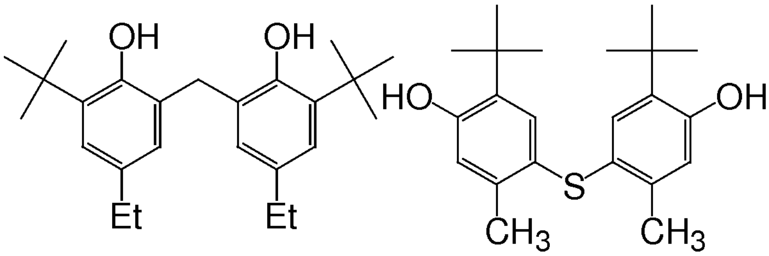

(b-2-14) (b-2-15)

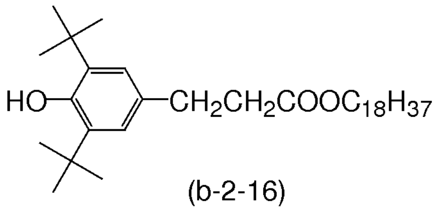

(b-2-16)

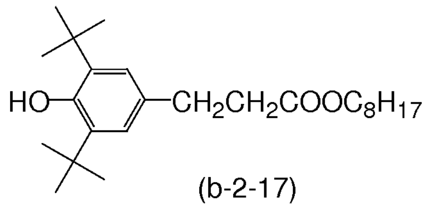

(b-2-17)

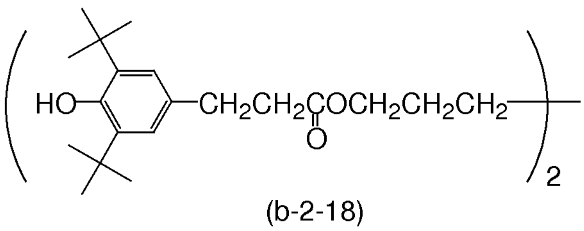

(b-2-18)

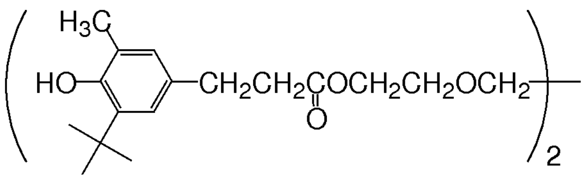

(b-2-19)

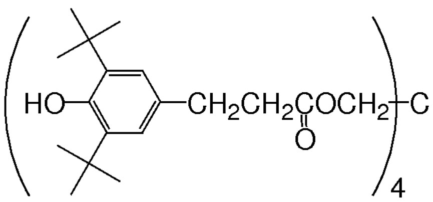

(b-2-20)

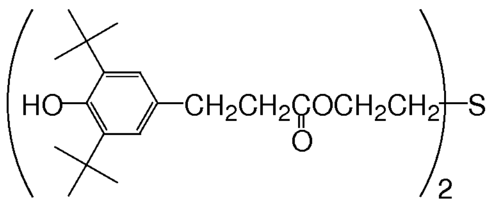

(b-2-21)

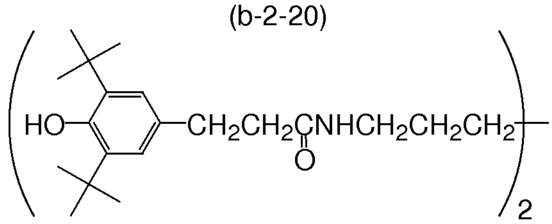

(b-2-22)

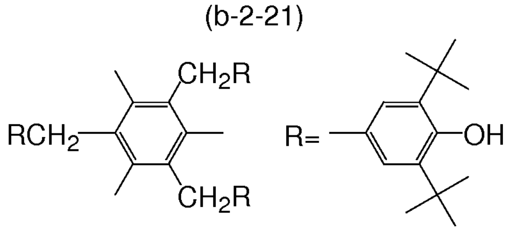

(b-2-23)

The phenol-based polymerization inhibitor used may be a commercial product, and examples include Quino Power NMT (Kawasaki Kasei Chemicals Ltd.), Antage W-300, Antage W-400, Antage W-500, Antage Crystal, Antage BHT, Antage DAH, and Antage DBH (all manufactured by Kawaguchi Chemical Industry Co., Ltd.), DIC-TBC (DIC), and IRGANOX 1010, IRGANOX 1035, IRGANOX 1076, IRGANOX 1098, IRGANOX 1135, IRGANOX 1330, IRGANOX 245, IRGANOX 259, and IRGANOX 3114 (all manufactured by BASF Japan).

The phenol-based polymerization inhibitor that can be used in the present invention is preferably a compound represented by Formula (B-2-2) or Formula (B-2-3). The compound represented by Formula (B-2-2) is preferably (b-2-1), (b-2-3), or (b-2-4). The compound represented by Formula (B-2-3) is preferably (b-2-10).

(Component B-3) Amine-based polymerization inhibitor

The ink composition of the present invention comprises (Component B-3) an amine-based polymerization inhibitor as the polymerization inhibitor (Component B). Component B-3 is represented by Formula (B-3-1) below

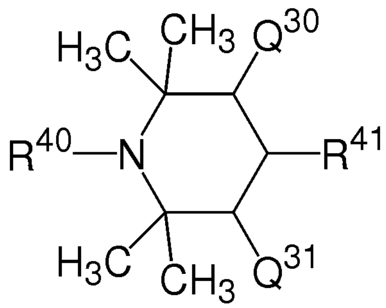

(B-3-1)

wherein in Formula (B-3-1), $R^{40}$ denotes a hydrogen atom, an alkyl group having 1 to 6 carbons, or a cycloalkyl group having 3 to 8 carbons, $R^{41}$ denotes a hydrogen atom, an alkyl group having 1 to 10 carbons, a cycloalkyl group having 3 to 8 carbons, an aralkyl group having 7 to 12 carbons, a 3- to 8-membered heterocyclic group, a hydroxy group, an -O-CO-$R^{42}$ group, an - N($R^{43}$)($R^{44}$) group, or =N($R^{43}$), $R^{42}$ denotes an alkyl group having 1 to 10 carbons, a cycloalkyl group having 3 to 8 carbons, an aralkyl group having 6 to 18 carbons, or an aryl group having 6 to 12 carbons, $R^{43}$ and $R^{44}$ independently denote a hydrogen atom, an alkyl group having 1 to 10 carbons, a cycloalkyl group having 3 to 8 carbons, a 3- to 8-membered heterocyclic group, an acyl group having 2 to 8 carbons, an acyloxy group, or an amide group, $Q^{30}$ and $Q^{31}$ independently denote a hydrogen atom or an oxo group, or there may be bonding, through $R^{41}$, to at least another compound represented by Formula (B-3-1) directly or via a linking group.

The hindered amine-based polymerization inhibitor is an amine compound having a moiety with a hindered amine structure (a structure in which there is steric hindrance with respect to a basic nitrogen atom) in the molecule.

The alkyl group having 1 to 6 carbons denoted by $R^{40}$ is preferably a methyl group, an ethyl group, a propyl group, a n-butyl group, or a sec-butyl group, and more preferably a methyl group or an ethyl group.

As the alkyl group having 1 to 10 carbons denoted by $R^{41}$, $R^{42}$, $R^{43}$, or $R^{44}$ there can preferably be cited a methyl group, an ethyl group, a propyl group, an n-butyl group, a sec-butyl group, a hexyl group, an octyl group, or a decyl group.

As the cycloalkyl group having 3 to 8 carbons denoted by $R^{40}$, $R^{41}$, $R^{42}$, $R^{43}$, or $R^{44}$ there can be cited a cyclopropyl group, a cyclobutyl group, a cyclopentyl group, a cyclohexyl group, a cyclopentyl group, or a norbornyl group.

As the aralkyl group having 7 to 12 carbons denoted by $R^{41}$ or $R^{42}$ there can be cited a benzyl group, a phenethyl group, or a naphthylmethyl group.

As the 3- to 8-membered heterocyclic group denoted by $R^{41}$, $R^{43}$, or $R^{44}$ there can be cited a dioxolanyl group.

As the aryl group having 6 to 15 carbons denoted by $R^{42}$ there can be cited a phenyl group, a tolyl group, a methoxyphenyl group, a naphthyl group, or an anthryl group.

As the acyl group having 2 to 8 carbons denoted by $R^{43}$ or $R^{44}$ there can be cited an acetyl group, a propanoyl group, a butanoyl group, a pentanoyl group, or a benzoyl group.

The acyloxy group denoted by $R^{43}$ or $R^{44}$ is a group represented by - CO-O-$R^{45}$, such as a methoxycarbonyl group, an ethoxycarbonyl group, a propoxycarbonyl group, or a phenoxycarbonyl group. $R^{45}$ has the same meaning as $R^{42}$.

The amide group denoted by $R^{43}$ and $R^{44}$ is a group represented by - CO-NH-$R^{46}$, such as an *N*-methylamide group, an *N*-ethylamide group, an *N*-phenylamide group, or an *N*-tolylamide group. $R^{46}$ has the same meaning as $R^{42}$.

The compound represented by Formula (B-3-1) may be bonded, through $R^{41}$, to at least another compound represented by Formula (B-3-1) directly or via a linking group. Examples of the linking group include a heterocyclic group such as triazine or dioxirane from which two or more hydrogen atoms have been removed, a straight-chain or branched hydrocarbon group having 1 to 10 carbons from which two or more hydrogen atoms have been removed, and a linking group formed by combining same.

The above groups and linking groups may have a substituent at a carbon atom where introduction is possible.

The substituent that can be introduced is a straight-chain, branched, or cyclic alkyl group (e.g. a methyl group, an ethyl group, a propyl group, an isopropyl group, an *n*-butyl group, a sec-butyl group, a *tert*-butyl group, a cyclopropyl group, a cyclopentyl group, a cyclohexyl group), a straight-chain, branched, or cyclic alkoxy group (e.g. a methoxy group, an ethoxy group, a propoxy group, a butoxy group, a hydroxyethoxy group), the above aryl group, a halogen atom (a fluorine atom, a chlorine atom, a bromine atom, or an iodine atom), a hydroxy group, a hydroxyalkyl group, a carboxy group, a cyano group, an acyl group (e.g. an acetyl group, a propanoyl group, or a benzoyl group), a nitro group, an alkylamino group, a dialkylamino group (the alkyl moiety has the same meaning as the above alkyl group), an arylamino group (the aryl moiety has the same meaning as the above aryl group), an -S-$R^{47}$ group, or a -CO-O-$R^{47}$ group, and $R^{47}$ denotes the above straight-chain, branched, or cyclic alkyl group or the above aryl group.

The hindered amine-based polymerization initiator is more preferably a compound represented by Formula (B-3-2) below.

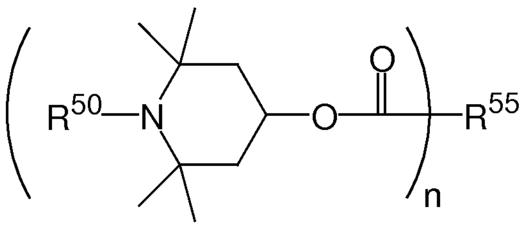

(B-3-2)

In Formula (B-3-2), $R^{50}$ has the same meaning as $R^{40}$ in Formula (B-3-1) above. Among them, $R^{50}$ is preferably a hydrogen atom or an alkyl group having 1 to 6 carbons, and more preferably a hydrogen atom or an alkyl group having 1 to 3 carbons.

n is preferably an integer of 2 to 5, more preferably an integer of 2 to 4, and yet more preferably 2 or 4.

$R^{55}$ denotes a group formed by removing (n-1) hydrogen atoms from an alkyl group. The total number of carbons of $R^{55}$ is 1 to 10.

Specific examples of the hindered amine-based polymerization inhibitor that can be used preferably in the present invention are shown below, but the present invention should not be construed as being limited thereto. In the present invention, a chemical formula might be expressed using a simplified structural formula in which symbols for carbon (C) and hydrogen (H) are omitted.

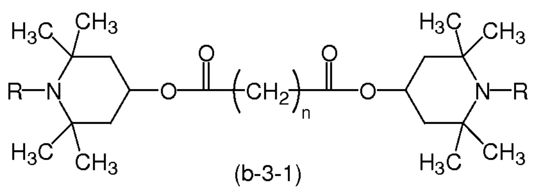

(b-3-1)

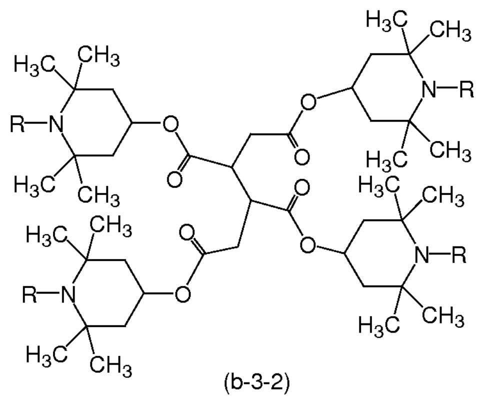

(b-3-2)

In (b-3-1) and (b-3-2), R denotes a hydrogen atom or an alkyl group having 1 to 3 carbons, and in (b-3-1), n denotes an integer of 1 to 10.

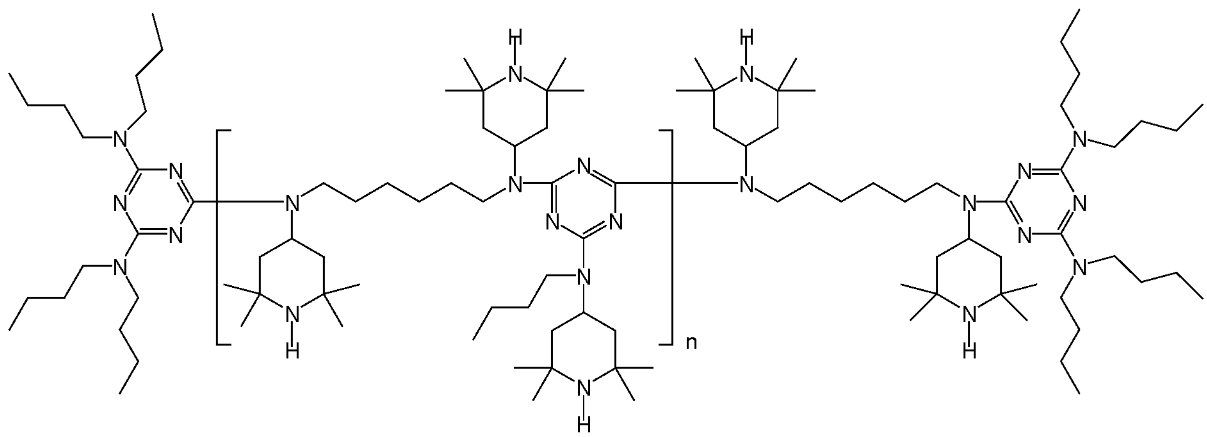

(b-3-3)

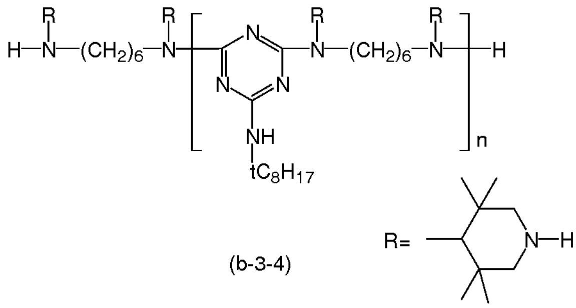

R=

(b-3-4)

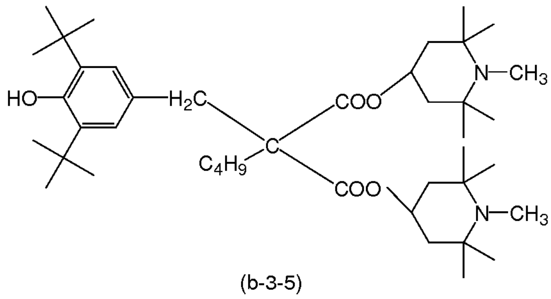

(b-3-5)

As the hindered amine-based polymerization inhibitor, the compounds described above may be used, and examples include CHIMASSORB 2020FDL, CHIMASSORB 944FDL, and TINUVIN 144 (all manufactured by BASF Japan).

In the present invention, as the hydroxy amine-based polymerization inhibitor, (b-3-1) or (b-3-2) may be used.

(Component B-4) Other polymerization inhibitor

The present invention may comprise, as the polymerization inhibitor (Component B), (Component B-4) another polymerization inhibitor. Component B-4 is not particularly limited as long as it is a polymerization inhibitor other than Component B-1 to Component B-3, and examples include a nitroso-based polymerization inhibitor and a phosphite ester-based polymerization inhibitor.

As the nitroso-based polymerization inhibitor there can be cited, for example, 1-nitroso-2-naphthol, 2-nitroso-1-naphthol, nitrosobenzene, and FIRSTCURE ST-1 (tris(*N*-nitroso-*N*-phenylhydroxylamine)ammonium salt, Alvemarle).

As the phosphite ester-based polymerization inhibitor there can be cited, for example, triphenyl phosphite, tris(nonylphenyl phosphite), triethyl phosphite, tris(2-ethylhexyl) phosphite, tridecyl phosphite, tris(tridecyl) phosphite, diphenylmono(2-ethylhexyl) phosphite, diphenylmonodecyl phosphite, diphenylmono(tridecyl) phosphite, dilauryl hydrogen phosphite, tetraphenyldipropylene glycol diphosphite, tetraphenyltetra(tridecyl)pentaerythritol tetraphosphite, tetra(tridecyl)-4,4'-isopropylidenediphenyl diphosphite, trilauryl trithiophosphite, bis(tridecyl)pentaerythritol diphosphite, tristearyl phosphite, distearylpentaerythritol diphosphite, bis(nonylphenyl)pentaerythritol diphosphite, and tris(2,4-di-*t*-butylphenyl) phosphite.

<Amount of (Component B) polymerization inhibitor added >

In the present invention, the sum total of Component B-1 to Component B-3 is preferably 1 to 9 mass % of the entire ink composition. When the sum total of Component B-1 to Component B-3 is within this range, an ink composition having excellent storage stability and excellent curability is obtained.

The sum total of Component B-1 to Component B-3 is more preferably 1 to 6 mass % of the entire ink composition, and yet more preferably 1 to 3 mass %.

The sum total of Component B including the other polymerization inhibitor (Component B-4) is preferably 1 to 10 mass % of the entire ink composition, more preferably 1 to 8 mass %, and yet more preferably 1 to 5 mass %. When the sum total of Component B is within this range, storage stability and curability are excellent.

In the present invention, when the total amount of polymerization inhibitor contained in the inkjet composition is defined as 100 mass %, and relative to the total amount of polymerization inhibitor the content of Component B-1 is (B1), the content of Component B-2 is (B2), and the content of Component B-3 is (B3), (B1) to (B3) preferably satisfy Expressions (1) to (3) below.

$$2 \leq (B1) \leq 95 \qquad \text{Expression (1)}$$

$$3 \leq (B2) \leq 97 \qquad \text{Expression (2)}$$

$$0.1 \leq (B3) \leq 75 \qquad \text{Expression (3)}$$

The total amount of the polymerization inhibitor means the total amount of polymerization inhibitor including

the other polymerization inhibitor (Component B-4) when the ink composition comprises Component B-4. The total of (B1) to (B3) is no greater than 100 mass % of the total amount of polymerization inhibitor, preferably at least 50 mass %, more preferably at least 75 mass %, and yet more preferably at least 80 mass %. When within this range, the ink composition has good storage stability and curability.

When (B1) is within this range, the surface gloss is excellent. When (B2) is within this range, the blocking properties are excellent, and when (B3) is within this range, the discharge properties are good.

(B1) to (B3) more preferably satisfy Expressions (1') to (3') below.

$$4 \leq (B1) \leq 90 \qquad \text{Expression (1')}$$

$$7 \leq (B2) \leq 93 \qquad \text{Expression (2')}$$

$$0.4 \leq (B3) \leq 60 \qquad \text{Expression (3')}$$

The content of Component B-1 relative to the entire ink composition is preferably no greater than 0.3 mass %. When the content is no greater than 0.3 mass % of the ink composition, surface gloss is excellent. The content of Component B-1 is more preferably 0.001 to 0.5 mass %, and yet more preferably 0.01 to 0.3 mass %.

The content of Component B-2 relative to the entire ink composition is preferably 0.01 to 5 mass %, more preferably 0.05 to 3 mass %, and yet more preferably 0.1 to 2 mass %. When the content of Component B-2 is within this range, blocking properties are excellent.

The content of Component B-3 relative to the entire ink composition is preferably 0.01 to 3 mass %, more preferably 0.03 to 2 mass %, and yet more preferably 0.05 to 1.5 mass %. When the content of Component B-3 is within this range, discharge properties are good.

When the ink composition comprises Component B-4, the proportion of Component B-4 relative to the entire ink composition is preferably 0.01 to 5 mass %, more preferably 0.03 to 3 mass %, and yet more preferably 0.05 to 1.5 mass %.

(Component C) Polymerization initiator

The ink composition of the present invention preferably comprises (Component C) a polymerization initiator, and it is preferable for it to comprise (Component C-1) an acylphosphine-based polymerization initiator (hereinafter, also called an 'acylphosphine compound') as Component C. It may comprise (Component C-2) another polymerization initiator.

(Component C-1) Acylphosphine-based polymerization initiator

The ink composition of the present invention comprises (Component C-1) an acylphosphine-based polymerization initiator (an acylphosphine compound) as the polymerization initiator. When the ink composition comprises Component C-1, excellent curability can be obtained.

The acylphosphine-based polymerization initiator (Component C-1) is not particularly limited, and known compounds may be used. Preferred

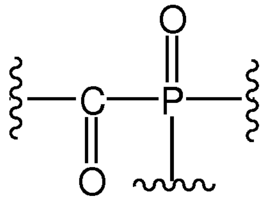
(c-1)

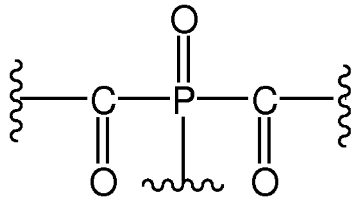
(c-2)

examples thereof include acylphosphine oxide compounds described in paragraphs 0080 to 0098 of JP-A-2009-096985, and among them a compound having a structure represented by Formula (c-1) or (c-2) in the molecular structure is more preferable.

(In the Formulae, the wavy line portions denote a position of bonding to another structure.)

The acylphosphine oxide compound is particularly preferably a compound having a chemical structure represented by Formula (c-3) or (c-4).

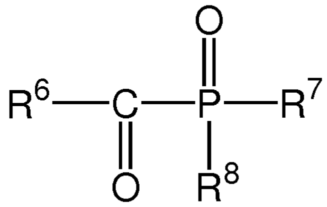

( c - 3 )

(In Formula (c-3), $R^6$, $R^7$, and $R^8$ independently denote an aromatic hydrocarbon group, which may have a methyl group or an ethyl group as a substituent.)

With regard to a monoacylphosphine oxide compound represented by Formula (c-3), it is preferable that $R^6$ to $R^8$ are phenyl groups, which may have a methyl group as a substituent, and it is more preferable that $R^7$ and $R^8$ are phenyl groups and $R^6$ is a phenyl group having 1 to 3 methyl groups.

Among them, as the monoacylphosphine oxide compound represented by Formula (c-3), 2,4,6-trimethylbenzoyldiphenylphosphine oxide (Darocur TPO manufactured by Ciba Specialty Chemicals, Lucirin TPO manufactured by BASF) is preferable.

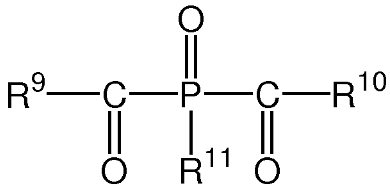

( c - 4 )

(In Formula (c-4), $R^9$, $R^{10}$ and $R^{11}$ independently denote an aromatic hydrocarbon group, which may have a methyl group or an ethyl group as a substituent.)

With regard to a bisacylphosphine oxide compound represented by Formula (c-4), it is preferable that $R^9$ to $R^{11}$ are phenyl groups, which may have a methyl group as a substituent, and it is more preferable that $R^{11}$ is a phenyl group and $R^9$ and $R^{10}$ are phenyl groups having 1 to 3 methyl groups.

Among them, as the bisacylphosphine oxide compound represented by Formula (c-4), bis(2,4,6-trimethylbenzoyl)phenylphosphine oxide (IRGACURE 819, manufactured by BASF Japan) is preferable.

From the viewpoint of curability, the content of (Component C-1) the acylphosphine-based polymerization initiator of the ink composition of the present invention is preferably 0.1 to 15 mass %, more preferably 5 to 15 mass %, and yet more preferably 8 to 13 mass % relative to the entire mass of the ink composition.

(Component C-2) Other polymerization initiator

Examples of the other polymerization initiator include an α-amino alkylphenone compound, an aromatic ketone, an aromatic onium salt compound, an organic peroxide, a thio compound, a hexaarylbiimidazole compound, a ketoxime ester compound, a borate compound, an azinium compound, a metallocene compound, an active ester compound, and a compound having a carbon halogen bond.

As the other polymerization initiator, a known polymerization initiator other than Component C-1, preferably a radical polymerization initiator, may be used, and examples thereof include those described in paragraphs 0090 to 0116 of JP-A-2009-185186.

Furthermore, as the other polymerization initiator, a thioxanthone compound or a thiochromanone compound may be used, and examples include compounds described in paragraphs 0064 to 0068 of JP-A-2010-126644.

The polymerization initiator in the present invention includes not only a compound that generates a polymerization-initiating species by absorbing external energy such as actinic radiation but also a compound that promotes decomposition of a polymerization initiator by absorbing specific actinic radiation (a so-called sensitizer).

The ink composition of the present invention may employ a known sensitizer as the polymerization initiator other than Component C-1.

Examples of the sensitizer include a polynuclear aromatic compound (e.g. pyrene, perylene, triphenylene, 2-ethyl-9,10-dimethoxyanthracene, etc.), a xanthene (e.g. fluorescein, eosin, erythrosine, Rhodamine B, Rose Bengal, etc.), a cyanine (e.g. thiacarbocyanine, oxacarbocyanine, etc.), a merocyanine (e.g. merocyanine, carbomerocyanine, etc.), a thiazine (e.g. thionine, methylene blue, toluidine blue, etc.), an acridine (e.g. acridine orange, chloroflavine, acriflavine, etc.), an anthraquinone (e.g. anthraquinone, etc.), a squarium (e.g. squarium, etc.), and a coumarin (e.g. 7-diethylamino-4-methylcoumarin, etc.).

With regard to the sensitizer, one type thereof may be used on its own or two or more types may be used in combination.
From the viewpoint of curability and hue of a cured film the content of polymerization initiator, including Component C-1, in the ink composition of the present invention is, with respect to the total mass of the ink composition, preferably 1.5 to 30 mass %, more preferably 2 to 26 mass %, yet more preferably 5 to 22 mass %, and particularly preferably 10 to 18 mass %.

(Component D) Surface tension adjusting agent

The ink composition of the present invention preferably comprises (Component D) a surface tension adjusting agent. The surface tension adjusting agent referred to here is not particularly limited as long as it is a compound that has the function of lowering the surface tension of the ink composition, and it preferably comprises (Component D-1) a silicone compound comprising an ethylenically unsaturated double bond in the molecule as the surface tension adjusting agent (Component D).

(Component D-1) Silicone compound comprising ethylenically unsaturated double bond in molecule

The ink composition of the present invention preferably comprises (Component D-1) a silicone compound comprising an ethylenically unsaturated double bond in the molecule (hereinafter, also called a 'polymerizable silicone compound') as Component D. The polymerizable silicone compound is a compound comprising an ethylenically unsaturated double bond and a silicone chain.
Examples of a group having an ethylenically unsaturated double bond include an acryloxy group, a methacryloxy group, a vinyl group, an *N*-vinyl group, an acrylamide group, and an allyl group. Among them, an acryloxy group, a methacryloxy group, a vinyl group, and an allyl group are preferable, and a methacryloxy group and an allyl group are more preferable. Using a compound having the group having an ethylenically unsaturated double bond enables an ink composition that gives excellent anti-blocking properties and excellent stretchability for a cured coating to be obtained.
With regard to the ethylenically unsaturated double bond possessed by the polymerizable silicone compound, there may be only one type, or two or more different types may be used in combination.
Furthermore, it is preferable for the number of ethylenically unsaturated double bonds in the molecule to be at least 2, more preferably at least 4, yet more preferably at least 6, and particularly preferably at least 10. Due to there being a large number of functional groups, the hardness of the outermost surface of the coating increases, and good surface curability and anti-blocking properties can be obtained.
The silicone chain is preferably a silicone chain having at least a unit structure represented by Formula (1) below.

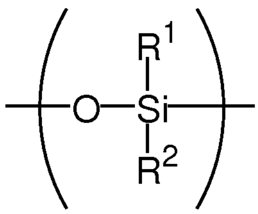

( 1 )

In Formula (1), $R^1$ and $R^2$ independently denote a phenyl group or an optionally branched alkyl group having 1 to 18 carbons.
It is preferable that at least one of $R^1$ and $R^2$ in Formula (1) is a methyl group, and it is more preferable that both $R^1$ and $R^2$ are methyl groups.
Examples of the polymerizable silicone compound that can suitably be used in the present invention include a modified silicone compound represented by Formula (2-1) or Formula (2-2) below. It is preferably a modified silicone compound represented by Formula (2-2).

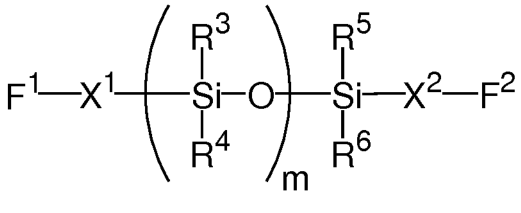

( 2 - 1 )

$R^7$-[A][B]-$SiR^8_3$ (2 - 2)

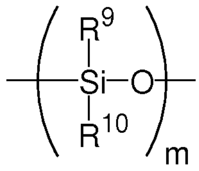

[ A ]

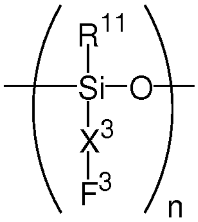

[ B ]

In Formulae (2-1) and (2-2), $R^3$, $R^4$, $R^5$, $R^6$, $R^7$, $R^8$, $R^9$, $R^{10}$, and $R^{11}$ independently denote a phenyl group or an optionally branched alkyl group having 1 to 18 carbons. $X^1$, $X^2$, and $X^3$ independently denote a single bond or a divalent linking group (organic group), m denotes an integer of at least 0, and n denotes an integer of at least 1. $F^1$ and $F^3$ independently denote a group having an ethylenically unsaturated double bond. $F^2$ denotes a group having an ethylenically unsaturated double bond, an optionally substituted alkyl group having 1 to 18 carbons, or a phenyl group.

In a compound represented by Formula (2-1) or Formula (2-2), when there are a plurality of groups selected from the group consisting of $R^3$, $R^4$, $R^9$, $R^{10}$, $R^{11}$, $X^1$, $X^2$, $X^3$, and $F^3$, they may be identical groups or different groups.

The three $R^8$s may be identical to or different from each other.

In Formula (2-2), siloxane units [A][B] denote that units represented by Formula [A] and/or Formula [B] are freely linked, and units represented by Formula [A] and/or Formula [B] may be present randomly in the siloxane chain or may be present as a block. Furthermore, when there are a plurality of units represented by Formula [A] present in a compound represented by Formula (2-2), they may have the same structure or different structures. This also applies to a case in which there are a plurality of units represented by Formula [B] present.

In Formulae (2-1) and (2-2), $R^3$, $R^4$, $R^5$, $R^6$, $R^7$, $R^8$, $R^9$, $R^{10}$, and $R^{11}$ independently preferably denote a phenyl group, a methyl group, or an ethyl group, and more preferably a methyl group.

In Formulae (2-1) and (2-2), $X^1$, $X^2$, and $X^3$ are independently preferably a single bond, a polyethylene glycol chain, a polypropylene glycol chain, a polytetraethylene glycol chain, a polyacrylate chain, a polymethacrylate chain, a polycaprolactone chain, a polycaprolactam chain, or a chain in which two or more of the above chains are combined, and more preferably comprise at least a polyethylene glycol chain. When a polyethylene glycol chain is employed, the localization ratio of the silicone compound on the surface of a cured coating is high, thus further enhancing the effect of improving the anti-blocking properties.

The molecular weight of the polymerizable silicone compound is preferably 500 to 100,000, more preferably 1,000 to 50,000, and particularly preferably 10,000 to 30,000. In the above-mentioned range, good resistance to hardening and good anti-blocking properties are exhibited, and the ink composition can be maintained at a low viscosity.

Modified silicone compounds represented by Formula (2-1) that can suitably be used in the present invention are listed below.

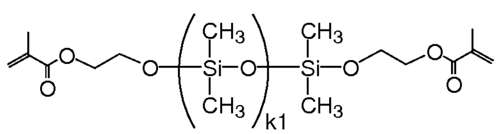

( 2 - 1 - A )

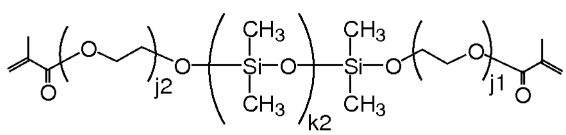

( 2 - 1 - B )

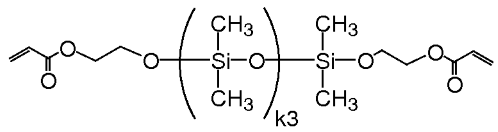

( 2 - 1 - C )

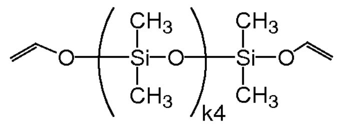

( 2 - 1 - D )

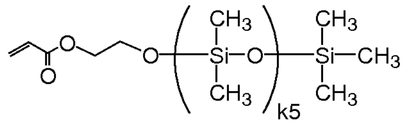

( 2 - 1 - E )

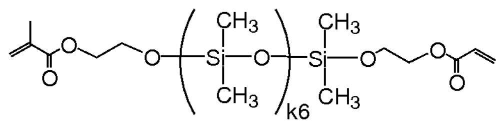

( 2 - 1 - F )

Modified silicone compounds represented by Formula (2-2) that can suitably be used in the present invention are listed below. Ph denotes a phenyl group.

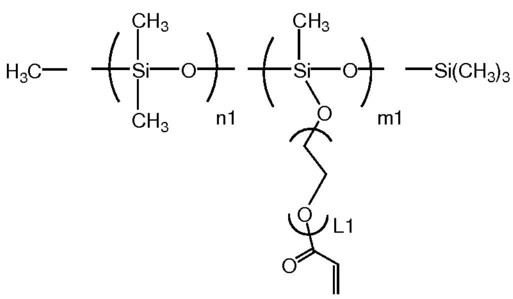

( 2 - 2 - A )

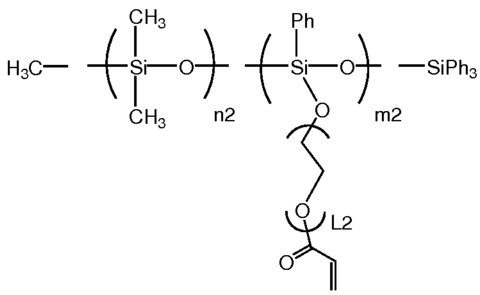

( 2 - 2 - B )

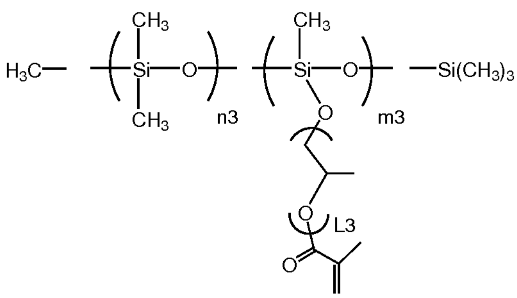

( 2 - 2 - C )

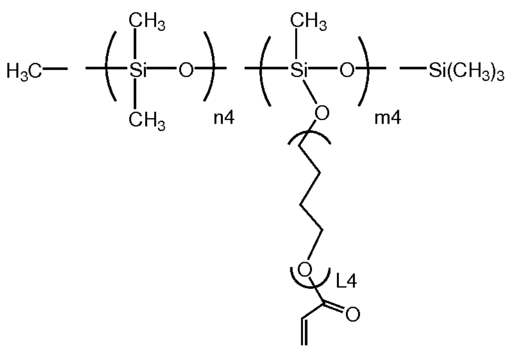

( 2 - 2 - D )

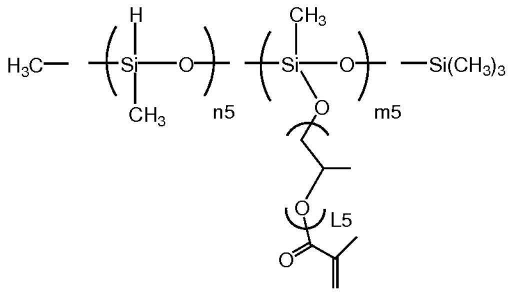

(2-2-E)

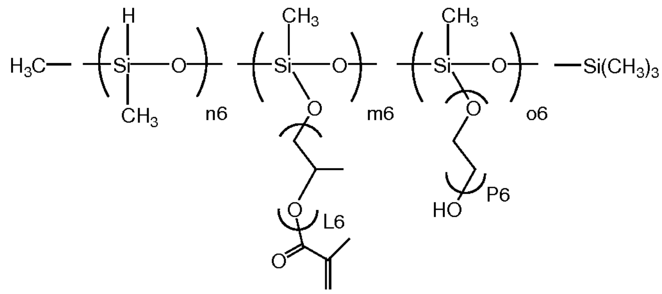

(2-2-F)

In (2-2-A) to (2-2-F) above, n1 to n6 independently denote an integer of at least 0. k1 to k6, j1 to j2, m1 to m6, L1 to L6, o6, and P6 independently denote an integer of at least 1.

As a preferred configuration of the polymerizable silicone compound in the present invention, a polymer having a unit structure represented by Formula (3) below can be cited.

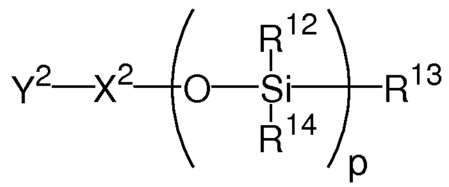

(3)

In Formula (3), $Y^2$ denotes a high molecular weight chain, $X^2$ denotes a single bond or a divalent linking group, p denotes an integer of at least 1, and $R^{12}$, $R^{13}$, and $R^{14}$ independently denote a hydrogen atom, a phenyl group, or an optionally branched alkyl group having 1 to 18 carbons.

When there are a plurality of $R^{12}$s and $R^{14}$s in a compound represented by Formula (3), the plurality of $R^{12}$s and the plurality of $R^{14}$s each may be identical groups or different groups.

The groups represented by $R^{12}$, $R^{13}$, and $R^{14}$ may have a substituent such as a hydroxyl group, a mercapto group, an epoxy group, or an amino group as a substituent.

In Formula (3), examples of the high molecular weight chain denoted by $Y^2$ include an acrylic resin, a styryl resin, a polyester resin, a polyurethane resin, a polycarbonate resin, a polyamide resin, a polyacetal resin, a phenol/formaldehyde condensation resin, a polyvinylphenol resin, a maleic anhydride/$\alpha$-olefin resin, and an $\alpha$-hetero substituted acrylic resin. Among them, as the high molecular weight chain, an acrylic resin, a styryl resin, a polyester resin, and a polyurethane resin are preferable, and an acrylic resin or a methacrylic resin is more preferable.

A polymerizable silicone compound in which the high molecular weight chain denoted by $Y^2$ is an acrylic resin or a methacrylic resin is preferably obtained by copolymerization of a monomer represented by Formula (4) below with another radically polymerizable monomer.

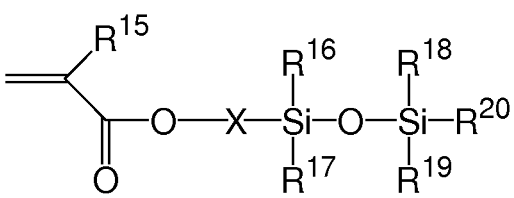

(4)

In Formula (4), $R^{15}$ denotes a hydrogen atom, a halogen atom, an optionally substituted methyl group, or an optionally substituted ethyl group, and $R^{16}$, $R^{17}$, $R^{18}$, $R^{19}$, and $R^{20}$ independently denote a hydrogen atom, a phenyl group, or an optionally branched alkyl group having 1 to 18 carbons.

The groups represented by $R^{16}$, $R^{17}$, $R^{18}$, $R^{19}$, and $R^{20}$ may have a substituent such as a hydroxyl group, a mercapto group, an epoxy group, or an amino group.

Examples of a polymerizable silicone compound in which the high molecular weight chain denoted by $Y^2$ in Formula (3) above that is suitably used in the present invention is an acrylic resin or a methacrylic resin are listed below.

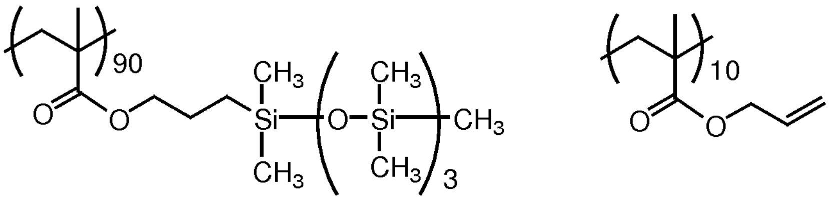

( P - 1 )
Mw 20,000

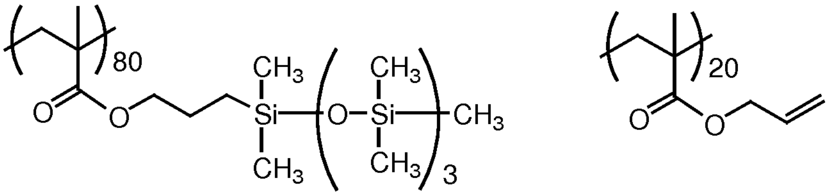

( P - 2 )
Mw 18,000

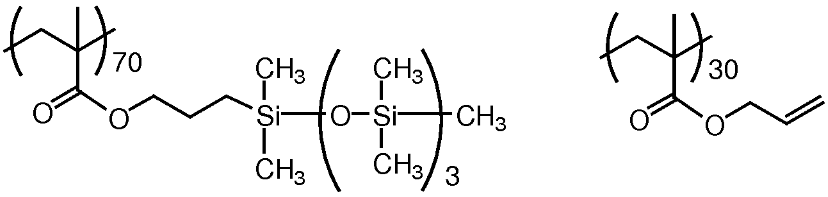

( P - 3 )
Mw 15,000

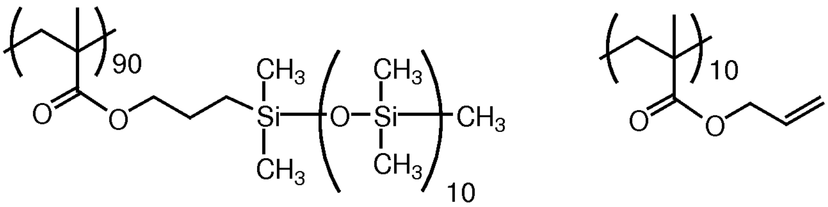

( P - 4 )
Mw 17,000

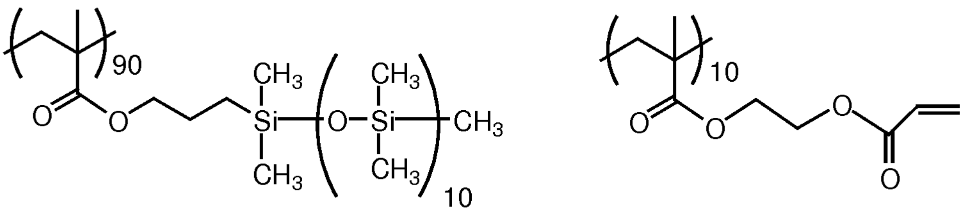

( P - 5 )
Mw 22,000

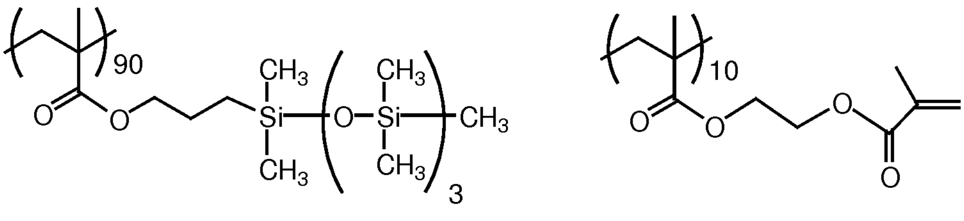

( P - 6 )
Mw 18,000

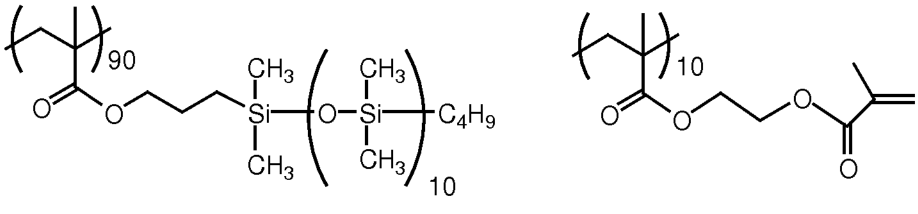

( P - 7 )
Mw 18000

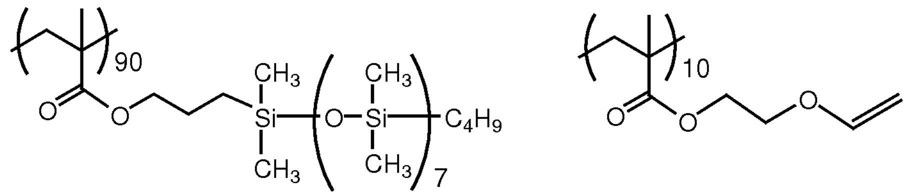

(P - 8)
Mw 15000

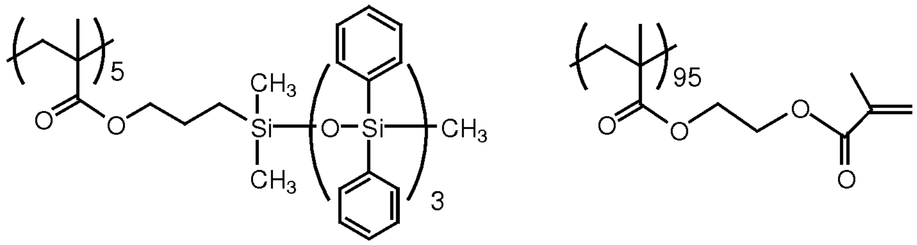

(P - 9)
Mw 12000

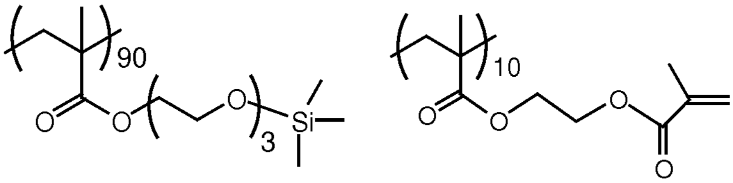

(P - 10)
Mw 17000

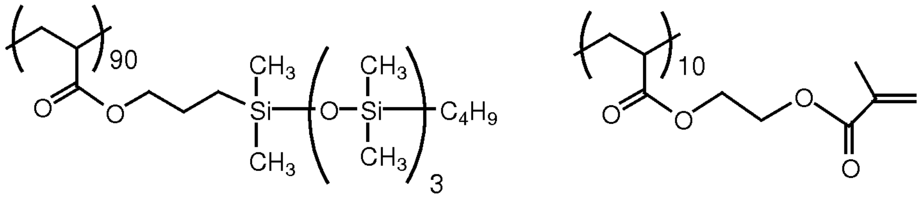

(P - 11)
Mw 12000

In the present invention, as the polymerizable silicone compound, the commercial materials below may be used.

Ebecryl 350 and Ebecryl 4842 (both manufactured by UCB chemicals), PERENOL S-5 (manufactured by Cognis), RC149, RC300, RC450, RC709, RC710, RC711, RC720, and RC802 (all manufactured by Goldschmidt Chemical Corporation), FM0711, FM0721, FM0725, and PS583 (all manufactured by Chisso Corporation), KP-600, X-22-164, X-22-164AS, X-22-164A, X-22-164B, X-22-164C, and X-22-164E (all manufactured by Shin-Etsu Chemical Co., Ltd.), BYK UV3500, BYK UV3570, and BYK Silclean 3700 (all manufactured by BYK Chemie), TEGO Rad 2100, TEGO Rad 2200N, TEGO Rad 2250N, TEGO Rad 2300, TEGO Rad 2500, TEGO Rad 2600, and TEGO Rad 2700 (all manufactured by Degussa), and DMS-V00, DMS-V03, DMS-V05, DMS-V21, DMS-V22, DMS-V25, DMS-V25R, DMS-V31, DMS-V33, DMS-V35, DMS-V41, DMS-V42, DMS-V46, DMS-V52, DMS-V25R, DMS-V35R, PDV-0325, PDV 0331, PDV 0341, PDV 0346, PDV 0525, PDV 0541, PDV 1625, PDV 1625, PDV 1631, PDV 1635, PDV 1641, PDV 2331, PDV 2335, PMV-9925, PVV-3522, FMV-4031, EDV-2025, VDT-123, VDT-127, VDT-131, VDT-153, VDT-431, VDT-731, VDT-954, VDS-2513, VDV-0131, VGM-021, VGP-061, VGF-991, VQM-135, VQM-146, VQX-221, VMS-005, VMS-T11, VTT-106, MTV-124, VAT-4326, VBT-1323, VPT-1323, VMM-010, VEE-005, and VPE-005 (all manufactured by Gelest, Inc.).

In the present invention, with regard to the polymerizable silicone compound, one type may be used on its own or two or more types may be used in combination.

In the present invention, the proportion of the polymerizable silicone compound in the ink composition is, relative to the entire amount of the ink composition, preferably at least 0.01 mass % but no greater than 10.0 mass %, more preferably at least 0.05 mass % but no greater than 5.0 mass %, and yet more preferably at least 0.1 mass % but no greater than 3.0 mass %.

The polymerizable silicone compound also corresponds to the polymerizable compound (Component A). Therefore, the preferred total amount, etc. of (Component A) includes the polymerizable silicone compound.

(Component D-2) Surfactant

The ink composition of the present invention may comprise (Component C-2) a surfactant as the surface tension adjusting agent in order to impart discharge properties that are stable for a long period of time.

Examples of the surfactant include a silicone-based surfactant (excluding a silicone compound comprising an ethylenically unsaturated double bond in the molecule), a fluorine-based surfactant, and other surfactants.
As a surfactant other than silicone-based and fluorine-based surfactants, those described in JP-A-62-173463 and JP-A-62-183457 can be cited. Examples thereof include an anionic surfactant such as a dialkyl sulfosuccinate salt, an alkylnaphthalene sulfonic acid salt, or a fatty acid salt, a nonionic surfactant such as a polyoxyethylene alkyl ether, a polyoxyethylene alkyl allyl ether, an acetylene glycol, or a polyoxyethylene-polyoxypropylene block copolymer, and a cationic surfactant such as an alkylamine salt or a quaternary ammonium salt.

(Other component)

The ink composition of the present invention may comprise as necessary, in addition to the above-mentioned components, a co-sensitizer, a UV absorber, an antioxidant, an antifading agent, a conductive salt, a solvent, a polymer compound, a basic compound, a leveling additive, a matting agent and, for adjusting film physical properties, a polyester resin, polyurethane resin, vinyl resin, acrylic resin, rubber resin, or wax, etc. As the other components, known compounds may be used and examples thereof include those described in JP-A-2009-221416.
When the ink composition of the present invention is used as a colored ink composition, it preferably comprises (Component E) a colorant.

(Component E) Colorant

The colorant that can be used in the present invention is not particularly limited, but a pigment and an oil-soluble dye that have excellent weather resistance and rich color reproduction are preferable, and it may be selected from any known coloring agent such as a soluble dye. It is preferable that the colorant does not function as a polymerization inhibitor in a polymerization reaction, which is a curing reaction. This is because the sensitivity of the curing reaction by actinic radiation should not be degraded.

(Pigment)

The pigment that can be used in the present invention is not particularly limited and, for example, organic and inorganic pigments having the numbers below described in the Color Index may be used.
That is, as a red or magenta pigment, Pigment Red 3, 5, 19, 22, 31, 38, 42, 43, 48:1, 48:2, 48:3, 48:4, 48:5, 49:1, 53:1, 57:1, 57:2, 58:4, 63:1, 81, 81:1, 81:2, 81:3, 81:4, 88, 104, 108, 112, 122, 123, 144, 146, 149, 166, 168, 169, 170, 177, 178, 179, 184, 185, 208, 216, 226, or 257, Pigment Violet 3, 19, 23, 29, 30, 37, 50, or 88, and Pigment Orange 13, 16, 20, or 36;
as a blue or cyan pigment, Pigment Blue 1, 15, 15:1, 15:2, 15:3, 15:4, 15:6, 16, 17-1, 22, 27, 28, 29, 36, or 60;
as a green pigment, Pigment Green 7, 26, 36, or 50;
as a yellow pigment, Pigment Yellow 1, 3, 12, 13, 14, 17, 34, 35, 37, 55, 74, 81, 83, 93, 94, 95, 97, 108, 109, 110, 120, 137, 138, 139, 153, 154, 155, 157, 166, 167, 168, 180, 185, or 193;
as a black pigment, Pigment Black 7, 28, or 26;
as a white pigment, Pigment White 6, 18, or 21, etc. may be used according to the intended application.

(Oil-soluble dye)

The oil-soluble dye that can be used in the present invention is explained below.
The oil-soluble dye that can be used in the present invention means a dye that is substantially insoluble in water. Specifically, the solubility in water at 25°C (the mass of dye that can be dissolved in 100 g of water) is no greater than 1 g, preferably no greater than 0.5 g, and more preferably no greater than 0.1 g. Therefore, the oil-soluble dye means a so-called water-insoluble pigment or an oil-soluble dye, and among these the oil-soluble dye is preferable.
Among the oil-soluble dyes that can be used in the present invention, as a yellow dye, any may be used. Examples thereof include aryl or heteryl azo dyes having a coupling component such as a phenol, a naphthol, an aniline, a pyrazolone, a pyridone, or an open-chain active methylene compound; azomethine dyes having a coupling component such as an open-chain active methylene compound; methine dyes such as benzylidene dyes and monomethineoxonol dyes; quinone dyes such as naphthoquinone dyes and anthraquinone dyes; and other dye species such as quinophthalone dyes, nitro/nitroso dyes, acridine dyes, and acridinone dyes.
Among the above-mentioned oil-soluble dyes that can be used in the present invention, as a magenta dye, any may be used. Examples thereof include aryl or heteryl azo dyes having a coupling component such as a phenol, a naphthol, or an aniline; azomethine dyes having a coupling component such as a pyrazolone or a pyrazolotriazole; methine dyes such as arylidene dyes, styryl dyes, merocyanine dyes, and oxonol dyes; carbonium dyes such as diphenylmethane dyes, triphenylmethane dyes, and xanthene dyes; quinone dyes such as naphthoquinones, anthraquinones, or anthrapyridones; and condensed polycyclic dyes such as dioxazine dyes.

Among the oil-soluble dyes that can be used in the present invention, as a cyan dye, any may be used. Examples thereof include indoaniline dyes, indophenol dyes, and azomethine dyes having a coupling component such as a pyrrolotriazole; polymethine dyes such as cyanine dyes, oxonol dyes, and merocyanine dyes; carbonium dyes such as diphenylmethane dyes, triphenylmethane dyes, and xanthene dyes; phthalocyanine dyes; anthraquinone dyes; aryl or heteryl azo dyes having a coupling component such as a phenol, a naphthol, or an aniline; and indigo/thioindigo dyes.

The above-mentioned dyes may be dyes that exhibit respective colors of yellow, magenta, and cyan only after a part of the chromophore dissociates, and in that case the counter cation may be an inorganic cation such as an alkali metal or ammonium, may be an organic cation such as pyridinium or a quaternary ammonium salt, or may be a polymer cation having the above cation as a partial structure.

Although not limited to the following, preferred specific examples thereof include C. I. Solvent Black 3, 7, 27, 29, and 34; C. I. Solvent Yellow 14, 16, 19, 29, 30, 56, 82, 93, and 162; C. I. Solvent Red 1, 3, 8, 18, 24, 27, 43, 49, 51, 72, 73, 109, 122, 132, and 218; C. I. Solvent Violet 3; C. I. Solvent Blue 2, 11, 25, 35, 38, 67, and 70; C. I. Solvent Green 3 and 7; and C. I. Solvent Orange 2.

Particularly preferred examples thereof include Nubian Black PC-0850, Oil Black HBB, Oil Yellow 129, Oil Yellow 105, Oil Pink 312, Oil Red 5B, Oil Scarlet 308, Vali Fast Blue 2606, Oil Blue BOS (manufactured by Orient Chemical Industries, Ltd.), Aizen Spilon Blue GNH (manufactured by Hodogaya Chemical Co., Ltd.), Neopen Yellow 075, Neopen Magenta SE1378, Neopen Blue 808, Neopen Blue FF4012, and Neopen Cyan FF4238 (manufactured by BASF).

In the present invention, the oil-soluble dye may be used singly or in a combination of two or more types.

Furthermore, when the oil soluble dye is used as a colorant, another colorant such as a water-soluble dye, a disperse dye, or a pigment may be contained as necessary in a range that does not interfere with the effects of the present invention.

In the present invention, a disperse dye may be used in a range that enables it to be dissolved in a water-immiscible organic solvent. Disperse dyes generally include water-soluble dyes, but in the present invention it is preferable for the disperse dye to be used in a range such that it dissolves in a water-immiscible organic solvent. Specific preferred examples of the disperse dye include C. I. Disperse Yellow 5, 42, 54, 64, 79, 82, 83, 93, 99, 100, 119, 122, 124, 126, 160, 184:1, 186, 198, 199, 201, 204, 224, and 237; C. I. Disperse Orange 13, 29, 31:1, 33, 49, 54, 55, 66, 73, 118, 119, and 163; C. I. Disperse Red 54, 60, 72, 73, 86, 88, 91, 92, 93, 111, 126, 127, 134, 135, 143, 145, 152, 153, 154, 159, 164, 167:1, 177, 181, 204, 206, 207, 221, 239, 240, 258, 277, 278, 283, 311, 323, 343, 348, 356, and 362; C. I. Disperse Violet 33; C. I. Disperse Blue 56, 60, 73, 87, 113, 128, 143, 148, 154, 158, 165, 165:1, 165:2, 176, 183, 185, 197, 198, 201, 214, 224, 225, 257, 266, 267, 287, 354, 358, 365, and 368; and C. I. Disperse Green 6:1 and 9.

It is preferable that the colorant is added to the ink composition and then dispersed in the ink to an appropriate degree. For dispersion of the colorant, for example, a dispersing machine such as a ball mill, a sand mill, an attritor, a roll mill, an agitator, a Henschel mixer, a colloidal mill, an ultrasonic homogenizer, a pearl mill, a wet type jet mill, or a paint shaker may be used.

The colorant may be added directly to the ink composition, but in order to improve dispersibility it may be added in advance to a solvent or a dispersing medium such as a radically polymerizable compound used in the present invention.

In the present invention, in order to avoid the problem of the solvent resistance being degraded when the solvent remains in the cured image and the VOC (Volatile Organic Compound) problem of the residual solvent, it is preferable to add the colorant in advance to a dispersing medium such as a radically polymerizable compound. As a polymerizable compound used, it is preferable in terms of dispersion suitability to select a monomer having low viscosity.

These colorants may be used by appropriately selecting one type or two or more types according to the intended purpose of the ink composition.

When a colorant such as a pigment that is present as a solid in the ink composition is used, it is preferable for the colorant, the dispersant, the dispersing medium, dispersion conditions, and filtration conditions to be set so that the average particle size of colorant particles is preferably 0.005 to 0.5 μm, more preferably 0.01 to 0.45 μm, and yet more preferably 0.015 to 0.4 μm. By such control of particle size, clogging of a head nozzle can be suppressed, and the ink storage stability, the transparency, and the curing sensitivity can be maintained.

The content of the colorant in the ink composition is appropriately selected according to the color and the intended purpose, and is preferably 0.01 to 30 mass % relative to the mass of the entire ink composition.

(Component F) Dispersant

In the present invention, it is preferable for (Component F) a dispersant to be contained. In particular, when the ink composition of the present invention is used as a colored ink composition, for the purpose of improving dispersibility of a colorant, it is preferable for it to comprise a dispersant (Component F).

As the dispersant that can be used in the present invention, a polymeric dispersant is preferable. The 'polymeric dispersant' referred to in the present invention means a dispersant having a weight-average molecular weight of 1,000 or greater.

Examples of the polymeric dispersant include polymeric dispersants such as DISPERBYK-101, DISPERBYK-102, DISPERBYK-103, DISPERBYK-106, DISPERBYK-111, DISPERBYK-161, DISPERBYK-162, DISPERBYK-163, DISPERBYK-164, DISPERBYK-166, DISPERBYK-167, DISPERBYK-168, DISPERBYK-170, DISPERBYK-171, DISPERBYK-174, and DISPERBYK-182 (manufactured by BYK Chemie), EFKA4010, EFKA4046, EFKA4080, EFKA5010, EFKA5207, EFKA5244, EFKA6745, EFKA6750, EFKA7414, EFKA745, EFKA7462, EFKA7500, EFKA7570, EFKA7575, and EFKA7580 (manufactured by EFKA Additives), Disperse Aid 6, Disperse Aid 8, Disperse Aid 15, and Disperse Aid 9100 (manufactured by San Nopco Limited); various types of SOLSPERSE dispersants such as Solsperse 3000, 5000, 9000, 12000, 13240, 13940, 17000, 22000, 24000, 26000, 28000, 32000, 36000, 39000, 41000, and 71000 (manufactured by Noveon); Adeka Pluronic L31, F38, L42, L44, L61, L64, F68, L72, P95, F77, P84, F87, P94, L101, P103, F108, L121, and P-123 (manufactured by Adeka Corporation), lonet S-20 (manufactured by Sanyo Chemical Industries, Ltd.), and Disparlon KS-860, 873SN, and 874 (polymeric dispersant), #2150 (aliphatic poly carboxylic acid), and #7004 (polyether ester type) (manufactured by Kusumoto Chemicals, Ltd.).

The content of the dispersant in the ink composition of the present invention is appropriately selected according to the intended purpose, and is generally preferably 0.05 to 15 mass % relative to the mass of the entire ink composition.

<Properties of ink composition>

In the present invention, the ink composition has a viscosity at 25°C of preferably no more than 40 mPa·s, more preferably 5 to 40 mPa·s, and yet more preferably 7 to 30 mPa·s, in consideration of discharge properties. Furthermore, the viscosity of the ink composition at the discharge temperature (preferably 25°C to 80°C, and more preferably 25°C to 50°C) is preferably 3 to 15 mPa·s, and more preferably 3 to 13 mPa·s. With regard to the ink composition of the present invention, it is preferable that its component ratio is appropriately adjusted so that the viscosity is in the above-mentioned range. When the viscosity at room temperature (25°C) is set to be high, even when a porous recording medium (support) is used, penetration of the ink composition into the recording medium can be prevented, and uncured monomer can be reduced. Furthermore, ink spreading when droplets of ink composition have landed can be suppressed, and as a result there is the advantage that the image quality is improved.

In the present invention, the viscosity of the ink is preferably measured using a Brookfield LVDV-I (Brookfield) type B viscometer under conditions of 25°C at a rotor rotational speed of 20 rpm.

The surface tension at 25°C of the ink composition of the present invention is preferably no greater than 40 mN/m, more preferably no greater than 35 mN/m, and yet more preferably no greater than 30 mN/m from the viewpoint of wettability. From the viewpoint of spreading and penetration, it is preferably at least 20 mN/m, and more preferably at least 23 mN/m.

As a method for measuring the surface tension at 25°C of the ink composition, a known method may be used, but it is preferable to carry out measurement by a suspended ring method or the Wilhelmy method. Measurement is carried out using a CBVP-Z automated surface tensiometer manufactured by Kyowa Interface Science Co., Ltd.

<Clear layer-forming ink composition>

The ink composition of the present invention may be a colored ink composition, but it is particularly suitable as a clear layer-forming ink composition.

Since the radiation-curable inkjet ink does not contain a solvent or has a very small solvent content, it is not necessary to make the solvent penetrate into a recording medium, the ink composition can be cured in a very short period of time, and an image with little spreading can be obtained regardless of the type of recording medium. On the other hand, there is the problem that asperities easily occur on an image surface, the image becomes matte, and the gloss easily deteriorates. In order to tackle this problem, providing a clear layer after image formation for the purpose of improving the surface gloss of a printed material or improving the abrasion resistance has been considered, and the ink composition of the present invention is particularly suitable as an ink composition for forming such a clear layer.

The clear layer is required to have transparency and surface gloss, and when the ink composition is used for forming a clear layer, it does not comprise (Component E) a colorant, but even if a colorant is contained, its content is preferably no greater than 1 mass %, more preferably no greater than 0.5 mass %, yet more preferably no greater than 0.1 mass %, and particularly preferably zero. Since the clear layer-forming ink composition has high light transparency, it easily cures with a small amount of light, and it has been difficult to maintain storage stability.

In particular, as described above, due to it comprising the divinyl ether compound (Component A-1) as the polymerizable compound (Component A), high surface gloss is obtained, but it has been found that due to it comprising the divinyl ether compound, pack storage stability becomes poor, and the viscosity easily increases.

When an LED is used for radiation, in order to exhibit high curability with irradiation by means of an LED, it is necessary to implement a design such that long wavelength UV is absorbed, and it has been found that ink composition remaining in an inkjet head, etc. cures with sunlight or a fluorescent lamp, thus causing problems with head clogging, etc.
Due to the inkjet ink composition of the present invention comprising Component A and Component B-1 to Component B-3, pack storage stability is excellent, head clogging is suppressed, and discharge stability is excellent. Such effects are suitable particularly when used as a clear layer-forming ink composition.
When the ink composition of the present invention is used as a clear layer-forming ink composition, it is preferably an ink for forming a clear layer applied to an upper layer of a colored image layer (lower layer). Furthermore, an ink composition for forming a colored image layer (lower layer) is not particularly limited, but it preferably comprises a monomer having a solubility parameter of at least 19 in an amount of at least 50 mass % of the entire ink composition.

[Colored ink composition]

When the ink composition of the present invention is used as a clear layer-forming ink composition, a colored ink for forming an image formation layer as a lower layer is explained below.
The colored ink composition preferably comprises a monomer having a solubility parameter (SP value) of at least 19 in an amount of at least 50 mass % of the entire ink composition, more preferably 50 to 95 mass %, and particularly preferably 60 to 90 mass %.
Due to it comprising a monomer having an SP value of at least 19 in an amount of at least 50 mass %, curability becomes good, and an image after forming a clear layer has excellent surface gloss.
The solubility parameter (SP value) in the present invention is a value expressed as the square root of the molecular aggregation energy. The SP value is described in the Polymer Handbook (Second Edition) Chapter IV Solubility Parameter Values, and this value is defined as the SP value in the present invention. The units are $(MPa)^{1/2}$, representing the value at 25°C.
Where no data are given, a value calculated by a method described in R. F. Fedors, Polymer Engineering Science, 14, p 147 to 154 (1974) is used as the SP value in the present invention.

(Inkjet recording method)

The inkjet recording method of the present invention comprises (a) a step of discharging the ink composition of the present invention above a recording medium and (b) a step of irradiating the discharged ink composition with actinic radiation to thus cure the ink composition. The inkjet recording method of the present invention is a method for forming an image or a clear layer by means of an ink composition cured above a recording medium due to it comprising step (a) and step (b).
When it is used for forming a clear layer, the method preferably comprises, in order, (a1) a step of discharging a colored ink composition above a recording medium, (a2) a step of discharging the clear layer-forming ink composition of the present invention above the recording medium, and (b) a step of irradiating the discharged ink composition with actinic radiation to thus cure the ink composition, and preferably comprises (b1) a step of irradiating the discharged colored ink composition with actinic radiation to thus cure the colored ink composition between step (a1) and step (a2). In step (b1), the colored ink composition may be cured completely, or the clear layer-forming ink composition may be discharged in a state in which the colored ink composition is semi-cured, and it is then completely cured together with the clear layer-forming ink composition.

<Step (a): Image formation step>

The step of discharging the ink composition of the present invention above a recording medium (a) is first explained. Step (a1) is also the same as step (a).
The recording medium used in the present invention is not particularly limited, and a known recording medium may be used. Examples thereof include paper, paper laminated with a plastic (e.g. polyethylene, polypropylene, polystyrene, etc.), a metal plate (e.g. aluminum, zinc, copper, etc.), a plastic film (e.g. polyvinyl chloride, cellulose diacetate, cellulose triacetate, cellulose propionate, cellulose butyrate, cellulose acetate butyrate, cellulose nitrate, polyethylene terephthalate, polyethylene, polystyrene, polypropylene, polycarbonate, polyvinylacetal, etc.), and paper or plastic film laminated or vapor-deposited with the above metal. In the present invention, as the recording medium, a non-absorbing recording medium is preferable and among them a plastic film and a paper are more preferable.
An inkjet recording device used in the image formation step is not particularly limited, and any known inkjet recording device that can achieve an intended resolution may be used. That is, any known inkjet recording device, such as a commercial product, may be used in order to discharge an ink composition onto a recording medium in step (a) of the inkjet recording method of the present invention.

The inkjet recording device that can be used in the present invention is equipped with, for example, an ink supply system, a temperature sensor, and an actinic radiation source.

The ink supply system comprises, for example, a main tank containing the ink composition of the present invention, a supply pipe, an ink composition supply tank immediately before an inkjet head, a filter, and a piezo system inkjet head. The piezo system inkjet head may be driven so as to discharge a multisize dot of preferably 1 to 100 pL, more preferably 3 to 42 pL, and yet more preferably 8 to 30 pL, at a resolution of preferably 300 x 300 to 4,000 x 4,000dpi, more preferably 400 x 400 to 1,600 x 1,600dpi. Here, dpi referred to in the present invention means the number of dots per 2.54 cm.

In the present invention, since it is preferable for the ink composition to be discharged at a constant temperature, a preferably used image forming equipment has a section from the ink composition supply tank to the inkjet head can be thermally insulated and heated. A method of controlling temperature is not particularly limited, but it is preferable to provide, for example, temperature sensors at a plurality of pipe section positions, and control heating according to the ink composition flow rate and the temperature of the surroundings. The temperature sensors may be provided on the ink composition supply tank and in the vicinity of the inkjet head nozzle. Furthermore, the head unit that is to be heated is preferably thermally shielded or insulated so that the device main body is not influenced by the temperature of the outside air. In order to reduce the printer start-up time required for heating, or in order to reduce the thermal energy loss, it is preferable to thermally insulate the head unit from other sections and also to reduce the heat capacity of the entire heated unit.

A radiation curing type ink composition such as the ink composition of the present invention generally has higher viscosity than that of a water-based ink composition used for a general inkjet recording ink composition, and variation in viscosity due to a change in temperature at the time of discharge is large. Viscosity variation in the ink composition has a large effect on changes in liquid droplet size and changes in liquid droplet discharge speed and, consequently, causes the image quality to be degraded. It is therefore necessary to maintain the ink composition discharge temperature as constant as possible. In the present invention, the control range for the ink composition temperature is preferably ±5°C of a set temperature, more preferably ±2°C of the set temperature, and yet more preferably ±1 °C of the set temperature.

<Step (b): Curing step>

The step of irradiating the discharged ink composition with actinic radiation to thus cure the ink composition (b) is now explained.

The actinic radiation is preferably UV. This is because the polymerization initiator contained in the ink composition of the present invention is decomposed by irradiation with UV to thus generate a polymerization initiating species such as a radical, and the initiating species functions so as to cause and promote a polymerization reaction of a polymerizable compound. Here, if a sensitizer is present together with the polymerization initiator in the ink composition, the sensitizer in the system absorbs UV to attain an excited state and promotes decomposition of the polymerization initiator upon contacting the polymerization initiator, thereby enabling higher sensitivity to be achieved for a curing reaction.

As an actinic radiation source, a mercury lamp, a gas/solid laser, etc. are mainly used, and for UV photocuring inkjet ink a mercury lamp and a metal halide lamp are widely known. However, from the viewpoint of protection of the environment, there has recently been a strong desire for mercury not to be used, and replacement by a GaN semiconductor UV light emitting device is very useful from industrial and environmental viewpoints. Furthermore, LEDs (UV-LED) and LDs (UV-LD) have small dimensions, long life, high efficiency, and low cost, and their use as a photocuring inkjet light source can be expected.

In the curing step, as a radiation source for UV, it is preferably to use a light-emitting diode (UV-LED), and more preferably a light-emitting diode (UV-LED) that emits UV having an emission peak wavelength in the range of 300 to 420 nm.

As the UV-LED, for example, Nichia Corporation put on the market a violet LED for which the main emission spectrum has a wavelength between 365 nm and 420 nm. Furthermore, other ultraviolet LEDs are also available, and irradiation may be carried out with a different UV bandwidth.

The emission peak wavelength of UV used to cure the ink composition of the present invention depends on sensitizer absorption characteristics, but is preferably 300 to 420 nm, more preferably 350 to 420 nm, and yet more preferably 380 to 420 nm.

Since the ink composition of the present invention has sufficient sensitivity, it is sufficiently cured even with low power actinic radiation. Specifically, it cures sufficiently when the maximum illumination intensity on a recording medium surface is in the range of preferably 10 to 2,000 $mW/cm^2$, more preferably 650 to 1,800 $mW/cm^2$, and yet more preferably 700 to 1,600 $mW/cm^2$.

The ink composition of the present invention is desirably exposed to such actinic radiation for preferably 0.01 to 2 sec., more preferably 0.1 to 1.5 sec., and yet more preferably 0.3 to 1 sec.

Irradiation conditions and a basic method for irradiation with actinic radiation are disclosed in JP-A-60-132767. Specifically, a light source is provided on either side of a head unit that includes an ink composition discharge device, and the head unit and the light source are made to scan by a so-called shuttle system.

In this way, in accordance with the use of a small-size and light-weight UV-LED as an actinic radiation source provided in the operating part, it is possible to achieve small size and low energy inkjet recording equipment, thus enabling an image to be formed with high productivity. Moreover, since a UV-LED has excellent versatility with regard to exposure conditions, suitable exposure conditions may be set according to the ink composition, and an image can be formed with high productivity.

Irradiation with actinic radiation is carried out after a certain time (preferably 0.01 to 0.5 sec., more preferably 0.01 to 0.3 sec., and yet more preferably 0.01 to 0.15 sec.) has elapsed from when the ink composition has landed. By controlling the time from ink composition landing to irradiation so as to be a minimum in this way, it becomes possible to prevent the ink composition that has landed on a recording medium from spreading before being cured. Furthermore, since the ink composition can be exposed before it reaches a deep area of a porous recording medium that the light source cannot reach, it is possible to prevent monomer from remaining unreacted.

Furthermore, curing may be completed using another light source that is not driven. WO99/54415 discloses, as an irradiation method, a method employing an optical fiber and a method in which a collimated light source is incident on a mirror surface provided on a head unit side face, and a recorded area is irradiated with UV light.

In the curing step, the energy applied by the light-emitting diode, that is, the energy (integrated amount of light) applied to the ink composition on the recording medium by irradiation with UV, is preferably 100 to 1,000 mJ/cm$^2$, more preferably 150 to 800 mJ/cm$^2$, and yet more preferably 200 to 700 mJ/cm$^2$. It is preferable for it to be in the above-mentioned numerical range since a balance can be achieved between productivity and curability.

In the inkjet recording method of the present invention, it is also preferable to form at least part of an image in a printed material by repeating the image formation step (a) and the curing step (b) at least twice because an image having excellent surface gloss is obtained.

Examples of the mode in which at least part of an image in a printed material is formed by repeating the image formation step (a) and the curing step (b) at least twice include a mode in which a color image is formed by carrying out steps (a) and (b) above once per color, a mode in which a monochromatic image is formed by repeating steps (a) and (b) above twice or more for the monochromatic image, and a mode in which a color image is formed by repeating steps (a) and (b) above twice or more for one color of the color image to thus form a monochromatic image and by further repeating in the same manner steps (a) and (b) above twice or more for another color of the color image.

By employing the above-mentioned inkjet recording method, the dot diameter of the landed ink composition can be kept constant for various supports having different surface wettability, thus improving the image quality. In order to obtain a color image, it is preferable to superimpose in sequence from a low lightness color. By superimposing in sequence from an ink composition having low lightness, radiation can easily reach an ink composition in a lower part, and good curing sensitivity, reduction in residual monomer, and improvement of adhesion can be anticipated. With regard to irradiation, it is possible to carry out exposure of all colors at once after they are discharged, but from the viewpoint of promoting curing it is preferable to carry out exposure for each color.

The inkjet recording method of the present invention may suitably employ the ink set comprising at least one ink composition of the present invention. The order in which colored ink compositions are discharged is not particularly limited, but it is preferable to apply to a recording medium from a colored ink composition having a high lightness; when the ink composition of the present invention is used as a white ink composition, and the ink compositions of yellow, cyan, magenta, and black are further used, they are preferably applied on top of the recording medium in the order white → yellow → cyan → magenta → black. Moreover, the present invention is not limited thereto, and an ink set comprising a total of seven colors, that is, light cyan, light magenta light ink compositions and cyan, magenta, black, white, and yellow dark ink compositions may preferably be used, and in this case they are applied on top of the recording medium in the order white → light cyan → light magenta → yellow → cyan → magenta → black. In this way, the ink composition of the present invention may be cured by irradiation with UV lingt in high sensitivity and form an image on the surface of the support.

When using as an ink set comprising plurality of ink compositions having a different color, the ink set is not particularly limited as long as it is an ink set having two or more types of ink compositions in combination, the ink set comprising in combination at least one ink composition of the present invention and another ink composition of the present invention or an ink composition other than one of the present invention, and it is preferable for the ink set to comprise at least one ink composition of the present invention and at least one colored ink composition selected from cyan, magenta, yellow, black, light magenta, and light cyan.

Furthermore, the ink set of the present invention may be suitably used in the inkjet recording method of the present invention. In order to obtain a full color image using the ink composition of the present invention, it is preferable to use, as the ink set of the present invention, an ink set comprising at least five dark ink compositions of yellow, cyan, magenta, black, and white, and it is yet more preferable to use an ink set comprising in combination five dark ink

compositions of yellow, cyan, magenta, black, and white and two, that is, light cyan, and light magenta ink compositions.

The 'dark ink composition' referred to in the present invention means an ink composition for which the content of the colorant exceeds 1 wt % of the entire ink composition. The colorant is not particularly limited; a known colorant may be used, and examples thereof include a pigment and a disperse dye.

The ink set of the present invention may comprise at least one dark ink composition and at least one light ink composition. The dark ink composition and the light ink composition employ colorants of similar colors, the ratio of the colorant concentration of the dark ink composition to the colorant concentration of the light ink composition is preferably dark ink composition:light ink composition = 15:1 to 4:1, more preferably 12:1 to 4:1, and yet more preferably 10:1 to 4.5:1. When the ratio is in the above-mentioned range, a vivid full color image with little feeling of grain can be obtained.

As described above, the ink composition of the present invention is suitable as the clear layer-forming ink composition, and when it is used as an ink set, it is preferably an ink set comprising a colored ink composition and a clear ink, and it is preferable to use the ink composition of the present invention as the clear ink.

Examples

The present invention is explained below more specifically by reference to Examples and Comparative Examples. However, the present invention should not be construed as being limited by these Examples.

'Parts' in the description below means 'parts by weight' unless otherwise specified.

Materials used in the present invention are as follows.

<Polymerizable compound>

DVE-3: triethylene glycol divinyl ether (Rapid-Cure DVE-3, ISA)
SR508: dipropylene glycol diacrylate (SR508, Sartomer)
SR9003: propoxylated (2) neopentyl glycol diacrylate (SR9003, Sartomer)
SR833: tricyclodecanedimethanol diacrylate (SR833, Sartomer)
SR506: isobornyl acrylate (SR506, Sartomer)
CN964A85: aliphatic polyester-based urethane diacrylate oligomer (containing 15% of tripropylene glycol diacrylate, Sartomer)
NVC: *N*-vinylcaprolactam (V-CAP, ISP)
SR531: cyclic trimethylolpropaneformal acrylate 95wt%, trimethylolpropane triacrylate 5wt% (Sartomer)
SR399: dipentaerythritol pentaacrylate (Sartomer)
SR351S: trimethylolpropane triacrylate (Sartomer)

<Polymerization initiator>

TPO: 2,4,6-trimethylbenzoyldiphenylphosphine oxide (Darocur TPO, BASF Japan)
ITX: isopropylthioxanthone (SPEEDCURE ITX, LAMBSON)

<Surface tension adjusting agent>

BYK307: surfactant (BYK-Chemie)
TEGO Rad 2100: acryloxy group-containing silicone (Evoik Tego Chemie)
TEGO Rad 2300: acrylate group-containing silicone (silicone polyether acrylate, Evoik Tego Chemie)
TEGO Rad 2500: acryloxy group-containing silicone (Evoik Tego Chemie)

<Polymerization inhibitor>

(Component B-1)

4-Methoxy TEMPO: 4-methoxy-2,2,6,6-tetramethylpiperidin-1-oxyl (Tokyo Chemical Industry Co., Ltd.)
4-ACETAMIDO-TEMPO: 4-acetoxy-2,2,6,6-tetramethylpiperidin-1 -oxyl (Tokyo Chemical Industry Co., Ltd.)
TEMPO: 2,2,6,6-tetramethylpiperidin-1-oxyl (Tokyo Chemical Industry Co., Ltd.)

(Component B-2)

Antage BHT: 2,6-di-*t*-butyl-*p*-cresol (Kawaguchi Chemical Industry Co., Ltd.)
Antage 500: 2,2'-Methylenebis(4-ethyl-6-tert-butylphenol) (Antage W-500, Kawaguchi Chemical Industry Co., Ltd.)
Quino Power MNT: 4-methoxy-1-naphthol (Kawasaki Kasei Chemicals Ltd.) MEHQ: Hydroquinone monomethyl ether (Wako Pure Chemical Industries, Ltd.)

(Component B-3)

ADK STAB LA-57: tetrakis(2,2,6,6-pentamethyl-4-piperidyl)1,2,3,4-butanetetracarboxylate (ADEKA)
Tinuvin 765: bis(1,2,2,6,6-pentamethyl-4-piperidyl) sebacate (BASF Japan)
Tinuvin 770DF: bis(2,2,6,6-tetramethyl-4-piperidyl) sebacate (BASF Japan)

(Component B-4: Other)

UV-12: a mixture of tris(tris(*N*-nitroso-*N*-phenylhydroxyamine) aluminum salt (10 mass %) and phenoxyethyl acrylate (90 mass %), ALBEMARLE)

(Preparation of yellow mill base)

Yellow pigment: NOVOPERM YELLOW H2G (Clariant): 30 parts by mass SR9003: 29 parts by mass
BYK168 (dispersant, BYK Chemie): 40 parts by mass
FIRSTCURE ST-1 (polymerization inhibitor, Chem First): 1 part by mass

The components were stirred and mixed to give a yellow mill base. Preparation of the yellow mill base was carried out by dispersing using a Motor Mill M50 disperser (Eiger Machinery, Inc.) with zirconia beads having a diameter of 0.65 mm at a peripheral speed of 9 m/s for 4 hours.

(Preparation of magenta mill base)

Magenta pigment: CINQUASIA MAGENTA RT-355D (BASF Japan): 30 parts by mass
SR9003 (propoxylated (2) neopentyl glycol diacrylate (compound formed by diacrylating neopentyl glycol propylene oxide 2 mole adduct, SARTOMER): 49 parts by mass
SOLSPERSE 32000 (dispersant, Noveon): 20 parts by mass
FIRSTCURE ST-1 (polymerization inhibitor, Chem First): 1 part by mass

The components were stirred and mixed to give a magenta mill base. Preparation of the magenta mill base was carried out by dispersing using a Motor Mill M50 disperser (Eiger Machinery, Inc.) with zirconia beads having a diameter of 0.65 mm at a peripheral speed of 9 m/s for 4 hours.

(Preparation of cyan mill base)

Cyan pigment: IRGALITE BLUE GLVO (BASF Japan): 30 parts by mass
SR9003: 49 parts by mass

SOLSPERSE 32000: 20 parts by mass
FIRSTCURE ST-1: 1 part by mass

The components were stirred and mixed to give a cyan mill base. Preparation of the cyan mill base was carried out by dispersing using a Motor Mill M50 disperser (Eiger Machinery, Inc.) with zirconia beads having a diameter of 0.65 mm at a peripheral speed of 9 m/s for 4 hours.

(Preparation of black mill base)

Black pigment: SPECIAL BLACK 250 (BASF Japan): 30 parts by mass
SR9003: 49 parts by mass
SOLSPERSE 32000: 20 parts by mass
FIRSTCURE ST-1: 1 part by mass

The components were stirred and mixed to give a black mill base. Preparation of the black mill base was carried out by dispersing using a Motor Mill M50 disperser (Eiger Machinery, Inc.) with zirconia beads having a diameter of 0.65 mm at a peripheral speed of 9 m/s for 4 hours.

(Examples and Comparative Examples)

<Method for preparing ink composition>

Ink compositions C1 to C17 (clear, Examples), C18 to C20 (clear, Comparative Examples) and C21 to C27 (color, Examples) were obtained by mixing and stirring the materials shown in Table 1 and Table 2 in the amounts described in Table 1 and Table 2. In the tables, '-' means that the corresponding component was not contained. CL means clear ink, and Y, M, C, K, Lm, Lc, and Lbk mean yellow, magenta, cyan, black, light magenta, light cyan, and light black color inks.

The ink compositions thus obtained were subjected to the various evaluations described below. The evaluation results are shown in Table 1 and Table 2 below.

Furthermore, as an ink composition for an image layer (lower layer), colored ink compositions 1 to 5 were obtained by mixing and stirring the materials described in Table 3 in the amounts described in Table 3. In the tables, '-' means that the corresponding component was not contained.

<Surface tension>

The surface tension of the ink compositions obtained above was measured. Measurement was carried out by the Wilhelmy method using a surface tensiometer (CBVP-Z, Kyowa Interface Science Co., Ltd., etc.) at a liquid temperature of 25°C.

<Inkjet recording method>

With regard to the clear ink composition, a piezo type inkjet head Q-class Sapphire QS-256/30 (FUJIFILM DIMATIX, number of nozzles 256, minimum droplet volume 30 pL, 33 kHz) was used as an inkjet head.

Light sources comprising ten light-emitting diodes (UV-LED, NC4U134, Nichia Corporation, peak wavelength 385 nm) were used as curing light sources by disposing one each on the left and right sides (a total of two), the illumination intensity per light source being 1,500 mW/cm$^2$.

The ink supply system comprised an ink pack, supply piping, a SEPAREL EF-G2 (DIC) degassing filter, an ink supply tank and degassing filter immediately before the inkjet head, and the piezo type inkjet head, the pressure of the degassing filter section being reduced to 0.5 atm. A clear layer was formed using equipment with this constitution by a plurality of passes at a discharge temperature of 45°C to give a film thickness of 25 $\mu$m.

With regard to the colored ink composition, a piezo type inkjet head Q-class Sapphire QS-256/10 (FUJIFILM DIMATIX, number of nozzles 256, minimum droplet volume 10 pL, 50 kHz) was used as an inkjet head. Light sources comprising ten light-emitting diodes (UV-LED, NC4U134, Nichia Corporation, peak wavelength 385 nm) were used as curing light sources by disposing one each on the left and right sides (a total of two), the illumination intensity per light source being 1,500 mW/cm$^2$. The ink supply system comprised an ink pack, supply piping, a SEPAREL EF-G2 (DIC) degassing filter, an ink supply tank and degassing filter immediately before the inkjet head, and the piezo type inkjet

head, the pressure of the degassing filter section being reduced to 0.5 atm. A colored ink layer was formed using equipment with this constitution by a plurality of passes at a discharge temperature of 45°C to give a film thickness of 12 μm.

[Evaluation of ink composition]

<Surface gloss evaluation>

A 100% solid image of a clear ink layer having a 25 μm film thickness was printed by the above printing method on Tokubishi Art paper (paper weight 104 g/$m^2$) manufactured by Mitsubishi Paper Mills Limited. The maximum illumination intensity on the substrate surface was 1,500 W/$cm^2$, and the amount of exposure was 400 mJ/$cm^2$. The image thus obtained was subjected to measurement of surface gloss at a measurement angle of 60° based on JIS Z8741 using a Sheen Instruments surface glossmeter.

The evaluation criteria were as follows. An evaluation of 3 or greater was acceptable.

4: surface gloss at least 90
3: surface gloss at least 80
2: surface gloss at least 60
1: surface gloss less than 60

Evaluation of the color ink was carried out by the same printing method as for the clear ink. Specifically, a 100% solid image of a color ink layer having a 12 μm film thickness of each color was printed on Tokubishi Art paper (paper weight 104 g/$m^2$) manufactured by Mitsubishi Paper Mills Limited. The maximum illumination intensity on the substrate surface was 1,500 W/$cm^2$, and the amount of exposure was 400 mJ/$cm^2$. The image thus obtained was subjected to measurement of surface gloss at a measurement angle of 60° based on JIS Z8741 using a Sheen Instruments surface glossmeter.

The evaluation criteria were as follows. An evaluation of 3 or greater was acceptable.

4: surface gloss at least 30
3: surface gloss at least 20
2: surface gloss at least 15
1: surface gloss less than 10

<Curability evaluation>

Tokubishi Art paper (paper weight 104 g/$m^2$) manufactured by Mitsubishi Paper Mills Limited was used as a recording medium in the printing method above. For the clear ink, a 100% solid image with a clear ink layer film thickness of 25 μm was printed. For the color ink, a solid image with a color ink layer film thickness of 12 μm was printed.

Curability was defined by color transfer and tackiness of the printed surface. The presence or absence of tackiness of the printed surface was examined by touch, and color transfer was evaluated by pressing plain paper (Fuji Xerox Co., Ltd. C2 copier paper) against the surface and visually examining the area (%) transferred to the plain paper that had been pressed. With regard to color transfer of the clear layer, the paper surface (plain paper) to which the clear ink had been transferred after the color transfer test was inclined with respect to a fluorescent lamp, and the area with clear layer gloss was measured by eye, thus measuring the color transfer.

The smaller the color transfer and tackiness, the higher the evaluation of sensitivity, and evaluation was carried out using the criteria below. The evaluation criteria were as follows. An evaluation of 3 or greater was acceptable.

4: no color transfer and no tackiness
3: no color transfer but slight tackiness
2: less than 10% color transfer and slight tackiness
1: 10% or greater color transfer and some tackiness

<Blocking properties evaluation>

Tokubishi Art paper (paper weight 104 g/$m^2$) manufactured by Mitsubishi Paper Mills Limited was used as a recording medium in the printing method above. After printing, 300 sheets of Tokubishi Art paper (paper weight 104 g/$m^2$) were superimposed on the printed surface, and the state of transfer of the clear layer after 24 hours at 40°C was evaluated. With regard to the clear ink, a 100% solid image with a clear ink layer film thickness of 25 μm was printed. With regard to the color ink, a solid image with a color ink layer film thickness of 12 μm was printed.

The degree of transfer was evaluating by measuring the area (area %) where color transfer was present when examined by eye. With regard to color transfer of the clear layer, the paper surface to which the clear ink had been transferred after the blocking test was inclined with respect to a fluorescent lamp, and the area with clear layer gloss was visually measured, thus measuring the color transfer.
The less the transfer, the better the evaluation of blocking properties, and evaluation was carried out using the criteria below. An evaluation of 3 or greater was acceptable.

4: no transfer
3: transfer at a proportion of less than 5%
2: transfer at a proportion of at least 5% but less than 25%
1 : transfer at a proportion of at least 25% but less than 50%

<Bottle storage stability evaluation>

A 50 mL glass bottle was charged with 50 mL of the ink composition and allowed to stand in a thermostatic chamber (60°C) for 28 days, and changes in particle size and viscosity of the ink composition were evaluated. With regard to the clear ink composition, evaluation was carried out using change in viscosity only.

-Viscosity measurement method-

Measurement of viscosity of the ink composition of the Examples was carried out using a Brookfield LVDV-I (Brookfield) type B viscometer under conditions of 25°C at a rotor rotational speed of 20 rpm.

-Particle size measurement method-

Measurement of particle size of the ink composition of the Examples was carried out using an FPAR-1000 (Otsuka Electronics Co., Ltd.). For this measurement, 2-butanone was used as a dilution solvent for adjusting the concentration.
The evaluation criteria were as follows. An evaluation of 3 or greater was acceptable.
The percentage increase was expressed as X-100 (%) where the value before standing was 100% and the value after standing for 28 days was X%.

4: percentage increase in viscosity/particle size after one month was less than 15%
3: percentage increase in viscosity/particle size after one month was at least 15% but less than 30%
2: percentage increase in viscosity/particle size after one month was at least 30% but less than 45%
1: percentage increase in viscosity/particle size after one month was at least 45%

When the percentage increase in viscosity was different from the percentage increase in particle size, the lower evaluation result was employed. For example, when the evaluation result for percentage increase in viscosity was 4 and the evaluation result for percentage increase in particle size was 3, the evaluation result for bottle storage stability was 3.

<Pack storage stability evaluation>

An aluminum vapor deposition multi layer structure container (pack) with a polyolefin as the innermost layer was charged with 50 cc of the ink composition so that no gas was sealed in; it was allowed to stand in a thermostatic chamber (60°C) for 28 days, and changes in particle size and viscosity of the ink composition were evaluated. With regard to the clear ink composition, evaluation was carried out using change in viscosity only.

-Viscosity measurement method-

Measurement of viscosity of the ink composition of the Examples was carried out using a Brookfield LVDV-I (Brookfield) type B viscometer under conditions of 25°C at a rotor rotational speed of 20 rpm.

-Particle side measurement method-

Measurement of particle size of the ink composition of the Examples was carried out using an FPAR-1000 (Otsuka Electronics Co., Ltd.). For this measurement, 2-butanone was used as a dilution solvent for adjusting the concentration.

The evaluation criteria were as follows. An evaluation of 3 or greater was acceptable.

The percentage increase was expressed as X-100 (%) where the value before standing was 100% and the value after standing for 28 days was X%.

4: percentage increase in viscosity/particle size after one month was less than 15%
3: percentage increase in viscosity/particle size after one month was at least 15% but less than 30%
2: percentage increase in viscosity/particle size after one month was at least 30% but less than 45%
1: percentage increase in viscosity/particle size after one month was at least 45%

When the percentage increase in viscosity was different from the percentage increase in particle size, the lower evaluation result was employed. For example, when the evaluation result for percentage increase in viscosity was 4 and the evaluation result for percentage increase in particle size was 3, the evaluation result for pack storage stability was 3.

<Fluorescent lamp stability evaluation>

50 mL of the ink composition was measured into a cup and allowed to stand under 900 lx (Mellow Line 3 band daylight white FHF32EX-N, Toshiba), and the period of time after which solids content occurred was measured. 50 mL of the ink composition was passed through a 20 μm filter (Nylon 508, Tokyo Screen Co., Ltd.), subsequently 5 mL of isopropyl alcohol was passed through, and the presence or absence of solids content on the filter was evaluated by eye.

The evaluation criteria were as follows. An evaluation of 3 or greater was acceptable.

4: no solids content after at least 60 hours
3: occurrence of solids content after at least 25 hours but less than 60 hours
2: occurrence of solids content after at least 5 hours but less than 25 hours
1: occurrence of solids content after less than 5 hours

<Discharge stability evaluation>

After the ink composition was stored at room temperature (25°C) for two weeks, recording on a recording medium was carried out using the inkjet recording equipment, the presence/absence of dot dropouts and ink scattering was examined by eye when printing was carried out at normal temperature (25°C) continuously for 1 hour, and evaluation was carried out using the criteria below.

The evaluation criteria were as follows. An evaluation of 3 or greater was acceptable.
4: no occurrence of dot dropouts or ink scattering
3: 1 to 2 occurrences of dot dropouts or ink scattering
2: 3 to 8 occurrences of dot dropouts or ink scattering
1: 9 or more occurrences of dot dropouts or ink scattering

Table 1

| | | Example | | | | | | | | | |
|---|---|---|---|---|---|---|---|---|---|---|---|
| | | C1 | C2 | C3 | C4 | C5 | C6 | C7 | C8 | C9 | C10 |
| | | CL | CL | CL | CL | CL | CL | CL | CL | CL | CL |
| Monomer | DVE-3 (divinyl ether compound) | 20.00 | 20.00 | 20.00 | 20.00 | 20.00 | 20.00 | 20.00 | 20.00 | 20.00 | 20.00 |
| | SR508 (polyfunctional acrylate) | 20.00 | 20.00 | 20.00 | 20.00 | 20.00 | 20.00 | 20.00 | 20.00 | 20.00 | 20.00 |
| | SR9003 (polyfunctional acrylate) | 10.00 | 10.00 | 10.00 | 10.00 | 10.00 | 10.00 | 10.00 | 10.00 | 10.00 | 10.00 |
| | SR833 (polyfunctional acrylate) | 20.00 | 20.00 | 20.00 | 20.00 | 20.00 | 20.00 | 20.00 | 20.00 | 20.00 | 20.00 |
| | SR506 | 10.65 | 10.15 | 10.15 | 10.15 | 10.15 | 9.62 | 9.62 | 9.62 | 9.62 | 9.62 |
| Oligomer | CN964A85 | 4.00 | 4.00 | 4.00 | 4.00 | 4.00 | 4.00 | 4.00 | 4.00 | 4.00 | 4.00 |
| Polymerization initiator | TPO | 14.00 | 14.00 | 14.00 | 14.00 | 14.00 | 14.00 | 14.00 | 14.00 | 14.00 | 14.00 |
| Surface tension adjusting agent | BYK307 | - | 0.50 | - | - | - | - | - | - | - | - |
| | TEGO Rad 2300 | - | - | 0.50 | - | - | - | - | - | - | - |
| | TEGO Rad 2500 | - | - | - | 0.50 | - | - | - | - | - | - |
| | TEGO Rad 2100 | - | - | - | - | 0.50 | 0.50 | 0.50 | 0.50 | 0.50 | 0.50 |
| Polymerization inhibitor | 4-Methoxy TEMPO | - | - | - | - | - | - | - | 0.08 | - | - |
| | 4-ACETAMIDO-TEMPO | - | - | - | - | - | - | 0.08 | - | - | - |
| | TEMPO | 0.05 | 0.05 | 0.05 | 0.05 | 0.05 | 0.08 | - | - | 0.08 | 0.08 |
| | Antage BHT | - | - | - | - | - | - | - | - | - | - |
| | Antage 500 | - | - | - | - | - | - | - | - | - | 1.00 |
| | Quino Power MNT | - | - | - | - | - | - | - | - | 1.00 | - |
| | MEHQ | 1.00 | 1.00 | 1.00 | 1.00 | 1.00 | 1.00 | 1.00 | 1.00 | - | - |
| | ADK STAB LA-57 | - | - | - | - | - | - | - | - | - | - |
| | Tinuvin 765 | - | - | - | - | - | - | - | - | - | - |
| | Tinuvin 770DF | 0.30 | 0.30 | 0.30 | 0.30 | 0.30 | 0.30 | 0.30 | 0.30 | 0.30 | 0.30 |
| | UV-12 (92%PEA sol.) | - | - | - | - | - | 0.50 | 0.50 | 0.50 | 0.50 | 0.50 |
| Total (wt%) | | 100 | 100 | 100 | 100 | 100 | 100 | 100 | 100 | 100 | 100 |
| Polymerization inhibitor total (wt%) | | 1.35 | 1.35 | 1.35 | 1.35 | 1.35 | 1.42 | 1.42 | 1.42 | 1.42 | 1.42 |
| Polyfunctional (meth)acrylate monomer total (wt%) | | 50.00 | 50.00 | 50.00 | 50.00 | 50.00 | 50.00 | 50.00 | 50.00 | 50.00 | 50.00 |
| Surface tension [mN/m] | | 34 | 24 | 25 | 24 | 27 | 27 | 27 | 27 | 27 | 27 |
| Evaluation | Surface gloss | 3 | 4 | 4 | 4 | 4 | 4 | 4 | 4 | 4 | 4 |
| | Curability | 3 | 3 | 4 | 4 | 4 | 4 | 4 | 4 | 4 | 4 |
| | Blocking properties | 3 | 3 | 4 | 4 | 4 | 4 | 4 | 4 | 4 | 4 |
| | Bottle storage stability | 4 | 4 | 4 | 4 | 4 | 4 | 4 | 4 | 4 | 4 |
| | Pack storage stability | 4 | 4 | 4 | 4 | 4 | 4 | 4 | 4 | 3 | 3 |
| | Fluorescent lamp stability | 3 | 3 | 3 | 3 | 3 | 4 | 4 | 4 | 4 | 3 |
| | Discharge stability | 3 | 4 | 4 | 4 | 4 | 4 | 4 | 4 | 4 | 4 |

Table 1-continued

| | | Example | | | | | | | Comparative Example | | |
|---|---|---|---|---|---|---|---|---|---|---|---|
| | | C11 | C12 | C13 | C14 | C15 | C16 | C17 | C18 | C19 | C20 |
| | | CL | CL | CL | CL | CL | CL | CL | CL | CL | CL |
| Monomer | DVE-3 (divinyl ether compound) | 20.00 | 20.00 | 20.00 | 20.00 | 20.00 | 20.00 | - | 20.00 | 20.00 | 20.00 |
| | SR508 (polyfunctional acrylate) | 20.00 | 20.00 | 20.00 | 20.00 | 20.00 | 20.00 | 25.00 | 20.00 | 20.00 | 20.00 |
| | SR9003 (polyfunctional acrylate) | 10.00 | 10.00 | 10.00 | 10.00 | 10.00 | 10.00 | 25.00 | 10.00 | 10.00 | 10.00 |
| | SR833 (polyfunctional acrylate) | 20.00 | 20.00 | 20.00 | 20.00 | 20.00 | 20.00 | 20.00 | 20.00 | 20.00 | 20.00 |
| | SR506 | 9.62 | 9.62 | 9.62 | 10.65 | 10.25 | 6.95 | 9.65 | 9.70 | 10.70 | 10.45 |
| Oligomer | CN964A85 | 4.00 | 4.00 | 4.00 | 4.00 | 4.00 | 4.00 | 4.00 | 4.00 | 4.00 | 4.00 |
| Polymerization initiator | TPO | 14.00 | 14.00 | 14.00 | 14.00 | 14.00 | 14.00 | 14.00 | 14.00 | 14.00 | 14.00 |
| Surface tension adjusting agent | BYK307 | - | - | - | - | - | - | - | - | - | - |
| | TEGO Rad 2300 | - | - | - | - | - | - | - | - | - | - |
| | TEGO Rad 2500 | - | - | - | - | - | - | - | - | - | - |
| | TEGO Rad 2100 | 0.50 | 0.50 | 0.50 | 0.50 | 0.50 | 0.50 | 0.50 | 0.50 | 0.50 | 0.50 |
| Polymerization inhibitor | 4-Methoxy TEMPO | - | - | - | - | - | - | - | - | - | - |
| | 4-ACETAMIDO-TEMPO | - | - | - | - | - | - | - | - | - | - |
| | TEMPO | 0.08 | 0.08 | 0.08 | 0.05 | 0.05 | 0.05 | 0.05 | - | - | 0.05 |
| | Antage BHT | 1.00 | - | - | - | - | - | - | - | - | - |
| | Antage 500 | - | - | - | - | - | - | - | - | - | - |
| | Quino Power MNT | - | - | - | - | - | - | - | - | - | - |
| | MEHQ | - | 1.00 | 1.00 | 0.20 | 0.50 | 2.00 | 1.00 | 1.00 | - | 1.00 |
| | ADK STAB LA-57 | - | - | 0.30 | - | - | - | - | - | - | - |
| | Tinuvin 765 | - | 0.30 | - | - | - | - | - | - | - | - |
| | Tinuvin 770DF | 0.30 | - | - | 0.10 | 0.20 | 0.50 | 0.30 | 0.30 | 0.30 | - |
| | UV-12 (92%PEA sol.) | 0.50 | 0.50 | 0.50 | 0.50 | 0.50 | 2.00 | 0.50 | 0.50 | 0.50 | - |
| Total (wt%) | | 100 | 100 | 100 | 100 | 100 | 100 | 100 | 100 | 100 | 100 |
| Polymerization inhibitor total (wt%) | | 1.42 | 1.42 | 1.42 | 0.39 | 0.79 | 2.71 | 1.39 | 1.34 | 0.34 | 1.05 |
| Polyfunctional (meth)acrylate monomer total (wt%) | | 50.00 | 50.00 | 50.00 | 50.00 | 50.00 | 50.00 | 70.00 | 50.00 | 50.00 | 50.00 |
| Surface tension [mN/m] | | 27 | 27 | 27 | 27 | 28 | 28 | 27 | 26 | 27 | 26 |
| Evaluation | Surface gloss | 4 | 4 | 4 | 4 | 4 | 3 | 3 | 4 | 4 | 4 |
| | Curability | 4 | 4 | 4 | 4 | 4 | 3 | 3 | 4 | 4 | 4 |
| | Blocking properties | 4 | 4 | 4 | 4 | 4 | 3 | 3 | 4 | 4 | 4 |
| | Bottle storage stability | 4 | 4 | 4 | 3 | 3 | 4 | 4 | 4 | 3 | 2 |
| | Pack storage stability | 3 | 4 | 4 | 3 | 3 | 4 | 4 | 1 | 1 | 2 |
| | Fluorescent lamp stability | 3 | 4 | 4 | 3 | 3 | 4 | 4 | 3 | 2 | 3 |
| | Discharge stability | 4 | 4 | 3 | 4 | 4 | 3 | 3 | 3 | 3 | 3 |

Table 2

| | | Example | | | | | | |
|---|---|---|---|---|---|---|---|---|
| | | C21 | C22 | C23 | C24 | C25 | C26 | C27 |
| | | Y | M | C | K | Lm | Lc | Lbk |
| Mill base | Yellow mill base | 7.00 | - | - | - | - | - | - |
| | Magenta mill base | - | 14.00 | - | - | 3.00 | - | - |
| | Cyan mill base | - | - | 7.00 | - | - | 2.00 | - |
| | Black mill base | - | - | - | 7.00 | - | - | 2.00 |
| Monomer | DVE-3 | 20.00 | 20.00 | 20.00 | 20.00 | 20.00 | 20.00 | 20.00 |
| | NVC | 20.00 | 20.00 | 20.00 | 20.00 | 20.00 | 20.00 | 20.00 |
| | SR531 | 10.00 | 10.00 | 10.00 | 10.00 | 10.00 | 10.00 | 10.00 |
| | SR-833 | 13.30 | 6.30 | 13.30 | 13.30 | 17.30 | 18.30 | 18.30 |
| | SR506 | 9.35 | 9.35 | 9.35 | 9.35 | 9.35 | 9.35 | 9.35 |
| Oligomer | CN964A85 | 4.00 | 4.00 | 4.00 | 4.00 | 4.00 | 4.00 | 4.00 |
| Initiator | TPO | 14.00 | 14.00 | 14.00 | 14.00 | 14.00 | 14.00 | 14.00 |
| Surfactant | TEGO Rad 2100 | 0.50 | 0.50 | 0.50 | 0.50 | 0.50 | 0.50 | 0.50 |
| Polymerization inhibitor | TEMPO | 0.05 | 0.05 | 0.05 | 0.05 | 0.05 | 0.05 | 0.05 |
| | MEHQ | 1.00 | 1.00 | 1.00 | 1.00 | 1.00 | 1.00 | 1.00 |
| | Tinuvin 770DF | 0.30 | 0.30 | 0.30 | 0.30 | 0.30 | 0.30 | 0.30 |
| | UV-12 (92%PEA sol.) | 0.50 | 0.50 | 0.50 | 0.50 | 0.50 | 0.50 | 0.50 |
| Total (wt%) | | 100.00 | 100.00 | 100.00 | 100.00 | 100.00 | 100.00 | 100.00 |
| Polymerization inhibitor total (wt%) | | 1.39 | 1.39 | 1.39 | 1.39 | 1.39 | 1.39 | 1.39 |
| Difunctional acrylate total (wt%) | | 43.30 | 36.30 | 43.30 | 43.30 | 47.30 | 48.30 | 48.30 |
| Surface tension [mN/m] | | 27 | 27 | 27 | 27 | 27 | 27 | 27 |
| Evaluation | Surface gloss | 4 | 4 | 4 | 4 | 4 | 4 | 4 |
| | Curability | 4 | 4 | 4 | 3 | 4 | 4 | 4 |
| | Blocking properties | 4 | 3 | 4 | 4 | 4 | 4 | 4 |
| | Bottle storage stability | 4 | 4 | 4 | 4 | 4 | 4 | 4 |
| | Pack storage stability | 4 | 4 | 3 | 4 | 4 | 4 | 4 |
| | Fluorescent lamp stability | 4 | 4 | 4 | 4 | 4 | 4 | 4 |
| | Discharge stability | 4 | 4 | 4 | 4 | 4 | 4 | 4 |

<Evaluation of multi layer formation>

A color ink described in Table 3 below was printed by the same printing method as for the evaluation of surface gloss described above, thus forming a color layer. Subsequently, by the same printing method as for the evaluation of surface gloss, clear ink 8 described in Table 1 was printed on the image printed with the color ink to thus form an image in which the clear ink was applied as an upper layer for a color image. The image in which the clear layer was applied as the upper layer for the color image was subjected to evaluation in terms of surface gloss, curability, and blocking properties, and the results are shown in Table 3.

Table 3

| | | | 1 | 2 | 3 | 4 | 5 |
|---|---|---|---|---|---|---|---|
| | | SP value | Y | M | C | K | C |
| Mill base | Yellow mill base | | 7 | - | - | - | - |
| | Magenta mill base | | - | 14 | - | - | - |
| | Cyan mill base | | - | - | 7 | - | 7 |
| | Black mill base | | - | - | - | 7 | - |
| Monomer | NVC | 21.8 | 20 | 20 | 20 | 20 | 10 |
| | SR531 | 19.7 | 40 | 40 | 40 | 40 | 15 |
| | SR399 | 20.9 | 6.2 | 1.2 | 6.2 | 6.2 | 0 |
| | SR351S | 18.8 | 3.3 | 1.3 | 3.3 | 3.3 | 14.5 |
| | SR506 | 17.5 | 5 | 5 | 5 | 5 | 35 |
| Oligomer | CN964A85 | | 4 | 4 | 4 | 4 | 4 |
| Polymerization initiator | TPO | | 11 | 11 | 11 | 11 | 11 |
| | ITX | | 3 | 3 | 3 | 3 | 3 |
| Polymerization inhibitor | UV-12 (92%PEA sol.) | | 0.5 | 0.5 | 0.5 | 0.5 | 0.5 |
| Total (wt%) | | | 100 | 100 | 100 | 100 | 100 |
| Total of SP value 19 or greater | | | 66.2 | 61.2 | 66.2 | 66.2 | 25.0 |
| Evaluation | Surface gloss | | 4 | 4 | 4 | 3 | 3 |
| | Curability | | 4 | 4 | 4 | 3 | 3 |
| | Blocking properties | | 4 | 4 | 4 | 4 | 3 |

**Claims**

**1.** An ink composition for inkjet recording comprising

(Component A) a polymerizable compound,
(Component B-1) an oxyl free radical-based polymerization inhibitor,
(Component B-2) a phenol-based polymerization inhibitor, and
(Component B-3) an amine-based polymerization inhibitor,

wherein Component B-3 is represented by Formula (B-3-1) below,

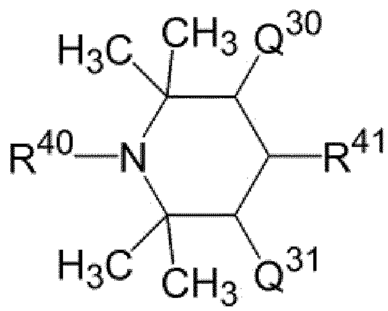

(B-3-1)

wherein in Formula (B-3-1), $R^{40}$ denotes a hydrogen atom, an alkyl group having 1 to 6 carbons, or a cycloalkyl group having 3 to 8 carbons, $R^{41}$ denotes a hydrogen atom, an alkyl group having 1 to 10 carbons, a cycloalkyl group having 3 to 8 carbons, an aralkyl group having 7 to 12 carbons, a 3- to 8-membered heterocyclic group, a hydroxy group, an -O-CO-$R^{42}$ group, an -N($R^{43}$)($R^{44}$) group, or =N($R^{43}$), $R^{42}$ denotes an alkyl group having 1 to 10

carbons, a cycloalkyl group having 3 to 8 carbons, an aralkyl group having 6 to 18 carbons, or an aryl group having 6 to 12 carbons, $R^{43}$ and $R^{44}$ independently denote a hydrogen atom, an alkyl group having 1 to 10 carbons, a cycloalkyl group having 3 to 8 carbons, a 3- to 8-membered heterocyclic group, an acyl group having 2 to 8 carbons, an acyloxy group, or an amide group, $Q^{30}$ and $Q^{31}$ independently denote a hydrogen atom or an oxo group, or there may be bonding, through $R^{41}$, to at least another compound represented by Formula (B-3-1) directly or via a linking group.

**2.** The ink composition for inkjet recording according to Claim 1, wherein the polymerizable compound (Component A) comprises (Component A-1) a divinyl ether compound.

**3.** The ink composition for inkjet recording according to Claim 1 or 2, wherein it further comprises (Component C) a polymerization initiator, the polymerization initiator (Component C) comprising (Component C-1) an acylphosphine-based polymerization initiator.

**4.** The ink composition for inkjet recording according to any one of Claims 1 to 3, wherein when the total amount of polymerization inhibitor contained in the ink composition for inkjet recording is defined as 100 mass %, the contents (mass %) (B1), (B2), and (B3) of Component B-1, Component B-2, and Component B-3 relative to the total amount of polymerization inhibitor satisfy Expression (1) to Expression (3) below.

$$2 \leq (B1) \leq 95 \qquad \text{Expression (1)}$$

$$3 \leq (B2) \leq 97 \qquad \text{Expression (2)}$$

$$0.1 \leq (B3) \leq 75 \qquad \text{Expression (3)}$$

**5.** The ink composition for inkjet recording according to any one of Claims 1 to 4, wherein when the total amount of polymerization inhibitor contained in the ink composition for inkjet recording is defined as 100 mass %, the contents (mass %) (B1), (B2), and (B3) of Component B-1, Component B-2, and Component B-3 relative to the total amount of polymerization inhibitor satisfy Expression (1') to Expression (3') below.

$$4 \leq (B1) \leq 90 \text{ Expression (1')}$$

$$7 \leq (B2) \leq 93 \text{ Expression (2')}$$

$$0.4 \leq (B3) \leq 60 \text{ Expression (3')}$$

**6.** The ink composition for inkjet recording according to any one of Claims 1 to 5, wherein it has a surface tension of no greater than 30 mN/m.

**7.** The ink composition for inkjet recording according to any one of Claims 1 to 6, wherein Component B-1 is represented by Formula (B-1-2) below,

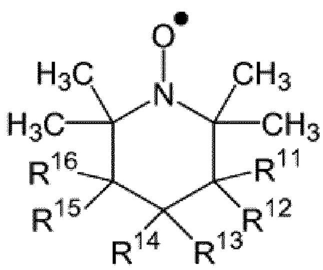

(B-1-2)

wherein in Formula (B-1-2), $R^{11}$ to $R^{16}$ independently denote a hydrogen atom, a halogen atom, or a monovalent organic group, or $R^{11}$ and $R^{12}$, $R^{13}$ and $R^{14}$, or $R^{15}$ and $R^{16}$ may form, together with the carbon to which they are bonded, one carbonyl group.

**8.** The ink composition for inkjet recording according to any one of Claims 1 to 7, wherein Component B-2 is represented by Formula (B-2-1) below,

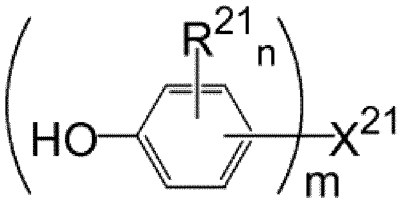

( B-2-1 )

wherein in Formula (B-2-1), m denotes an integer of 1 to 5, n denotes an integer of 1 to 4, the n $R^{21}$s independently denote a hydrogen atom, a halogen atom, a cyano group, a hydroxy group, an alkyl group having 1 to 20 carbons, a cycloalkyl group having 3 to 8 carbons, an aryl group having 6 to 12 carbons, an alkenyl group having 1 to 5 carbons, an alkynyl group having 1 to 5 carbons, an alkoxy group having 1 to 20 carbons, or an aryloxy group having 6 to 12 carbons, these groups may be bonded to a benzene ring represented by Formula (B-2-1) via a linking group, two or more groups denoted by $R^{21}$ may be bonded to each other to form a ring structure, and when m is two or greater $X^{21}$ denotes an m-valent linking group.

**9.** The ink composition for inkjet recording according to any one of Claims 1 to 8, wherein Component B-3 is represented by Formula (B-3-2),

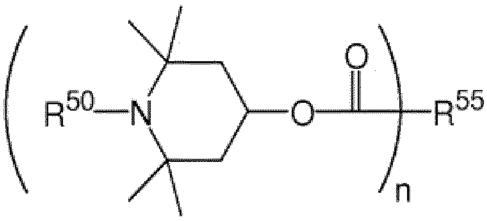

(B-3-2)

wherein in Formula (B-3-2) $R^{50}$ denotes a hydrogen atom, an alkyl group having 1 to 6 carbons, or a cycloalkyl group having 3 to 8 carbons, $R^{55}$ denotes a group formed by removing (n-1) hydrogen atoms from an alkyl group, wherein the total number of carbons of $R^{55}$ is 1 to 10, and n denotes an integer of 2 to 5.

**10.** The ink composition for inkjet recording according to any one of Claims 1 to 9, wherein the content of Component B-1 relative to the entire amount of the ink is no greater than 0.3 mass %.

**11.** The ink composition for inkjet recording according to any one of Claims 1 to 10, wherein the sum total of the contents of Component B-1, Component B-2, and Component B-3 is at least 1 mass % but no greater than 3 mass % relative to the entire amount of the ink.

**12.** Use of the ink composition for inkjet recording according to any one of Claims 1 to 11 for forming a clear layer that is applied to an upper layer of a colored image layer, and the colored image layer is a cured film of a colored ink composition comprising a monomer having a solubility parameter of at least 19 in an amount of at least 50 mass % of the entire composition, wherein the solubility parameter is a value expressed as the square root of the molecular aggregation energy and which is described in the Polymer Handbook, Second Edition, Chapter IV, Solubility Parameter Values, wherein the unit is $(MPa)^{1/2}$, representing the value at 25°C, and wherein when no data is given, a value calculated by the method described in R. F. Fedors, Polymer Engineering Science, 14, p 147 to 154, 1974, is used as the solubility parameter value.

**13.** An inkjet recording method comprising (a) a step of discharging the ink composition according to any one of Claims 1 to 11 above a recording medium and (b) a step of irradiating the discharged ink composition with actinic radiation to thus cure the ink composition.

**14.** A printed material that is recorded by the inkjet recording method according to Claim 13.

**Patentansprüche**

**1.** Tintenzusammensetzung für Tintenstrahlaufzeichnung umfassend

(Komponente A) eine polymerisierbare Verbindung,
(Komponente B-1) einen oxylfreien Radikal-basierten Polymerisationsinhibitor,
(Komponente B-2) einen Phenol-basierten Polymerisationsinhibitor und
(Komponente B-3) einen Amin-basierten Polymerisationsinhibitor,

wobei Komponente B-3 durch die nachstehende Formel (B-3-1) dargestellt ist,

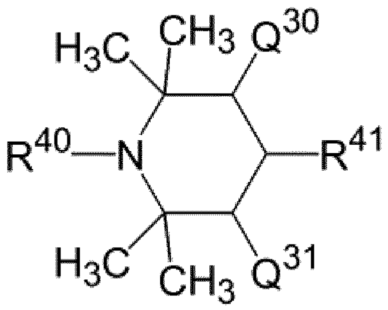

(B-3-1)

wobei in Formel (B-3-1), $R^{40}$ ein Wasserstoffatom, eine Alkylgruppe mit 1 bis 6 Kohlenstoffen oder eine Cycloalkylgruppe mit 3 bis 8 Kohlenstoffen bezeichnet, $R^{41}$ ein Wasserstoffatom, eine Alkylgruppe mit 1 bis 10 Kohlenstoffen, eine Cycloalkylgruppe mit 3 bis 8 Kohlenstoffen, eine Aralkylgruppe mit 7 bis 12 Kohlenstoffen, eine 3- bis 8-gliedrige heterocyclische Gruppe, eine Hydroxygruppe, eine -O-CO-$R^{42}$ Gruppe, eine -N($R^{43}$)($R^{44}$) Gruppe, oder =N($R^{43}$) bezeichnet, wobei $R^{42}$ eine Alkylgruppe mit 1 bis 10 Kohlenstoffen, eine Cycloalkylgruppe mit 3 bis 8 Kohlenstoffen, eine Aralkylgruppe mit 6 bis 18 Kohlenstoffen, oder eine Aryl Gruppe mit 6 bis 12 Kohlenstoffen bezeichnet, $R^{43}$ und $R^{44}$ unabhängig ein Wasserstoffatom, eine Alkylgruppe mit 1 bis 10 Kohlenstoffen, eine Cycloalkylgruppe mit 3 bis 8 Kohlenstoffen, eine 3- bis 8-gliedrige heterocyclische Gruppe, eine Acylgruppe mit 2 bis 8 Kohlenstoffen, eine Acyloxygruppe, oder eine Amidgruppe bezeichnen, $Q^{30}$ und $Q^{31}$ unabhängig ein Wasserstoffatom oder eine Oxogruppe bezeichnen, oder wobei über $R^{41}$ zu mindesten einer weiteren durch Formel (B-3-1) dargestellten Verbindung eine direkte oder über eine Verbindungsgruppe bestehende Bindung besteht.

**2.** Tintenzusammensetzung für Tintenstrahlaufzeichnung nach Anspruch 1, wobei die polymerisierbare Verbindung (Komponente A) (Komponente A-1) eine Divinyletherverbindung umfasst.

**3.** Tintenzusammensetzung für Tintenstrahlaufzeichnung nach Anspruch 1 oder 2, wobei sie ferner (Komponente C) einen Polymerisationsinhibitor umfasst, wobei der Polymerisationsinhibitor (Komponente C) (Komponente C-1) einen Acylphosphin-basierten Polymerisationsinhibitor umfasst.

**4.** Tintenzusammensetzung für Tintenstrahlaufzeichnung nach einem der Ansprüche 1 bis 3, wobei wenn die Gesamtmenge an in der Tintenzusammensetzung für Tintenstrahlaufzeichnung enthaltenem Polymerisationsinhibitor als 100 Masse% definiert ist, die Mengen (Masse%) (B1), (B2), und (B3) der Komponente B-1, Komponente B-2 und Komponente B-3 bezogen auf die Gesamtmenge an Polymerisationsinhibitor den nachstehenden Ausdruck (1) bis Ausdruck (3) erfüllen.

$$2 \leq (B1) \leq 95 \qquad \text{Ausdruck (1)}$$

$$3 \leq (B2) \leq 97 \qquad \text{Ausdruck (2)}$$

$$0.1 \leq (B3) \leq 75 \qquad \text{Ausdruck (3)}$$

5. Tintenzusammensetzung für Tintenstrahlaufzeichnung nach einem der Ansprüche 1 bis 4, wobei wenn die Gesamtmenge an in der Tintenzusammensetzung für Tintenstrahlaufzeichnung enthaltenem Polymerisationsinhibitor als 100 Masse% definiert ist, die Mengen (Masse%) (B1), (B2), und (B3) der Komponente B-1, Komponente B-2 und Komponente B-3 bezogen auf die Gesamtmenge an Polymerisationsinhibitor den nachstehenden Ausdruck (1') bis Ausdruck (3') erfüllen.

$$4 \leq (B1) \leq 90 \qquad \text{Ausdruck (1')}$$

$$7 \leq (B2) \leq 93 \qquad \text{Ausdruck (2')}$$

$$0.4 \leq (B3) \leq 60 \qquad \text{Ausdruck (3')}$$

6. Tintenzusammensetzung für Tintenstrahlaufzeichnung nach einem der Ansprüche 1 bis 5, wobei sie eine Oberflächenspannung von nicht mehr als 30 mN/m hat.

7. Tintenzusammensetzung für Tintenstrahlaufzeichnung nach einem der Ansprüche 1 bis 6, wobei die Komponente B-1 durch nachstehende Formel (B-1-2) dargestellt ist,

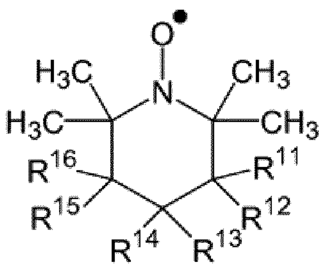

(B-1-2)

wobei in Formel (B-1-2), $R^{11}$ bis $R^{16}$ unabhängig ein Wasserstoffatom, ein Halogenatom oder eine monovalente organische Gruppe darstellen oder $R^{11}$ und $R^{12}$, $R^{13}$ und $R^{14}$ oder $R^{15}$ und $R^{16}$ zusammen mit dem Kohlenstoff, an den sie gebunden sind, eine Carbonylgruppe bilden.

8. Tintenzusammensetzung für Tintenstrahlaufzeichnung nach einem der Ansprüche 1 bis 7, wobei Komponente B-2 durch die nachstehende Formel (B-2-1) dargestellt ist,

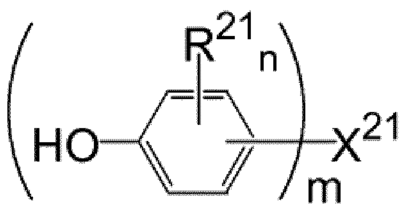

( B-2-1 )

wobei in Formel (B-2-1), m eine ganze Zahl von 1 bis 5 bezeichnet, n eine ganze Zahl von 1 bis 4 bezeichnet, die n $R^{21}$ unabhängig ein Wasserstoffatom, ein Halogenatom, eine Cyanogruppe, eine Hydroxygruppe, eine Alkylgruppe mit 1 bis 20 Kohlenstoffen, eine Cycloalkylgruppe mit 3 bis 8 Kohlenstoffen, eine Arylgruppe mit 6 bis 12 Kohlenstoffen, eine Alkenylgruppe mit 1 bis 5 Kohlenstoffen, eine Alkinylgruppe mit 1 bis 5 Kohlenstoffen, eine Alkoxygruppe mit 1 bis 20 Kohlenstoffen oder eine Aryloxygruppe mit 6 bis 12 Kohlenstoffen bezeichnen, wobei diese Gruppen über eine Verbindungsgruppe an einen durch die Formel (B-2-1) dargestellten Benzolring gebunden sein kann, zwei oder mehr durch $R^{21}$ bezeichnete Gruppen aneinander gebunden sein können, um eine Ringstruktur zu bilden, und wenn m zwei oder größer ist, $X^{21}$ eine m-valente Verbindungsgruppe bezeichnet.

9. Tintenzusammensetzung für Tintenstrahlaufzeichnung nach einem der Ansprüche 1 bis 8, wobei Komponente B-3 durch Formel (B-3-2) dargestellt ist,

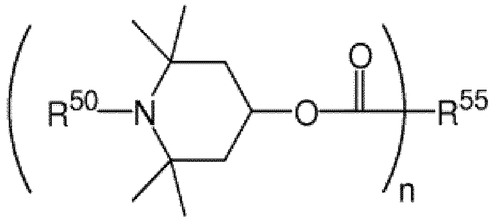

(B-3-2)

wobei in Formel (B-3-2) $R^{50}$ ein Wasserstoffatom, eine Alkylgruppe mit 1 bis 6 Kohlenstoffen oder eine Cycloalkylgruppe mit 3 bis 8 Kohlenstoffen bezeichnet, $R^{55}$ eine Gruppe bezeichnet, die durch Entfernen von (n-1) Wasserstoffatomen aus einer Alkylgruppe gebildet ist, wobei die Gesamtanzahl an Kohlenstoffen von $R^{55}$ 1 bis 10 ist und n eine ganze Zahl von 2 bis 5 bezeichnet.

**10.** Tintenzusammensetzung für Tintenstrahlaufzeichnung nach einem der Ansprüche 1 bis 9, wobei der Gehalt an Komponente B-1 bezogen auf die Gesamtmenge der Tinte nicht größer als 0,3 Masse% ist.

**11.** Tintenzusammensetzung für Tintenstrahlaufzeichnung nach einem der Ansprüche 1 bis 10, wobei die Gesamtsumme der Gehalte an Komponente B-1, Komponente B-2 und Komponente B-3 mindestens 1 Masse% beträgt aber nicht größer als 3 Masse% bezogen auf die Gesamtmenge an der Tinte beträgt.

**12.** Verwendung der Tintenzusammensetzung für Tintenstrahlaufzeichnung nach einem der Ansprüche 1 bis 11 zum Bilden einer klaren Schicht, die auf eine obere Schicht einer farbige Bildschicht aufgebracht wird, und die farbige Bildschicht ein gehärteter Film einer farbigen Tintenzusammensetzung ist, die ein Monomer mit einem Löslichkeitsparameter von mindestens 19 in einer Menge von 50 Masse% der gesamten Zusammensetzung umfasst, wobei der Löslichkeitsparameter ein Wert ist, der durch die Quadratwurzel der molekularen Aggregationsenergie ausgedrückt ist, und der im Polymer Handbook, zweite Auflage, Kapitel IV, Solubility Parameter Values, beschrieben ist, wobei die Einheit $(MPa)^{1/2}$ ist, die den Wert bei 25°C darstellen, und wobei wenn keine Daten angegeben sind, ein Wert, kalkuliert durch das in R. F. Fedors, Polymer Engineering Science, 14, Seiten 147 bis 154, 1974 angegebene Verfahren, als Löslichkeitsparameterwert verwendet wird.

**13.** Tintenstrahlaufzeichnungsverfahren umfassend (a) einen Schritt des Ausstoßens der Tintenzusammensetzung nach einem der Ansprüche 1 bis 11 über einem Aufzeichnungsmedium und (b) einen Schritt des Belichtens der ausgestoßenen Tintenzusammensetzung mit aktinischer Strahlung um so die Tintenzusammensetzung zu härten.

**14.** Gedrucktes Material, das durch das Tintenstrahlaufzeichnungsverfahren nach Anspruch 13 aufgezeichnet ist.

**Revendications**

**1.** Composition d'encre pour un enregistrement par jet d'encre, comprenant :

(composant A) un composé polymérisable ;
(composant B-1) un inhibiteur de polymérisation à base de radicaux libres oxyle ;
(composant B-2) un inhibiteur de polymérisation à base de phénol, et
(composant B-3) un inhibiteur de polymérisation à base d'amine,

dans laquelle le composant B-3 est représenté par la formule (B-3-1) ci-dessous :

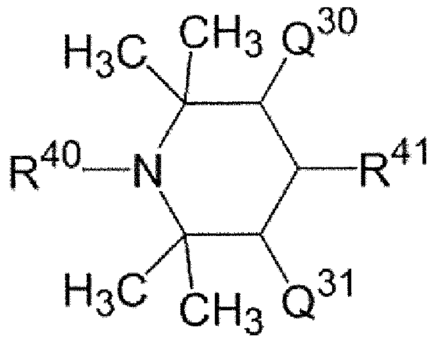

(B-3-1)

où dans la formule (B-3-1), $R^{40}$ indique un atome d'hydrogène, un groupe alkyle présentant de 1 à 6 atomes de carbone, ou un groupe cycloalkyle présentant de 3 à 8 atomes de carbone ; $R^{41}$ indique un atome d'hydrogène, un groupe alkyle présentant de 1 à 10 atomes de carbone, un groupe cycloalkyle présentant de 3 à 8 atomes de carbone, un groupe aralkyle présentant de 7 à 12 atomes de carbone, un groupe hétérocylique de 3 à 8 chaînons, un groupe hydroxy, un groupe -O-CO-$R^{42}$, un groupe -N($R^{43}$)($R^{44}$), ou =N($R^{43}$) ; $R^{42}$ indique un groupe alkyle présentant de 1 à 10 atomes de carbone, un groupe cycloalkyle présentant de 3 à 8 atomes de carbone, un groupe aralkyle présentant de 6 à 18 atomes de carbone, ou un groupe aryle présentant de 6 à 12 atomes de carbone ; $R^{43}$ et $R^{44}$ indiquent indépendamment un atome d'hydrogène, un groupe alkyle présentant de 1 à 10 atomes de carbone, un groupe cycloalkyle présentant de 3 à 8 atomes de carbone, un groupe hétérocylique de 3 à 8 chaînons, un groupe acyle présentant de 2 à 8 atomes de carbone, un groupe acyloxy, ou un groupe amide ; $Q^{30}$ et $Q^{31}$ indiquent indépendamment un atome d'hydrogène ou un groupe oxo, ou il peut y avoir liaison, par $R^{41}$, avec au moins un autre composé représenté par la formule (B-3-1) directement ou via un groupe de liaison.

2. Composition d'encre pour un enregistrement par jet d'encre selon la revendication 1, dans laquelle le composé polymérisable (composant A) comprend (composant A-1) un composé d'éther divinylique.

3. Composition d'encre pour un enregistrement par jet d'encre selon la revendication 1 ou 2, dans laquelle celle-ci comprend en outre (composant C) un initiateur de polymérisation, l'initiateur de polymérisation (composant C) comprenant (composant C-1) un initiateur de polymérisation à base d'acylphosphine.

4. Composition d'encre pour un enregistrement par jet d'encre selon l'une quelconque des revendications 1 à 3, dans laquelle la quantité totale d'inhibiteur de polymérisation contenu dans la composition d'encre pour un enregistrement par jet d'encre est définie comme 100 % en masse, et les teneurs (% en masse) (B1), (B2) et (B3) des composant B-1, composant B-2, et composant B-3 par rapport à la quantité totale d'inhibiteur de polymérisation satisfont l'expression (1) à l'expression (3) ci-dessous :

$$2 \leq (B1) \leq 95 \qquad \text{Expression (1)}$$

$$3 \leq (B2) \leq 97 \qquad \text{Expression (2)}$$

$$0,1 \leq (B3) \leq 75 \qquad \text{Expression (3)}$$

5. Composition d'encre pour un enregistrement par jet d'encre selon l'une quelconque des revendications 1 à 4, dans laquelle la quantité totale d'inhibiteur de polymérisation contenu dans la composition d'encre pour un enregistrement par jet d'encre est définie comme 100 % en masse, et les teneurs (% en masse) (B1), (B2) et (B3) des composant B-1, composant B-2, et composant B-3 par rapport à la quantité totale d'inhibiteur de polymérisation satisfont l'expression (1') à l'expression (3') ci-dessous :

$$4 \leq (B1) \leq 90 \qquad \text{Expression (1')}$$

$$7 \leq (B2) \leq 93 \qquad \text{Expression (2')}$$

$$0,4 \leq (B3) \leq 60 \qquad \text{Expression (3')}.$$

6. Composition d'encre pour un enregistrement par jet d'encre selon l'une quelconque des revendications 1 à 5, dans laquelle celle-ci présente une tension superficielle non supérieure à 30 mN/m.

7. Composition d'encre pour un enregistrement par jet d'encre selon l'une quelconque des revendications 1 à 6, dans laquelle le composant B-1 est représenté par la formule (B-1-2) ci-dessous :

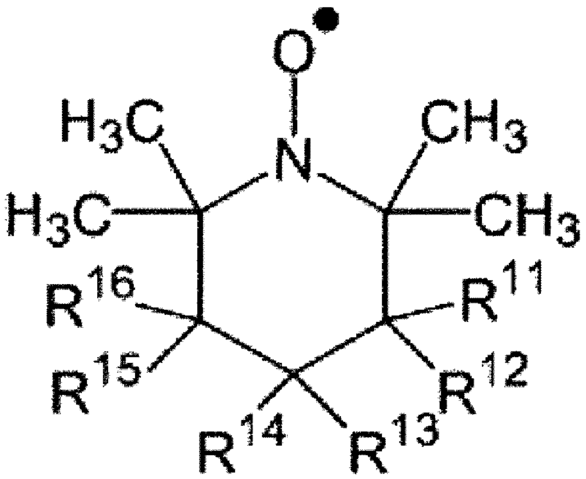

(B-1-2)

où dans la formule (B-1-2), R1$^{11}$ à $R^{16}$ indiquent indépendamment un atome d'hydrogène, un atome d'halogène, ou un groupe organique monovalent, ou $R^{11}$ et $R^{12}$, $R^{13}$ et $R^{14}$, ou $R^{15}$ et $R^{16}$ peuvent former ensemble, avec le carbone sur lequel ils sont liés, un groupe carbonyle.

8. Composition d'encre pour un enregistrement par jet d'encre selon l'une quelconque des revendications 1 à 7, dans laquelle le composant B-2 est représenté par la formule (B-2-1) ci-dessous :

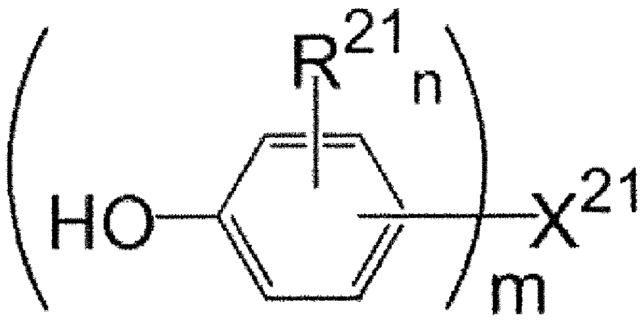

( B-2-1 )

où dans la formule (B-2-1), m indique un entier de 1 à 5 ; n indique un entier de 1 à 4 ; les n $R^{21}$ indiquent indépendamment un atome d'hydrogène, un atome d'halogène, un groupe cyano, un groupe hydroxy, un groupe alkyle présentant de 1 à 20 atomes de carbone, un groupe cycloalkyle présentant de 3 à 8 atomes de carbone, un groupe aryle présentant de 6 à 12 atomes de carbone, un groupe alcényle présentant de 1 à 5 atomes de carbone, un groupe alcynyle présentant de 1 à 5 atomes de carbone ; un groupe alkoxy présentant de 1 à 20 atomes de carbone, ou un groupe aryloxy présentant de 6 à 12 atomes de carbone ; ces groupes peuvent être liés à un cycle de benzène représenté par la formule (B-2-1) via un groupe de liaison ; deux groupes ou plus indiqués par $R^{21}$ peuvent être liés l'un à l'autre afin de former une structure cyclique, et lorsque m est supérieur ou égal à 2, $X^{21}$ indique un groupe de liaison de valence m.

9. Composition d'encre pour un enregistrement par jet d'encre selon l'une quelconque des revendications 1 à 8, dans laquelle le composant B-3 est représenté par la formule (B-3-2) ci-dessous :

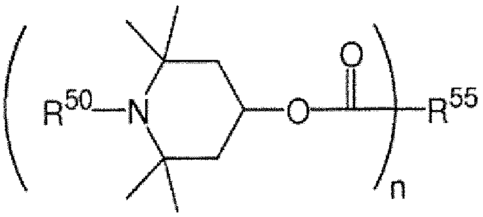

(B-3-2)

où dans la formule (B-3-2), $R^{50}$ indique un atome d'hydrogène, un groupe alkyle présentant de 1 à 6 atomes de carbone, ou un groupe cycloalkyle présentant de 3 à 8 atomes de carbone ; $R^{55}$ indique un groupe formé en éliminant (n-1) atomes d'hydrogène du groupe alkyle, dans laquelle le nombre total d'atomes de carbone de $R^{55}$ s'étend de 1 à 10, et n indique un entier de 2 à 5.

**10.** Composition d'encre pour un enregistrement par jet d'encre selon l'une quelconque des revendications 1 à 9, dans laquelle la teneur du composant B-1 par rapport à la quantité entière de l'encre est non supérieure à 0,3 % en masse.

**11.** Composition d'encre pour un enregistrement par jet d'encre selon l'une quelconque des revendications 1 à 10, dans laquelle la somme totale des teneurs des composant B-1, composant B-2, et composant B-3 est au moins égale à 1 % en masse, mais non supérieure à 3 % en masse par rapport à la quantité totale de l'encre.

**12.** Utilisation de la composition d'encre pour un enregistrement par jet d'encre selon l'une quelconque des revendications 1 à 11, pour former une couche transparente, laquelle est appliquée à une couche supérieure d'une couche d'image colorée, et la couche d'image colorée est un film durci d'une composition d'encre colorée comprenant un monomère présentant un paramètre de solubilité d'au moins 19 en une quantité d'au moins 50 % en masse de la composition entière ; dans laquelle le paramètre de solubilité est une valeur exprimée comme la racine carré de l'énergie d'agrégation moléculaire, et lequel est décrit dans le Polymer handbook, 2ème édition, chapitre IV, valeurs de paramètre de solubilité (Solubility Parameter Values), dans laquelle l'unité est $(MPa)^{1/2}$, représentant la valeur à 25 °C, et dans laquelle lorsqu'aucune donnée n'est spécifiée, une valeur calculée par le procédé décrit dans R.F. Fedors, Polymer Engineering Science, 14, p 147 à 154, 1974, est utilisée comme valeur de paramètre de solubilité.

**13.** Procédé d'enregistrement par jet d'encre comprenant (a) une étape pour libérer la composition d'encre selon l'une quelconque des revendications 1 à 11 au-dessus d'un support d'enregistrement, et (b) une étape pour irradier la composition d'encre libérée avec un rayonnement actinique, afin ainsi de faire durcir la composition d'encre.

**14.** Matériau imprimé, lequel est enregistré par le procédé par jet d'encre selon la revendication 13.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2011126932 A
- JP 2011057744 A
- JP 7159983 A
- JP 7031399 B
- JP 8224982 A
- JP 10000863 A
- JP 9080675 A
- JP 2009221414 A
- JP 2009209289 A
- JP 2009191183 A
- JP 2009096985 A
- JP 2009185186 A
- JP 2010126644 A
- JP 62173463 A
- JP 62183457 A
- JP 2009221416 A
- JP 60132767 A
- WO 9954415 A


### Non-patent literature cited in the description


- **R. F. FEDORS.** *Polymer Engineering Science,* 1974, vol. 14, 147-154
- the Polymer Handbook